# EUROPEAN PATENT APPLICATION

(11) **EP 1 589 060 A1**
(43) Date of publication of application: **26.10.2005**
(21) Application number: 03777302.5
(22) Date of filing: 05.12.2003
(51) Int. Cl.: C08J 5/18, G11B 7/24, B32B 27/30

(54) **FILM FOR OPTICAL COMPONENT, WINDING LAMINATE OF FILM, OPTICAL COMPONENT, AND OPTICAL DISC**

(30) Priority: 05.12.2002 JP 2002353919; 05.12.2002 JP 2002353928; 05.12.2002 JP 2002353938; 26.12.2002 JP 2002376721; 26.12.2002 JP 2002376750; 06.01.2003 JP 2003000472; 06.03.2003 JP 2003059388
(71) Applicant: Hitachi Chemical Co., Ltd., Shinjuku-ku, Tokyo 163-0449 (JP)
(72) Inventor: YAMASHITA, Yukihiko, c/o HITACHI CHEMICAL CO., LTD, Ichihara-shi, Chiba 290-0045 (JP); YAMANAKA, Tetsuo, c/o HITACHI CHEMICAL CO., LTD., Ichihara-shi, Chiba 290-0045 (JP); KANEMARU, Kenji, c/o HITACHI CHEMICAL CO., LTD., Ichihara-shi, Chiba 290-0045 (JP); SAITO, Koichi, c/o HITACHI CHEMICAL CO., LTD., Ichihara-shi, Chiba 290-0045 (JP)
(74) Representative: HOFFMANN EITLE
(86) International application number: PCT/JP2003/015613
(87) International publication number: WO 2004/050749

(57) **Abstract**

A film for optical parts exhibiting high transmittance of short-wavelength light on the order of 400 nm, low birefringence, and excellent flexibility in which warping can be prevented after use for a long term, and a coiled film laminate using the film for optical parts, and an optical parts and an optical discs. The film for optical parts is **characterized by** comprising a light transmitting layer principally comprising thermosetting resin where an integrated value of the ratio of loss modulus to storage modulus in a temperature range of 30°C to 80°C as determined by a dynamic viscoelasticity measurement under a tensile stress mode at a frequency of 10 Hz with a heating rate of 3°C/min is 2 or more.

## Description

### Technical Field

The invention relates to a film for optical parts applied for a light transmission layer of an optical disc such as a high density DVD having a large capacity and a coiled film laminate using the film for optical parts, and optical parts and optical discs.

### Background Art

An optical disc comprises a recording layer formed on one side of a supporting base plate made of a transparent plastic film, and a line of signal information comprising a finely roughened array of bits and grooves is recorded on the recording layer. A light such as a laser light is irradiated from a side opposed to the recording layer, and a line of information is recorded and reproduced by taking advantage of changes of reflected amount of the light depending on signal information on the supporting base plate.

Optical disks include compact discs (CD), digital versatile disks (DVD) and magnet-optical recording disks.

In a representative optical disk such as CD, a transparent light transmission layer for reading information is formed on the supporting base plate with a thickness of 0.6 mm, and the light transmission layer also serves as a supporting base plate having a recording layer. A laser light with a wavelength of 780 nm is used in the CD. The recording and reproducing laser light is irradiated from the light transmission layer side, and information recorded on the recording layer is reproduced based on the reflected amount of the light that changes depending on signal information comprising the array of bits and grooves imprinted on the recording layer on the supporting base plate.

While a laser light with a wavelength of 635 nm is used for recording and reproducing in DVD having a larger recording capacity than CD, the basic principle of the DVD is the same as that of the CD in that signal information is recorded and reproduced by irradiating the laser light on the recording layer.

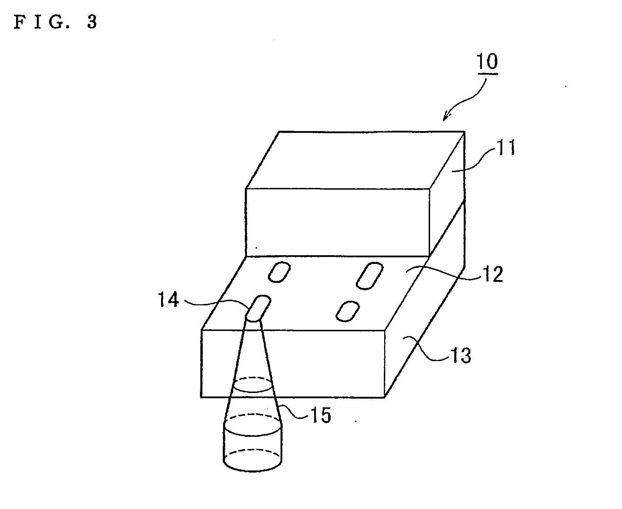

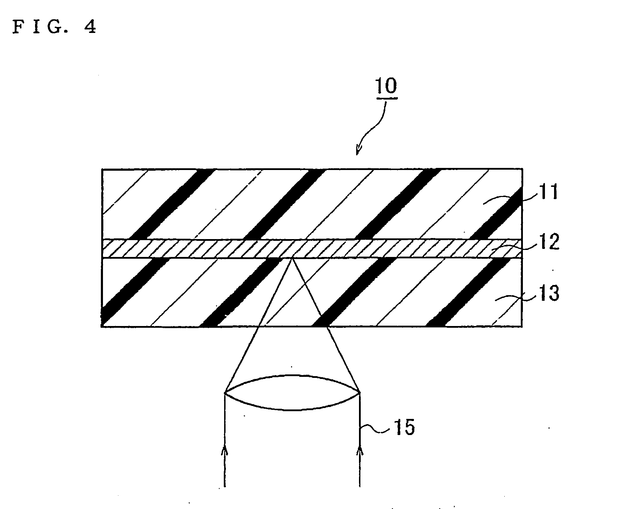

Fig. 3 is a partially magnified perspective view of DVD for schematically illustrating the structure of DVD, and Fig. 4 is a cross section of the DVD shown in Fig. 3. As shown in Figs. 3 and 4, a DVD 10 comprises a supporting base plate 11, a recording layer 12 formed on the supporting base plate 11, and a light transmission layer 13 formed on the recording layer 12. In more detail, the thickness of the transparent supporting base plate 11 for reading information is 0.6 mm when the supporting base plate comprises a single plate, the recording layer 12 on which a line of information such as bits 14 and recording grooves is recorded is formed on the supporting base plate 11, and the light transmission layer 13 is formed by bonding a transparent supporting base plate having the same thickness (0.6 mm) as the supporting base plate 11 on the recording layer 12. The light transmission layer 13 formed by bonding on the recording layer 12 is usually referred to as a "dummy" layer, which serves for improving the optical disk's own strength. As shown in Figs. 3 and 4 above, information on the recording layer is recorded and reproduced by irradiating a laser light 15 from the light transmission layer 13 side.

In accordance with recent development of static image information and dynamic image information, the DVD having a large recording capacity has been required and high density DVDs having a capacity as large as exceeding 20 GB have been developed. The high density DVD has the same size of 12 cm in diameter as the size of conventional ones. Since the DVD has the same size, it is required to have a high recording density by narrowing minute track pitches and shortening bit length.

Specifically, the recording layer on which signal information is recorded by an array of bits and grooves is formed on the supporting base plate with a thickness of about 1.1 mm, and a light transmission layer is formed by bonding a film with a thickness of about 0.1 mm on the surface of the recording layer. Signal information is recorded and reproduced by irradiating a blue laser with a shorter wavelength of about 400 nm from side of the light transmission layer.

For example, polycarbonate excellent in strength and optical characteristics has been reported to be used for the material of the supporting base plate and light transmission layer (dummy layer) of the CD and DVD and disks of next generation (Japanese Patent Application Laid-Open Nos. 2000-67468 and 2001-243659), and polycarbonate is also used for the recording layer of DVDs of next generation. In addition, using various materials other than polycarbonate is being contemplated as the light transmission layer of the DVD of next generation.

Examples of materials other than polycarbonate include acrylic resins, styrene resins, aromatic polyamide resins, liquid crystalline polymers, polyimide resins, polymer alloys and heat curable resins.

The acrylic resin and styrene resin are highly transparent, polymers having various characteristics from rubber-like to vitreous polymers can be relatively easily produced, and the resins are ready for modification in addition to their relatively low production cost. However, the resins yet involve large challenge of simaltaneously improving strength, heat resistance and toughness. Insufficient toughness is a common problem among the acrylic resins. Several means for solving the problem of insufficient toughness have been reported including, for example, adding rubber particles in the resin (see Japanese Patent Application Publication No. 58-167605 and Japanese Patent Application Laid-Open No. 3-52910). However, in case a thin film is formed from the resin by this means, good bend processability of the thin film cannot be obtained since bleaching arises when the film is bent. Since no acrylic resins having a glass transition temperature above the room temperature and being excellent in toughness and bend processability have been found yet, it is difficult to form thin film of acrylic resin.

The most representative examples of the aromatic polyamide resin include polyparaphenylene terephthalamide. Polyparaphenylene terephthalamide has a particularly high melting point and crystallinity and is flame resistant with a rigid molecular structure, so as to have an excellent mechanical strength with a low linear coefficient of expansion. However, since aromatic polyamide resin such as polyparaphenylene terephthalamide is hardly soluble in organic solvents, inorganic strong acids such as conc. sulfuric acid should be used as a solvent. While fibers spun from concentrated solution such as conc. sulfuric acid has been known to have high strength and elastic modulus that enable the fiber to be industrially applied, the method has been seldom applied for forming a film. Although an art for forming a film by stretching in a swollen state (see Japanese Patent Application Laid-Open No. 4-6738), this art has some problems that the productivity is so low since the manufacturing process is very complicated, consequently the price of the product becomes high. As the method of raising the solubility to the organic solvent of aromatic polyamide resin, units in which halogen groups are introduced in aromatic groups or units with highly flexible are copolymerized in the aromatic polyamide resin (see Japanese Patent Application Publication No. 56-45421). However, the price of the product becomes high due to the high cost of the monomer, in addition to the problems of impairing heat resistant and fire resistant properties while halogen atoms may corrode metals.

The polyimide resin is quite useful in industries, since it has quite high heat resistance and toughness with an excellent film performance. Usually, imide rings are formed by heating at a high temperature after coating a polyimide solution in order to form polyimide resin into a film. While excellent heat resistance and toughness may be obtained by forming imide rings, solubility in the solvent remarkably decreases once the imide ring has been formed to render the polyimide resin to have serious drawbacks for recycling the resin. Accordingly, it is required to develop a material in which characteristics such as solubility in the solvent and heat resistance are simultaneously achieved. For example, an improvement of solubility in the organic solvent has been attempted by copolymerizing aromatic units in which substituents such as alkyl groups are introduced into the aromatic group. However, a material having a glass transition temperature of 320°C or more could not be obtained by this method, with an additional problem of a quite high product cost due to a high cost of the monomer.

While polymer alloy materials have been developed for exhibiting novel properties by mixing different kinds of polymer materials, polymers having different affinities were attempted to mix with each other by using a compatibilizer. While dispersion state for forming an islet structure can be controlled by this method since the object of the method is to reduce a surface energy by adding the compatibilizer, it is impossible to permit the polymers to be perfectly compatible. No reports for permitting different kinds of polymers to be compatible have been found yet. It has been problems that the product cost becomes high because the compatibilizer is relatively expensive; the compatibilizer causes contamination due to bleeding out of the surface when polymer alloy materials are used for a long term; and the dispersion state of the polymer alloy materials may be changed.

The heat curable resin has quite excellent characteristics in solvent resistance and durability such as a strength-retaining ratio at a high temperature, since the resin forms an insoluble and non-meltable cured product. However, it is a drawback that reprocessing is impossible since a cross-linking reaction occurs by forming covalent bonds. This drawback is fatal in view of recyclability required in recent years. An example that is considered to be most recyclable heat curable resin is an ionomer resin. The ionomer resin is prepared by adding metal oxides or metal hydroxides such as magnesium oxide and calcium hydroxide to a polymer having carboxyl groups in the side chain, and pseudo cross-links are formed by forming ionic bonds between the metal and carboxyl group. Although heat resistance and toughness are improved to some extent according to this method, a large improvement of characteristics cannot be expected since the bonding force between the metal compound and carboxyl group is weak, and only a small amount of the metal can be added due to low solubility of the metal compound in the resin.

A resin composition having novel characteristics that could not be realized by using conventional materials was developed by forming a pseudo cross-linked structure by forming intermolecular hydrogen bonds in a mixture of at least two kinds of synthetic polymers (see Japanese Patent Application Laid-Open No. 2000-273319). Furthermore, it has been reported that a film having novel characteristics in which contradictory characteristics of heat resistance and toughness are compatible with each other could be obtained by blending an acrylic polymer as a polymer having a low glass transition temperature, which contains hydroxyl groups as proton donating atomic groups, and an acrylic polymer as a polymer having a high glass transition temperature, which contains amine groups as proton accepting atomic groups (see Japanese Patent Application Laid-Open No. 2002-38036), and forming the film from a pseudo cross-linked type resin composition having a pseudo cross-linked structure by the intermolecular hydrogen bonds of these acrylic polymer.

### Disclosure of Invention

While signal information imprinted on the recording layer is recorded and reproduced by allowing a laser light having a short wavelength of about 400 nm to permeate through a light transmission layer of the optical disk of next generation as described above, the reflection light from the recording layer is absorbed when allowing it to pass through the light transmission layer if transmittance of the light transmission layer is low to attenuate the signal intensity. Consequently, a material for a light transmission layer having high transmittance is desirable for obtaining a high signal accuracy.

For example, variously attempts have been made to apply the acrylic resin having high transparency to an optical disk using short wavelength laser light having a wavelength of about 400 nm. However, when the optical disk is formed by bonding the acrylic resin as the light transmission layer, although high transparency is obtained the disk itself warp during use. Consequently, the direction of the reflection light is deviated to make it difficult to accurately read signal information on the recording layer.

Although the warp of the disk is, for example, improved by increasing the storage modulus of the acrylic resin, it causes another problem that the surface of the optical disk is readily damaged during practical uses since the rigidity of the surface of the acrylic resin reduces by increasing the storage modulus. The signal can be hardly read and the recording capacity decreases since transmittance is remarkably reduced at damaged portions.

The cause of warp is the different materials used for the supporting base plate and light transmission layer that differs volume variation of each layer due to the difference of water-absorbing property and thermal expansion coefficient in an environment of use. While the problem arising by using different materials is ascribed to intrinsic characteristics of the material, no light transmission layer has been developed yet which is able to solve the problem and satisfies various characteristics required for the disk of next generation such as low birefringence, high transmittance, a decreased amount of warp and scratch resistance of the surface.

A film for light transmission layer having good smoothness of the surface is also required with high density of the optical disk, because it is difficult to accurately read recorded information due to reading errors when the surface of the light transmission layer is roughened with a surface roughness of several micrometers. On the contrary, the film having good surface smoothness tends to be tightly adhered on the base film to impair peeling characteristic. As a result, it was a problem that work efficiency becomes poor and yields of the disk decreases. However, surface smoothness of the film becomes poor if an peeling treatment is applied on the base film in order to make it easy to peel the film from the base film.

For example, while a coiled laminate of the film, which is formed by winding the film and the base film(the base layer) together without peeling the film from the base film, is able to be wound by maintaining its surface smoothness, it is difficult to peel the film from the base film.

In order to solve the above-described problems, the present invention provides a film for optical parts mainly applied as its light transmitting layer for characteristics required with the recent high capacity and high quality optical parts for optical disk and the like.

In other words, the object of the invention is to obtain a film for optical parts having high transmittance at a wavelength of about 400 nm and low birefringence, being excellent in flexibility, and being able to prevent warp from occurring during long term uses; a coiled film laminate using the optical film; an optical parts using the optical film; and optical disk.

Another object of the invention is, in addition to the object above, to obtain a film for optical parts having excellent scratch resistance of the surface during practical uses, a coiled film laminate using the optical film, and an optical parts using the optical film and an optical disk.

A further object of the invention, in case the above-mentioned film for optical parts is used as a coiled laminate, is to obtain a film for optical parts in which detachability between a base film and a light transmission layer and surface smoothness are compatible with each other, a coiled film laminate using the optical film, and an optical parts using the optical film and optical disk.

The inventors of the invention found that, through intensive studies for attaining the above-mentioned objects, a light transmission layer having low birefringence and high transmittance can be obtained while decreasing the appearance of warp caused by bonding the light transmission layer with other kinds of materials, by using a thermoplastic resin or a vinyl-base polymer as a principal component of the light transmittance layer, and by prescribing an integrated value of the ratio of loss modulus to storage modulus of the thermoplastic resin or vinyl-base polymer in a temperature range of 30°C to 80°C obtained by a dynamic viscoelasticity measurement. The invention was completed based on the study above.

It is possible to endow the resin having the characteristics as described above mainly comprises the vinyl-base polymer with a pseudo cross-linked structure in which intramolecular hydrogen bonds are formed by interaction between functional groups by introducing a combination of specified functional groups in the vinyl-base polymer. It was found that the film for optical parts is endowed with novel performance, particularly optical characteristics and bending processability, while warp of the optical disc is ameliorated by using the film for the light transmission layer, particularly for the light transmission layer of the high recording density DVD disk. The invention was also completed based on the study above.

While the vinyl-base polymer is usually a thermoplastic resin, the vinyl-base polymer was also referred as the thermoplastics resin because the vinyl-base polymer beside used in the invention is not always thermoplastic, and the term is intended to include those exhibiting a curable behavior.

The vinyl-base polymer is preferably a mixture of two kinds of vinyl-base polymers having different characteristics to one another, form a pseudo cross-linked structure between the vinyl-base polymers. This enables the vinyl-base polymer to be endowed with a plurality of characteristics that could not be obtained in one kind of the vinyl-base polymer alone while exhibiting contradictory characteristics together. For example, suppose that a vinyl-base polymer having good heat resistance and exhibiting positive birefringence and another vinyl-base polymer being flexible and exhibiting negative birefringence are mixed together. Then, pseudo cross-links are formed in the mixture so that characteristics such as heat resistance and flexibility of the vinyl-base polymer after mixing are improved while birefringence is quenched by offset of positive and negative birefringence. Accordingly, it is possible to make contradictory characteristics of the vinyl-base polymers to be compatible with each other, although such characteristics cannot be obtained by one kind of polymer alone.

The inventors of the invention also found that, through intensive studies of appearance of warp by variously changing the amount of thermal expansion of the light transmission layer and supporting base plate used for the optical disk, the incidence of warp of the optical disk may be reduced by prescribing the amount of thermal expansion of the supporting base plate and light transmission layer within a prescribed range. The invention was also completed by the study described above.

The susceptibility to scratching during practical uses can also be prevented by forming a hard coat layer on the light transmission layer.

It was also found that a light transmission layer being excellent in transparency and strength while having good detachability from the base film without impairing surface smoothness could be obtained by adding an optimum amount of a silicon resin that does not interfere with transparency as a peeling agent in the thermoplastic resin or vinyl-base polymer that forms the light transmission layer, and/or by reducing the proportion of low molecular weight polymers in the total amount of the thermoplastic resin or vinyl-base polymer that forms the light transmittance layer below certain amount. The invention was also completed based on the study above.

The invention is featured by the following items (1) to (43):
(1) A film for optical parts comprising a light transmission layer mainly composed of a thermoplastic resin, wherein an integrated value of the ratio of loss modulus to storage modulus in a temperature range of 30°C to 80°C as determined by a dynamic viscoelasticity measurement under a tensile stress mode at a frequency of 10 Hz with a heating rate of 3°C/min is 2 or more;
(2) A film for optical parts comprising a light transmission layer mainly composed of a vinyl-base polymer, wherein an integrated value of the ratio of loss modulus to storage modulus in a temperature range of 30°C to 80°C as determined by a dynamic viscoelasticity measurement under a tensile stress mode at a frequency of 10 Hz with a heating rate of 3°C/min is 2 or more;
(3) The film for optical parts as described above, wherein the vinyl-base polymer comprises vinyl-base polymer A containing at least one kind of proton donating atomic groups in the molecule and vinyl-base polymer B containing at least one kind of proton accepting atomic groups in the molecule, and wherein pseudo cross-links are formed between the proton donating atomic groups and proton accepting atomic groups by intermolecular hydrogen bonds;
(4) The film for optical parts as described above, wherein vinyl-base polymer A is a polymer obtained by polymerizing a mixture of monomers containing a vinyl monomer having at least one functional group selected from a carboxyl group, hydroxyl group and phenolic hydroxyl group in the molecule, and vinyl-base polymer B is a polymer obtained by polymerizing a mixture of monomers containing a vinyl monomer having nitrogen atoms in the molecule, and wherein either vinyl-base polymer A or vinyl-base polymer B has a glass transition temperature of 25°C or more, and the other has a glass transition temperature of less than 25°C;
(5) The film for optical parts as described above, wherein the thermoplastic resin or vinyl-base polymer is an acrylic resin;
(6) The film for optical parts as described above, wherein the thermoplastic resin or vinyl-base polymer contains at least one compound selected from phenolic antioxidants, phosphite antioxidants, thioether antioxidants and light stabilizers;
(7) The film for optical parts as described above, wherein a light transmittances at a wavelength of 405 nm is 87% or more;
(8) The film for optical parts as described above, wherein a thickness of the light transmission layer is in the range of 15 to 250 µm and an accuracy of the thickness is within ±2.0 µm:
(9) The film for optical parts as described above, wherein a birefringence of the light transmission layer is 20 nm or less;
(10) The film for optical parts as described above, wherein a hard coat layer with a pencil hardness of 3H or more is formed on the light transmission layer;
(11) The film for optical parts as described above, wherein the thickness of the hard coat layer is in the range of 0.5 to 8 µm and an accuracy of the thickness is within ±1.0 µm;
(12) The film for optical parts as described above, wherein the hard coat layer is a cross-linked structure;
(13) The film for optical parts as described above, wherein the cross-linked structure is a silicon-base cross-linked structure or an acrylic cross-linked structure;
(14) The film for optical parts as described above, wherein the hard coat layer contains 0.2 to 10.0% by weight of a silicone thermoplastic resin;
(15) The film for optical parts as described above, further comprising a base layer 1-aminated on the light transmission layer and removed by peeling at the time of use;
(16) The film for optical parts as described above, wherein a peeling processing is carried out on a surface of the base layer which contacts the light transmission layer, and smoothness of its surface is 20 nm or less;
(17) The film for optical parts as described above, wherein the light transmission layer contains the silicone resin;
(18) The film for optical parts as described above, wherein the thermoplastic resin or vinyl resin of the light transmission layer contains 10% by weight or less of low molecular weight polymers with a molecular weight of 10,000 or less as converted into the molecular weight of standard polystyrene measured by gel permeation chromatography relative to the total amount of the polymer;
(19) The optical film as described above, wherein the thermoplastic resin or vinyl resin of the light transmission layer is a vinyl-base polymer comprising at least a mixture of vinyl-base polymer A and vinyl-base polymer B having contradictory characteristics as well as different glass transition temperatures to one another, and wherein either vinyl-base polymer A or vinyl-base polymer B having a glass transition temperature of 25°C or more has an weight-average molecular weight of 70,000 or more as converted into the molecular weight of standard polyethylene;
(20) The film for optical parts as described above, wherein the base layer essentially consists of a polyester resin;
(21) The film for optical parts as described above, wherein the number of peeling residues after peeling the light transmission layer from the base layer under the conditions of a peeling speed of 100 mm/second at 25°C is 3 places or less per 1 m²;
(22) The film for optical parts as described above, wherein the static frictional coefficient of the light transmission layer against PET at 25°C is 0.42 or less;
(23) The film for optical parts as described above, wherein an adhesive layer is formed on the light transmission layer;
(24) The film for optical parts as described above, wherein a thickness of two layers of the light transmission layer and the adhesive layer is in the range of 30 to 300 µm and a accuracy of the thickness is within ±2.0 µm;
(25) The film for optical parts as described above, wherein the light transmission layer is used for the light transmission layer of an optical disk;
(26) A coiled film laminate, formed by winding the film for optical parts as described above into a roll shape;
(27) An optical part, prepared by applying the film for optical parts as described above as the light transmission layer;
(28) The optical part as described above, wherein the light transmission layer is bonded with interposition of the adhesive layer, and wherein the difference of refractive index between the light transmission layer and the adhesive layer is 0.1 or less;
(29) The optical part as described above, wherein the optical part is an optical disk;
(30) The optical part as described above, wherein the optical disk is a high density DVD and a recording capacity of the DVD is 20 GB or more;
(31) An optical disk formed by sequentially laminating a recording layer, an adhesive layer and a light transmission layer on at least one surface of a supporting base plate, wherein a thermal expansion ratio as a ratio of the amount of unidirectional thermal expansion of the supporting base plate at 30°C to 80°C to the amount of unidirectional thermal expansion of the light transmission layer at 30°C to 80°C is in the range of 0.75 to 1.25, and wherein the light transmission layer mainly comprises a thermoplastic resin.
(32) The optical disk as described above, wherein a birefringence of the light transmission layer is 20 nm or less and a thickness of the light transmission is in the range of 15 µm to 250 µm;
(33) The optical disk as described above, wherein a light transmittances of the light transmission layer at a wavelength of 405 nm is 87% or more;
(34) The optical disk as described above, wherein the thermoplastic resin is a vinyl-base polymer;
(35) The optical disk as described above, wherein the vinyl-base polymer comprises vinyl-base polymer A containing at least one kind of proton donating atomic groups in the molecule and vinyl-base polymer B containing at least one kind of proton accepting atomic groups in the molecule, and wherein pseudo cross-links are formed between the proton donating atomic groups and proton accepting atomic groups by intermolecular hydrogen bonds;
(36) The optical disk as described above, wherein vinyl-base polymer A is a polymer obtained by polymerization of a mixture of monomers containing a vinyl monomer having at least one functional group selected from carboxyl groups, hydroxyl groups and phenolic hydroxyl groups in the molecule, and vinyl-base polymer B is a polymer obtained by polymerization of a mixture of monomers containing a vinyl monomer having nitrogen atoms in the molecule, and wherein either vinyl-base polymer A or vinyl-base polymer B has a glass transition temperature of 25°C or more, and the other has a glass transition temperature of less than 25°C;
(37) The optical disk as described above, wherein the vinyl-base polymer is an acrylic resin;
(38) The optical disk as described above, wherein the thermoplastic resin contains at least one compound selected from phenolic antioxidants, phosphite antioxidants, thioether antioxidants and light stabilizers;
(39) The optical disk as described above, wherein the difference of refractive index between the light transmission layer and the adhesive layer is 0.1 or less;
(40) The optical disk as described above, wherein the supporting base plate mainly comprises polycarbonate;
(41) The optical disk as described above, wherein a thickness of the supporting base plate is in the range of 0.4 mm to 1.2 mm;
(42) The optical disk as described above, wherein a hard coat layer with a pencil hardness of 3H or more is further formed on the light transmission layer; and
(43) The optical disk as described above, wherein the optical disk is a high density DVD with a recording capacity of 20 GB or more.

The invention claims priority right of the Japanese Patent Applications filed in advance by the inventors of this application, namely Japanese Patent Application Nos. 2002-353919 (application date December 5, 2002), 2002-353928 (application date December 5, 2002), 2002-353938 (application date December 5, 2002), 2002-376721 (application date December 26, 2002), 2002-376750 (application date December 26, 2002), 2003-000472 (application date January 6, 2003) and 2003-059388 (application date March 6, 2003), specification thereof are incorporated herein for reference.

### Brief Description of the Drawings

Fig. 1 is a perspective view showing the structure of a high recording density DVD according to an embodiment of the invention.
Fig. 2 is a cross section showing the structure of the high recording density DVD shown in Fig. 1.
Fig. 3 is a partially magnified perspective view for schematically illustrating a structure of a DVD in a conventional example.
Fig. 4 is a cross section of the DVD shown in Fig. 3.

### Best Mode for Carrying Out the Invention

While the integrated value of the ratio of the loss modulus to the storage modulus of the light transmission layer of the film for optical parts according to the invention in the temperature range of 30°C to 80°C (referred to Σtan δ hereinafter) was defined to be 2 or more, Σtan δ is preferably 2.5 or more, more preferably 3 or more, more very preferably 4 or more and more most preferably 6 or more. When Σtan δ is less than 2, reliability of the optical disk decreases due to read errors caused by warp of the optical disk during long term uses of the optical disk using the film while warp is also increased under a severe accelerating test. Usually the thickness of the film subjected to the measurement of Σtan δ are 50 to 150 µm and the distance between chucks is preferably 5 to 15 mm, respectively. The value of Σtan δ may be adjusted mainly by selecting the kind of the thermoplastic resin or vinyl-base polymer.

Any thermoplastic resins or vinyl-base polymers may be used for the resin constituting the light transmission layer of the film for optical parts according to the invention, so long as the resin is able to be given characteristics that enable the integrated value of the ratio of the loss modulus to the storage modulus in the temperature range of 30°C to 80°C to be 2 or more in a dynamic viscoelasticity measurement under the condition above when the resin is processed into a film. The ratio may be usually adjusted by using the thermoplastic resin or vinyl-base polymer having intrinsic Σtan δ with a value as described above.

While the thermoplastic resin is not particularly restricted, the resin may be appropriately selected from vinyl-base polymers, polycarbonate resins, polyolefin resins and cellulose resins. The vinyl-base polymers are preferable from the view points of readily deformable property, transparency and birefringence among the exemplified resins, and (meth)acrylic polymers produced using esters of acrylic acid or methacrylic acid as major monomers are particularly preferable as the vinyl-base polymer considering the characteristics of the film such as transparency.

The acrylic resins are obtained by polymerization of monomers having reactive double bonds and not particularly restricted. Examples of the resin include acrylic acid esters such as methyl acrylate, ethyl acrylate, propyl acrylate, n-butyl acrylate, i-butyl acrylate, t-butyl acrylate, pentyl acrylate, n-hexyl acrylate, 2-ethylhexyl acrylate, n-octyl acrylate, dodecyl acrylate, octadecyl acrylate, butoxyethyl acrylate, phenyl acrylate, benzyl acrylate, naphthyl acrylate, glycidyl acrylate, 2-hydroxyethyl acrylate, cyclohexyl acrylate, methylcyclohexyl acrylate, trimethylcyclohexyl acrylate, norbornyl acrylate, norbornylmethyl acrylate, cyanonorbornyl acrylate, isonorbornyl acrylate, bornyl acrylate, menthyl acrylate, phenethyl acrylate, adamantyl acrylate, dimethyladamantyl acrylate, tricyclo[5.2.1.0^{2,6}]deca-8-yl acrylate, tricyclo[5.2.1.0^{2,6}]deca-4-methyl acrylate and cyclodecyl acrylate; methacrylic acid esters such as ethyl methacrylate, propyl methacrylate, n-butyl methacrylate, i-butyl methacrylate, t-butyl methacrylate, methacrylate, pentyl methacrylate, n-hexyl methacrylate, 2-ethylhexyl methacrylate, n-octyl methacrylate, dodecyl methacrylate, octadecyl methacrylate, butoxyethyl methacrylate, phenyl methacrylate, naphthyl methacrylate, glycidyl methacrylate, cyclopentyl methacrylate, cyclohexyl methacrylate, methylcyclohexyl methacrylate, trimethylcyclohexyl methacrylate, norbornyl methacrylate, norbornylmethyl methacrylate, cyanonorbornyl methacrylate, phenylnorbornyl methacrylate, isobornyl methacrylate, bornyl methacrylate, menthyl methacrylate, fenethyl methacrylate, adamantyl methacrylate, dimethyladamantyl methacrylate, tricyclo[5.2 .1.0²,⁶]deca-8-yl methacrylate, tricyclo[5.2.1.0^{2,6}]deca-4-methyl methacrylate and cyclodecyl methacrylate; aromatic vinyl compounds such as "-methylstyrene, "-ethylstyrene, "-fluorostyrene, "- chlorostyrene, "-bromostyrene, fluorostyrene, chlorostyrene, bromostyrene, methylstyrene and methoxystyrene; salts of (meth)acrylic acid such as calcium acrylate, barium acrylate, lead acrylate, tin acrylate, zinc acrylate calcium methacrylate, barium methacrylate, lead methacrylate, tin methacrylate and zinc methacrylate; unsaturated fatty acids such as acrylic acid and methacrylic acid; cyanated vinyl compounds such as acrylonitrile and methacrylonitrile; N-methylmaleimide, N-ethylmaleimide, N-propylmaleimide, N-isopropylmaleimide, N-butylmaleimide, N-i-butylmaleimide, N-t-butylmaleimide, N-laurylmaleimide, N-cyclohexylmaleimide, N-benzylmaleimide, N-phenylmaleimide, N-(2-chlorophenyl)maleimide, N-(4-chlorophenyl)maleimide, N-(4-bromophenyl)maleimide, N-(2-methylphenyl)maleimide, N-(2-ethylphenyl)maleimide, N-(2-methoxyphenyl)maleimide, N-(2,4,6-trimethylphenyl)maleimide, N-(4-benzylphenyl)maleimide, N-(2,4,6-tribromophenyl)maleimide, 2,2,6,6-tetramethylpiperidyl methacrylate, and 2,2,6,6-tetramethyl-N-methylpiperidyl methacrylate. These compounds may be used alone or a mixture of two or more, and are not restricted to the exemplified compounds.

The thermoplastic resin preferably contains at least one compound selected from phenolic antioxidants, phosphite antioxidants, thioether antioxidants and light stabilizers. For example, each of the phenolic, phosphite and thioether antioxidants may be used as the antioxidant, and the light stabilizer is not particularly restricted so long as it does not reduce transparency and maintains low birefringence of the thermoplastic resin. The flowing compounds may be used.

The phenolic antioxidant is not particularly restricted so long as it does not decrease transparency and maintains low birefringence of the thermoplastic resin. The antioxidant available includes those represented by the following structural formula (1) to (8):

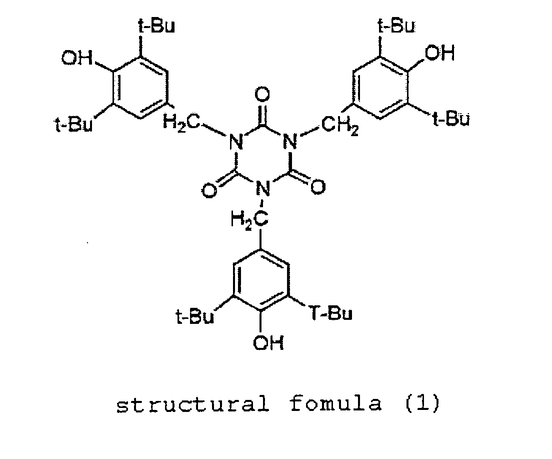

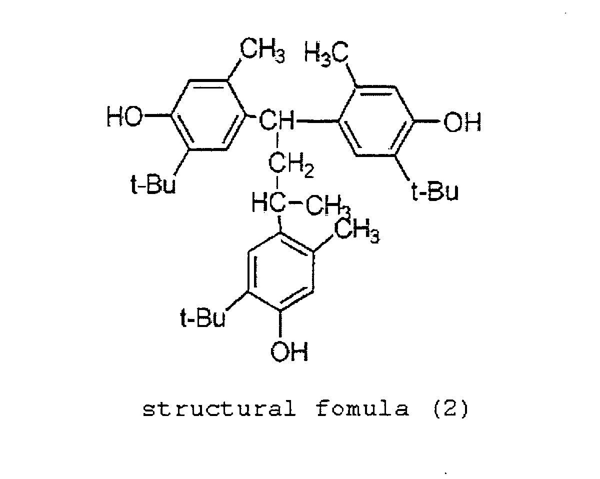

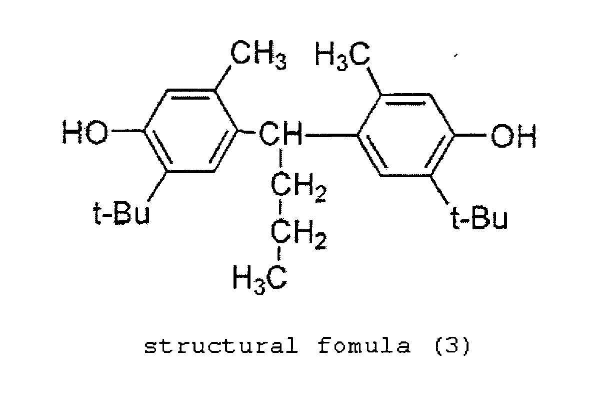

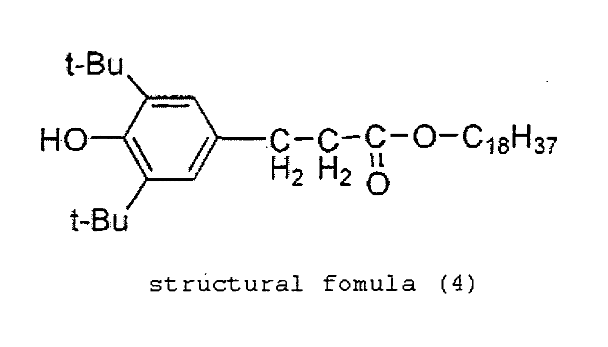

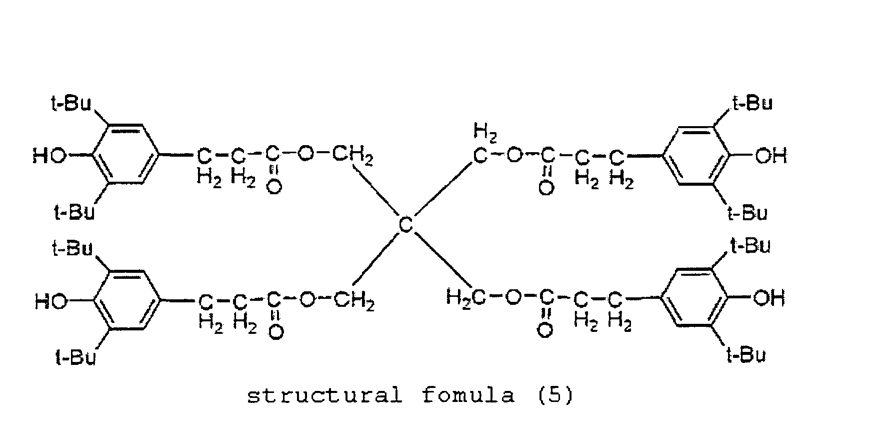

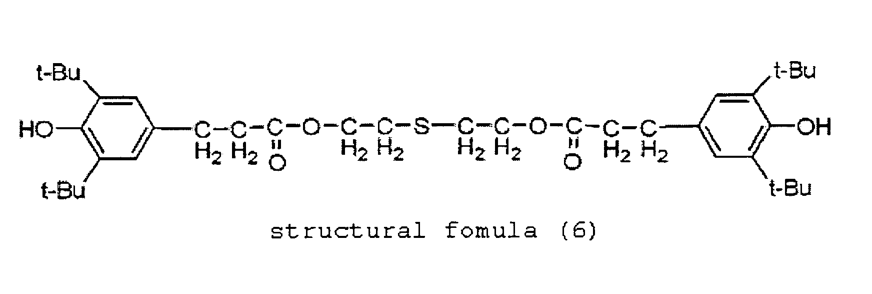

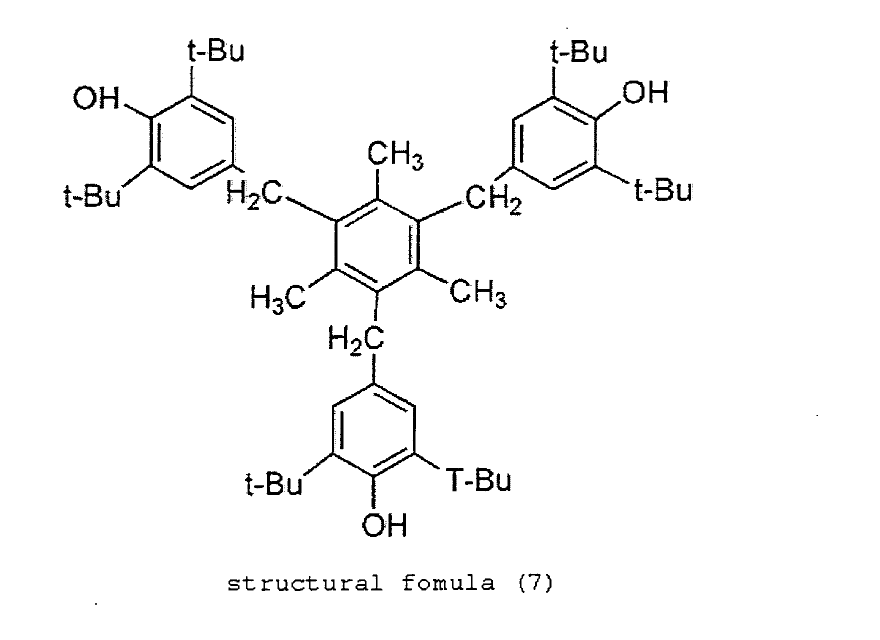

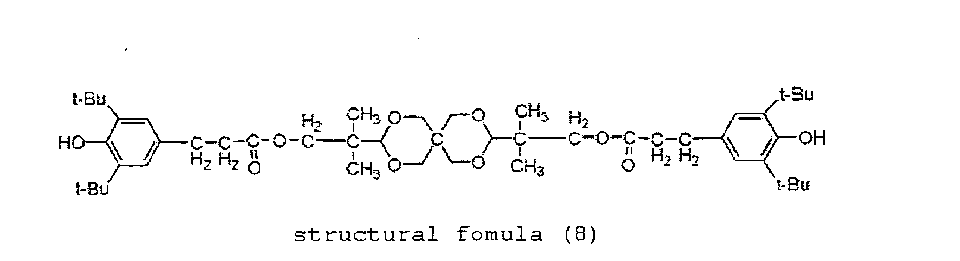

The phosphite antioxidant is not particularly restricted so long as it does not decrease transparency and maintains low birefringence of the thermoplastic resin. The antioxidant available includes those represented by the following structural formula (9) to (21):

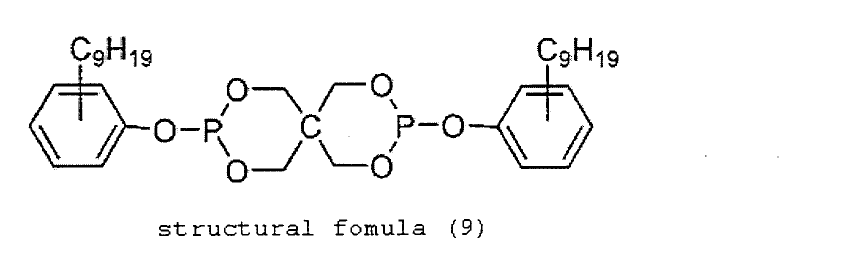

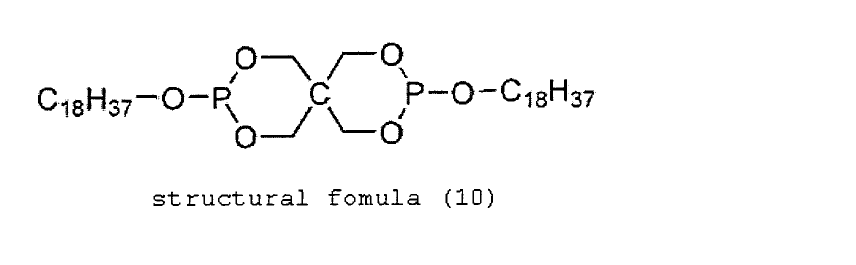

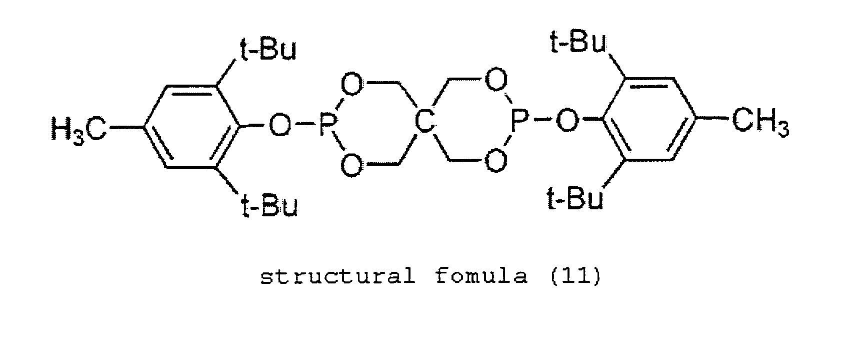

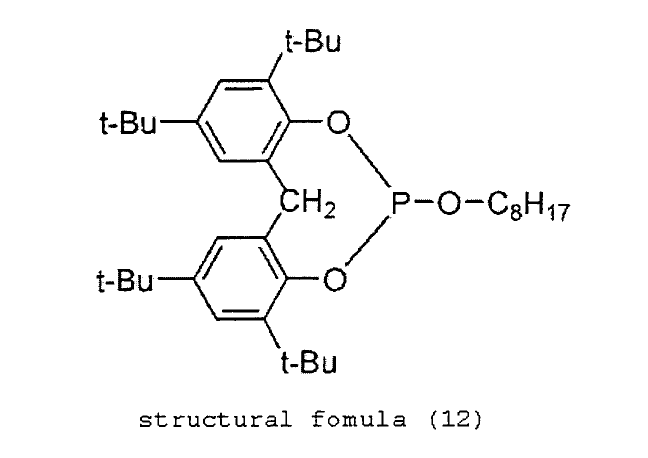

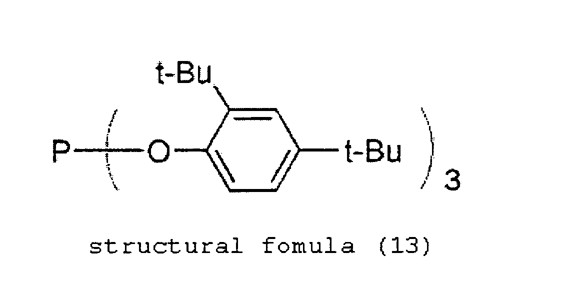

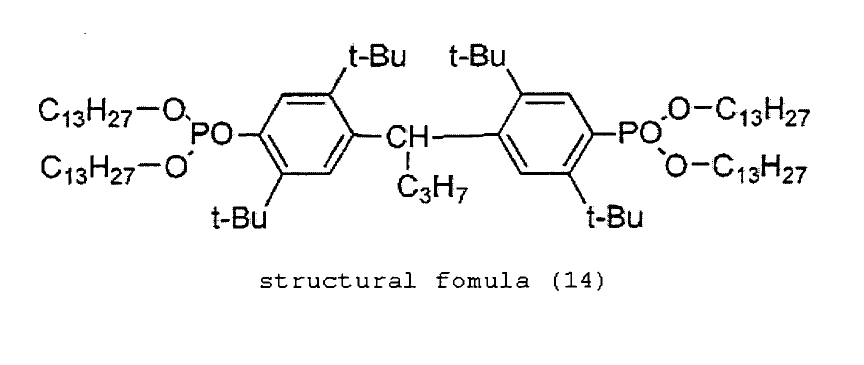

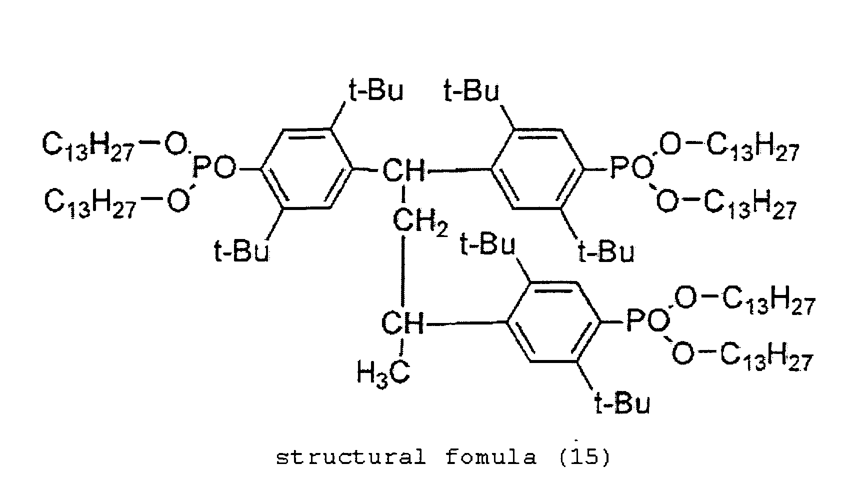

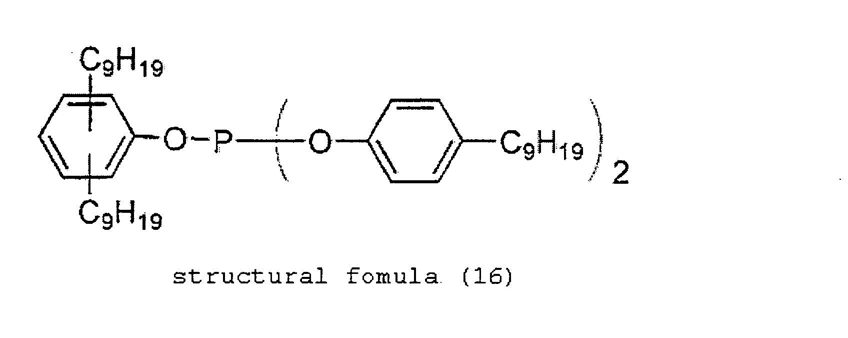

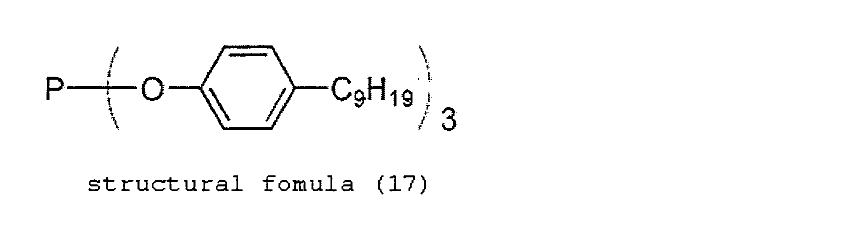

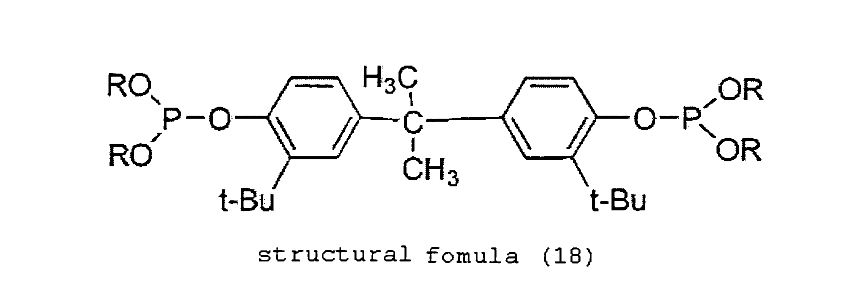

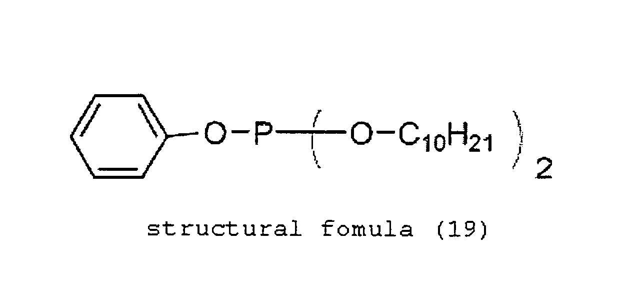

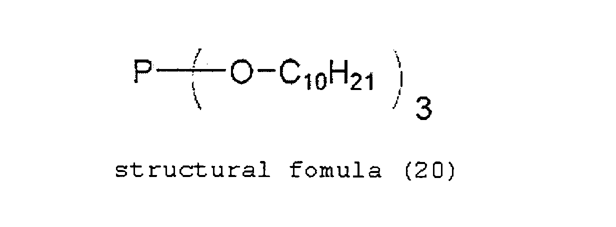

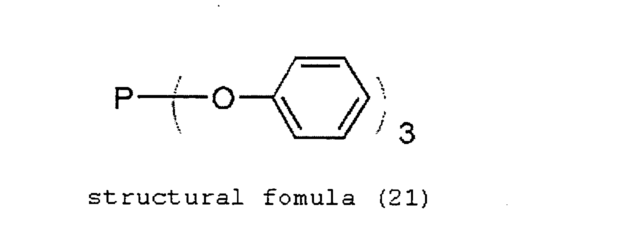

The thioether antioxidant is not particularly restricted so long as it does not decrease transparency and maintains low birefringence of the thermoplastic resin. The antioxidant available includes those represented by the following structural formula (22) to (24):

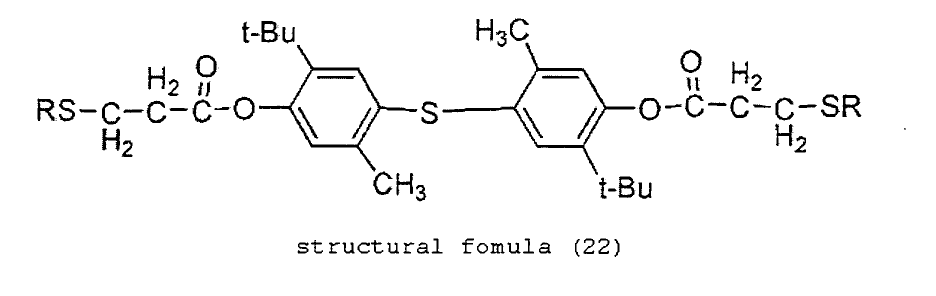

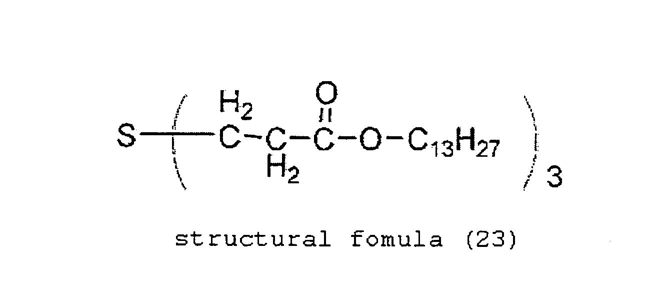

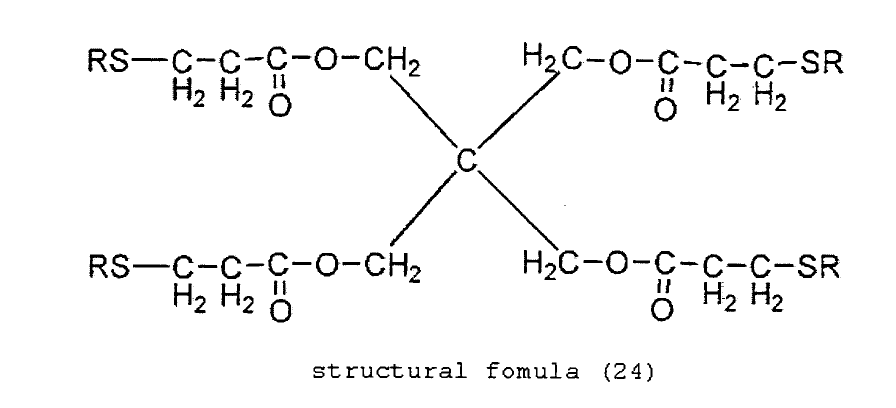

Examples of the light stabilizer used in the invention include those represented by the following structural formula (25) to (34):

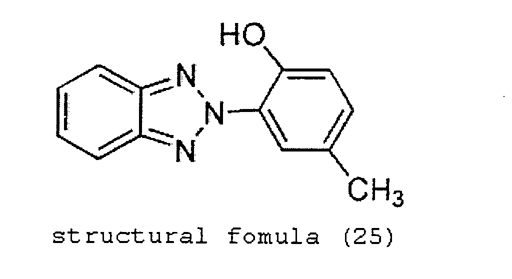

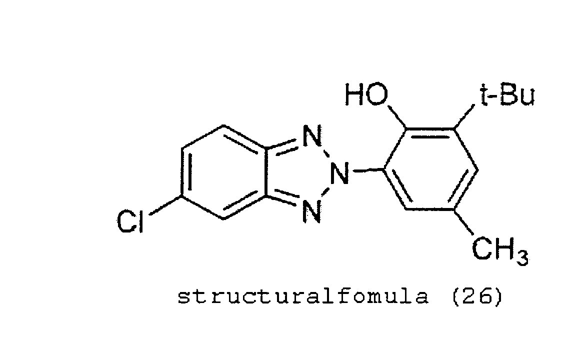

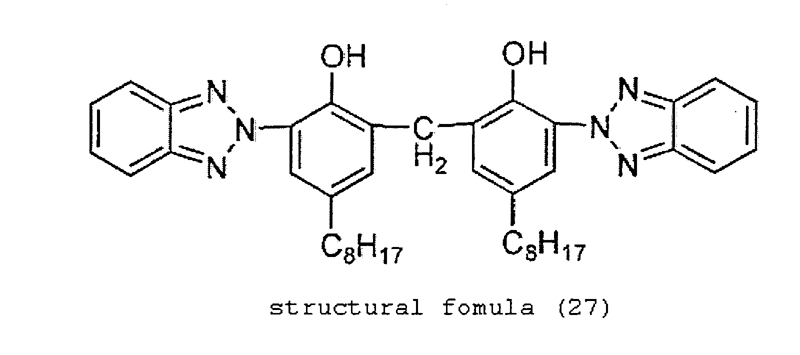

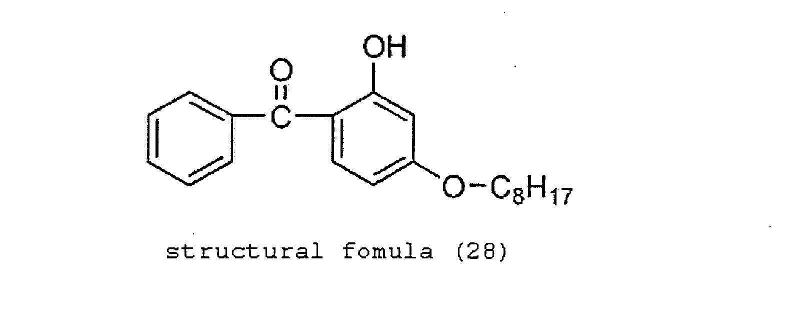

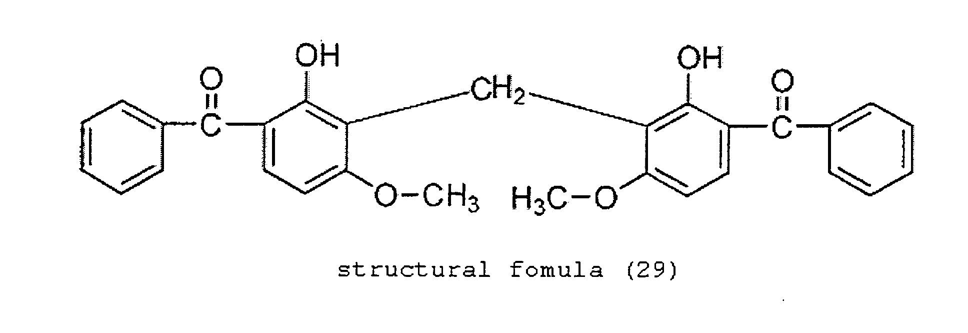

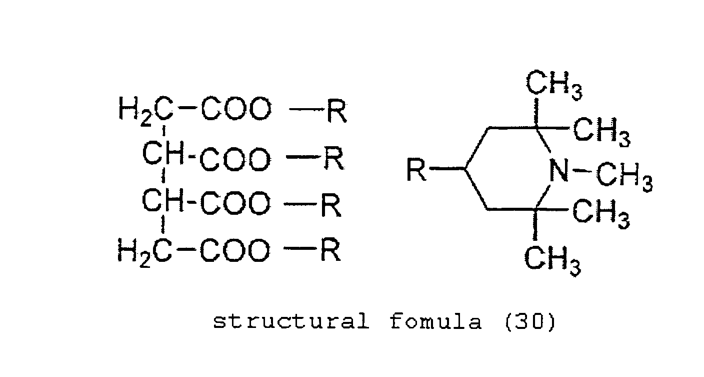

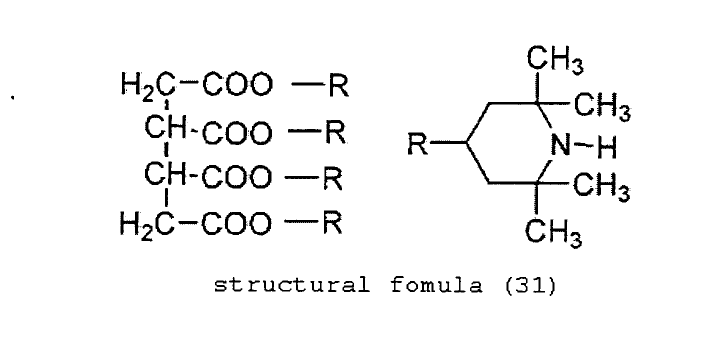

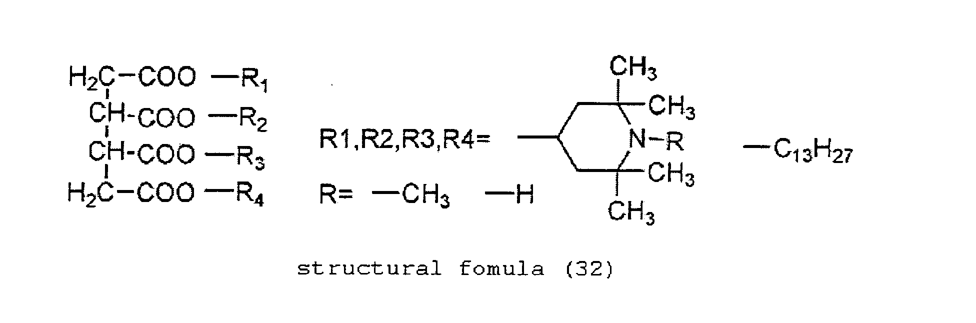

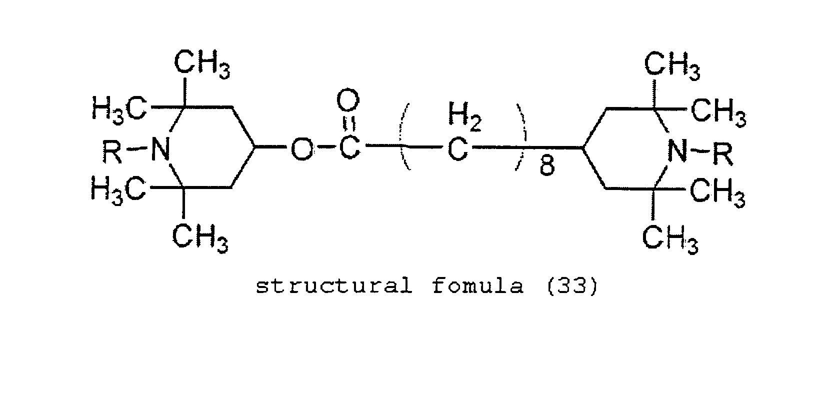

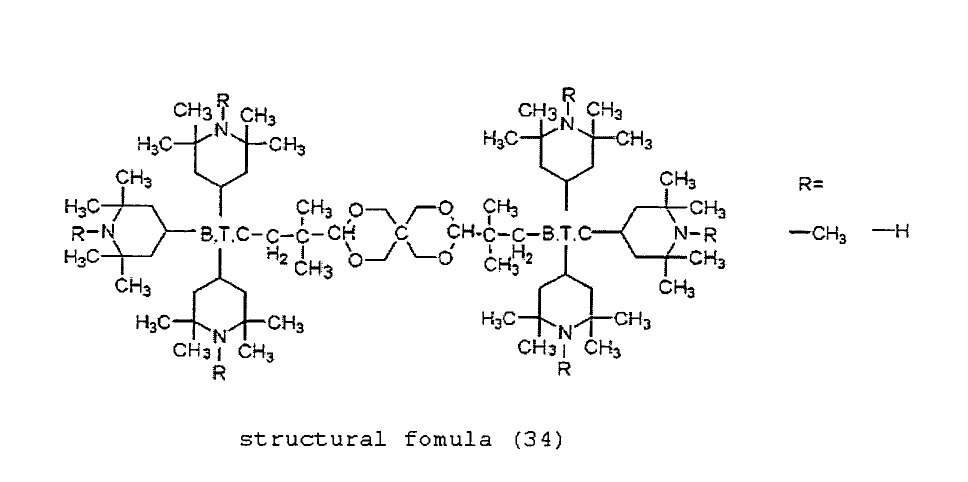

Additives such as the antioxidant and light stabilizer may be used alone, or two or more together. The amount of the additive may be determined depending on the required amount, and the amount is preferably 1.0% by weight or less and more preferably 0.01% by weight or more relative to the amount of the solid content of the resin composition used for producing the film. If the amount of the additive exceeds 1.0% by weight, transparency of the thermoplastic resin may be decreased. The antioxidant shown above is preferably added for forming the film by melting with heating, because the resin is colored by oxidative deterioration during processing to cause a decrease of transparency of the resin composition unless the antioxidant is added. However, addition of the antioxidant is not needed when the resin is able to be processed at a relatively low temperature (about 200°C or less). The light stabilizer may be added depending on light stability of the thermoplastic resin. Peeling agents such as aliphatic alcohols, fatty acid esters, phthalic acid esters, triglycerides, fluorinated surfactants and metal salts of higher fatty acids, and other additives such as lubricant, plasticizers, antistatic agents, UV absorbing agents, flame retardants, and heavy metal inactivating agents may be also added.

Existing methods such as mass polymerization, suspension polymerization, emulsion polymerization and solution polymerization can be used for producing the acrylic resin (vinyl-base polymer) according to the invention.

While polymerization initiators are used for polymerization, any polymerization initiators used for conventional radical polymerization may be used including, for example, organic peroxides such as benzoyl peroxide, lauroyl peroxide, di-t-butylperoxy hexahydrotelephthalate, t-butylperoxy-2-ethyl hexanoate, and 1,1-t-butylperoxy-3,3,5-trimethylcyclohexane; azo compounds such as azobisisobutylonitrile, azobis-4-methoxy-2,4-dimethylvaleronitrile, azobiscyclohexanone-1-carbonitrile and azodibenzoyl; water-soluble catalysts such as potassium persulfate and ammonium persulfate; and redox catalysts as combinations of peroxides or persulfates and reducing agents. The polymerization initiator is not restricted to those exemplified herein. The polymerization initiator is preferably used in the range of 0.01% by weight to 10% by weight relative to the total amount of the monomer used for producing the resin.

While mercaptan compounds, thioglycol, carbon tetrachloride and "-methylstyrene dimer may be added, if necessary, as a molecular weight controlling agents, the molecular weight control agent is not restricted to those exemplified herein.

The polymerization temperature may be appropriately selected in the range of 0°C to 200°C, preferably in the range of 50°C to 120°C, for heat polymerization.

While the molecular weight of the acrylic resin, in case of using the acrylic resin as the thermoplastic resin of the invention, is not particularly restricted, it is preferably in the range of 10,000 to 1,000,000, as a weight average molecular weight (as converted using a calibration curve of the molecular weight of standard polystyrene measured by gel permeation chromatography) in view point of toughness and heat resistance.

Rubber particles having the same refractive index may be added, or a highly flexible acrylic resin may be blended in order to improve poor flexibility as a drawback of the acrylic resin. Japanese Patent Application Laid-Open Nos. 2000-273319 and 2002-38036 have disclosed, for example, the methods for blending the highly flexible acrylic resin, whereby a highly transparent acrylic resin can be obtained by forming intermolecular hydrogen bonds by blending an acrylic resin having electron accepting atomic groups with an acrylic resin having electron donating atomic groups.

When the light transmission layer is formed by mainly using a thermoplastic or curable vinyl-base polymer, the polymer is preferably a mixture containing vinyl-base polymer A having at least one kind of proton donating atomic group and vinyl-base polymer B having at least one kind of proton accepting atomic group, because pseudo cross-links are formed by intermolecular hydrogen bonds between both kinds of atomic groups. The vinyl-base polymer is preferably the acrylic resin. While the cross-link have been described as a "pseudo cross-link" herein, the term "pseudo" herein means that the cross-linked structure is supposed to be broken by heating (lower than the heat decomposition temperature) or by a solvent, while the cross-linked structure is supposed to be formed again by decreasing the temperature or by removing the solvent. The light transmission layer can be endowed with a plurality of characteristics that cannot be acquired by forming the film from only one kind of the vinyl-base polymer, when the light transmission layer is formed from a film comprising a mixture of at least two kinds of vinyl-base polymers. For example, heat resistance and toughness may be compatible with each other by forming pseudo cross-links by mixing a vinyl-base polymer excellent in heat resistance and a vinyl-base polymer excellent in toughness. Vinyl-base polymer A and vinyl-base polymer B will be described in detail hereinafter.

### [Vinyl-base polymer A]

While vinyl-base polymer A is obtained by polymerizing vinyl monomers having at least one kind of proton donating atomic group, the polymer is not particularly restricted so long as optical characteristics such as transparency and birefringence are not impaired.

While examples of the proton donating atomic group include functional groups such as carboxylic group, sulfonic acid group, phosphoric acid group, hydroxyl group, phenolic hydroxyl group, mercapto group, thiophenolic mercapto group, primary amino group and secondary amino group, preferable functional group is carboxylic group, hydroxyl group or phenolic hydroxyl group.

While the vinyl monomer having the proton donating atomic group as described above is not particularly restricted, examples of the monomer include acrylic acid, 2-hydroxyethyl acrylate, 2-hydroxypropyl acrylate, 2-hydroxybutyl acrylate, 2-acryloyloxyethyl succinic acid, 2-acryloyloxyethyl hexahydrophtalic acid, 2-acryloyloxyethyl-2-hydroxypropyl phthalate, 2-acryloyloxyethyl acid phosphate, 2-hydroxy-3-acryloyloxypropyl acrylate, methacrylic acid, 2-hydroxyethyl methacrylate, 2-hydroxypropyl methacrylate, 2-hydroxymethylbutyl methacrylate, 2-methacryloyloxyethyl succinic acid, 2-methacryloyloxyethyl hexahydrophthalic acid, 2-methacryloyloxyethyl-2-hydroxypropyl phthalate, 2-methacryloyloxyethyl acid phosphate, 2-hydroxy-3-methacryloyloxypropyl acrylate, vinylphenol, vinylbenzoic acid, vinyl benzoate, and derivatives thereof.

When a vinyl monomer having at least one kind of the proton donating atomic group is copolymerized with other vinyl monomers, preferably 0.2 mol% or more, more preferably 0.5 mol% or more, and particularly preferably 1.0 mol% or more of the vinyl monomer having at least one kind of the proton donating atomic group is preferably copolymerized relative to the total amount of the vinyl monomer. If the amount is less than 0.2 mol%, the solubility of the copolymer tend to decreases and to impair transparency of the resin composition due to a decrease of the number of the intermolecular hydrogen bonds between vinyl-base polymer A and vinyl-base polymer B. While an upper limit of the amount is not particularly restricted, usually, the limit is 30 mol% or less.

Existing methods such as mass polymerization, suspension polymerization, emulsion polymerization and solution polymerization may be used for producing vinyl-base polymer A using the materials as described above.

Polymerization initiators are used for polymerization. Any polymerization initiators used for conventional radical polymerization may be used including, for example, organic peroxides such as benzoyl peroxide, lauroyl peroxide, di-t-butylperoxy hexahydrotelephthalate, t-butylperoxy-2-ethyl hexanoate, and 1,1-t-butylperoxy-3,3,5-rimethylcyclohexane; azo compounds such as azobisisobutylonitrile, azobis-4-methoxy-2,4-dimethylvaloronitrile, azobiscyclohexanone-1-carbonitrile and azodibenzoyl; water-soluble catalysts such as potassium persulfate and ammonium persulfate; and redox catalysts as combinations of peroxides or persulfates and reducing agents. However, the polymerization initiator is not restricted to those exemplified herein. The polymerization initiator is preferably used in the range of 0.01% by weight to 10% by weight relative to the total amount of the monomer used for producing the vinyl-base polymer.

While mercaptan compounds, thioglycol, carbon tetrachloride and "-methylstyrene dimer may be added, if necessary, as a molecular weight controlling agents, the molecular weight control agent is not restricted to those exemplified herein.

The polymerization temperature may be appropriately selected in the range of 0°C to 200°C, preferably in the range of 50°C to 120°C, for heat polymerization.

While the molecular weight of the vinyl-base polymer A of the invention is not particularly restricted, it is preferably in the range of 10,000 to 1,000,000, more preferably in the range of 100,000 to 1,000,000 as a weight average molecular weight (as converted using a calibration curve of the molecular weight of standard polystyrene measured by gel permeation chromatography) in view point of toughness and heat resistance.

### [Vinyl-base polymer B]

While vinyl-base polymer B is obtained by polymerizing vinyl monomers having at least one kind of proton accepting atomic group, preferably nitrogen atom, the polymer is not particularly restricted so long as optical characteristics such as transparency and birefringence are not impaired.

While examples of the proton accepting atomic group include functional groups such as carbonyl group, sulfonyl group, phosphoryl group, cyano group, secondary amino group, tertiary amino group and nitrogen-containing heterocyclic group, the preferable group is functional groups such as secondary amino group, tertiary amino group and nitrogen-containing heterocyclic group.

Examples of the vinyl monomer having the proton accepting atomic group include (meth)acrylamide such as dimethylaminoethyl acrylate, diethylaminoethyl acrylate, dimethylaminomethyl acrylate, dimethylaminoethyl methacrylate, diethylaminoethyl methacrylate, 2,2,6,6-tetramethyl-N-methylpyrimidyl methacrylate, 2,2,6,6-tetramethyl-N-methylpyrimidyl acrylate, 2,2,6,6-tetra-N-methylpiperidyl methacrylate, 2,2,6,6-tetramethylpiperidyl methacrylate, dimethylaminoethyl methacrylate, acrylamide, methacrylamide, N-dimethylacrylamide, N-diethylacrylamide, N-dimethylmethacrylamide and N-diethylmethacrylamide; and vinyl pyridine and derivatives thereof. However, the vinyl monomer is not restricted to those exemplified herein.

The amount of use of the monomer to be copolymerized for introducing at least one kind of the proton accepting atomic group in the molecule of the vinyl-base polymer B is preferably 0.2 mol% or more, more preferably 0.5 mol% or more, and further preferably 1.0 mol% or more relative to the total amount of the vinyl monomer constituting vinyl-base polymer B. If the amount is less than 0.2 mol%, the solubility of the copolymer tend to decrease and to impair transparency of the resin composition due to a decrease of the number of the intermolecular hydrogen bonds between vinyl-base polymer A and vinyl-base polymer B. While an upper limit of the amount is not particularly restricted, usually, the limit is 30 mol% or less.

Existing methods such as mass polymerization, suspension polymerization, emulsion polymerization and solution polymerization may be used for producing vinyl-base polymer B using the materials as described above.

Polymerization initiators are used for polymerization. Any polymerization initiators used for conventional radical polymerization may be used including, for example, organic peroxides such as benzoyl peroxide, lauroyl peroxide, di-t-butylperoxy hexahydrotelephthalate, t-butylperoxy-2-ethyl hexanoate, and 1,1-t-butylperoxy-3,3,5-trimethylcyclohexane, azo compounds such as azobisisobutylonitrile, azobis-4-methoxy-2,4-dimethylvaleronitrile, azobiscyclohexanone-1-carbonitrile and azodibenzoyl; water-soluble catalysts such as potassium persulfate and ammonium persulfate; and redox catalysts as combinations of peroxides or persulfates and reducing agents. However, the polymerization initiator is not restricted to those exemplified herein. The polymerization initiator is preferably used in the range of 0.01% by weight to 10% by weight relative to the total amount of the monomer used for producing vinyl-base polymer B.

While mercaptan compounds, thioglycol, carbon tetrachloride and "-methylstyrene dimer may be added, if necessary, as a molecular weight controlling agents, the molecular weight control agent is not restricted to those exemplified herein.

The polymerization temperature may be appropriately selected in the range of 0°C to 200°C, preferably in the range of 50°C to 120°C, for heat polymerization.

While the molecular weight of vinyl-base polymer B of the invention is not particularly restricted, it is preferably in the range of 10,000 to 1,000,000, more preferably in the range of 50,000 to 1,000,000 as a weight average molecular weight (as converted using a calibration curve of the molecular weight of standard polystyrene measured by gel permeation chromatography) in view point of toughness and heat resistance.

### [Mixing of vinyl-base polymer A and vinyl-base polymer B]

The vinyl-base polymer preferably used in the light transmission layer of the invention is obtained by mixing vinyl-base polymer A and vinyl-base polymer B. Other vinyl-base polymers may be appropriately added for improving flexibility and heat resistance.

Any mixing methods including a melt-kneading method and varnish blend method may be used for mixing vinyl-base polymer A and vinyl-base polymer B.

While the mixing ratio of vinyl-base polymer A and vinyl-base polymer B is not particularly restricted so long as transparency of the resin composition obtained is secured, the molar ratio of hydrogen bond-forming atomic groups in vinyl-base polymer A and vinyl-base polymer B is preferably in the range of 15:1 to 1:15.

It is preferable in the invention that the glass transition temperature of vinyl-base polymer A is different from that of vinyl-base polymer B. It is more preferable that the glass transition temperature of one of the polymers is less than 25°C while the glass transition temperature of the other polymer is 25°C or more. The vinyl-base polymer obtained may be endowed with heat resistance and toughness by mixing vinyl-base polymer A and vinyl-base polymer B having different glass transition temperatures to one another. The polymer is not endowed with toughness at room temperature to cause a problem of heat deformation, when the glass transition temperature is out of the temperature conditions as described above. Although the glass transition temperature in the range of satisfying the conditions above does not arise any problems, the glass transition temperature of one of the polymers is preferably 10°C or less, more preferably 0°C or less, and the glass transition temperature of the other polymer is preferably 50°C or more, more preferably 80°C or more. While the glass transition temperature can be measured by DVA (dynamic viscoelasticity measurement), TMA and DSC, the standard method is preferably DVA, and the DVA measurement is used in examples to be described hereinafter.

For satisfying the conditions of the glass transition temperature described above, other vinyl-base polymers may be copolymerized with vinyl-base polymer A containing at least one kind of proton donating atomic groups in the molecule and with vinyl-base polymer B containing at least one kind of proton accepting atomic groups in the molecule. The monomers which can be used are not particularly restricted so long as they do not impair transparency of resulting vinyl-base polymers, and examples of the copolymerized monomers include monomers of acrylic resins as described previously.

Arbitrary components may be added to the vinyl-base polymer, if necessary. For example, phenolic, phosphite or thioether antioxidants, light stabilizers, peeling agents such as aliphatic alcohols, fatty acid esters, phthalic acid esters, triglycerides, fluorinated detergents and metal salts of higher fatty acids, and other additives such as slip agents, plasticizers, antistatic agents, UV absorbing agents, flame retardants and heavy metal inactivating agents may be added in view of deterioration prevention, thermal stability, moldability and processability.

The method for producing a film that serves as a light transmission layer from the thermoplastic resin or vinyl-base polymer is not particularly restricted so long as the method does not deteriorate transparency and does not increase birefringence of the film. For example, the layer may be formed by dissolving the thermoplastic resin or vinyl-base polymer in a solvent, by applying the solution on a base film, preferably the polyester resin film is used as the base film, and by drying the solution. Otherwise, the layer may be formed by injection molding after melting the thermoplastic resin or vinyl-base polymer by heating. Alternatively, the layer may be formed by extrusion molding after melting the thermoplastic resin or vinyl-base polymer by heating, or by compression molding after melting the thermoplastic resin or vinyl-base polymer by heating.

The solvent used is not particularly restricted so long as it is capable of dissolving the thermoplastic resin or vinyl-base polymer. The solvents available include ketone solvents such as acetone, methylethylketone, methylisobutylketone; aromatic solvents such as toluene and xylene; and NMP and dimethylacetamide. However, these solvents are only examples, and the solvents are not restricted thereto. Since the film of the invention is highly adhesive to the glass and the metal such as aluminum and copper, selection of cast substrates is important for forming the film. While the substrate is not particularly restricted, and stainless steel, PET film and Teflon (registered trade name) may be selected, the substrate preferably has low adhesiveness with the thermoplastic resin or vinyl-base polymer.

The light transmission layer constituting the film of the invention thus obtained is tough and flexible while being excellent in mechanical characteristics, and bend processability of the film is also excellent.

The film for optical parts of the invention preferably has light transmission of 87% or more, more preferably 90% or more at a wavelength of 405 nm. When the light transmission is less than 87%, the signal intensity decreases since the reflected light from the recording layer is absorbed by the light transmission layer. For attaining transmittance of 87% or more, it adjusts by not using the additive agent which absorbs UV rays and by only using monomers without an ultraviolet absorption belt as monomers consisting of the resin.

The thickness of the light transmission layer of the film for optical parts of the invention is preferably in the range of 15 to 250 µm, in the range of 25 to 200 µm, and further preferably in the range of 35 to 150 µm. Toughness decreases when the thickness of the film is less than 15 µm to readily worsen processability, while the film with the good characteristic cannot be obtained since the residual volatile substances such as monomers and solvents becomes easy to remain when the thickness exceeds 250 µm. A laser focus displacement meter (manufactured by Keyence Corp. LT-8010) is used for measuring the thickness of the film, wherein measuring points (for example 25 to 1000 points) are appropriately selected from an arbitrary total area (for example in an area of 1 cm² to 10,000 cm²), and an average of measured values are used as the thickness.

The film for optical parts of the invention has an accuracy of thickness of ±2.0 µm, a surface roughness of 5 nm or less within a width of 15 µm, and a haze of less than 1%. The accuracy of thickness is more preferably within ±1.5 µm, and haze is more preferably less than 0.5%. The accuracy of the thickness may be controlled by improving the accuracy of a coater and by stabilizing drive of a coating machine when the film is formed by coating, or by improving the accuracy of clearance of an extrusion die and by stabilizing driving systems of an extruder when the film is formed by melt extrusion. Surface smoothness can be controlled by selection of solvents, selection of drying conditions, and improvement of smoothness of a coater when the film is formed by coating. Surface smoothness can be also controlled by improving smoothness of clearance of an extrusion die when the film is formed by melt extrusion. Haze can be controlled by improving transparency of the resin used for producing the film, or by improving smoothness of the surface of the film.

Birefringence of the light transmission layer on the film for optical parts of the invention is preferably 20 nm or less. Signal accuracy for reading from and writing to the disk tends to be decreased when birefringence exceeds 20 nm. Birefringence of the light transmission layer is preferably 10 nm or less, more preferably 5 nm or less, from the view point of signal accuracy, and particularly 2 nm or less when the film is used for high recording density DVDs with a recording density of exceeding 20 GB.

Detailed methods for measuring characteristics as described above will be described in examples hereinafter.

The hard coat layer may be further formed on the light transmission layer in the film for optical parts of the invention. The hard coat layer is desirable that the surface hardness after hardening is 3H or more by pencil hardness. Scratch resistance becomes insufficient when the pencil hardness of the hard coat layer is less than 3H. While the hard coat layer is not particularly restricted, it is preferable that the layer has a cross-linked structure, and the cross-linked structure is more preferably a silicone cross-linked structure or acrylic cross-linked structure. The thickness of the hard coat layer is preferably 0.5 to 0.8 µm, and accuracy of the thickness is preferably within ±1.0 µm. The effect for improving scratch resistance becomes low when the thickness of the hard coat layer is less than 0.5 µm, while cracks may be generated during environmental tests when the thickness exceeds 8.0 µm.

While the method for forming the hard coat layer as described above on the film for optical parts of the invention is not particularly restricted, an example of the method comprises the steps of applying a hard coat precursor containing a curing catalyst on a previously prepared film at a uniform thickness, and curing the precursor layer by heating or by irradiating UV light.

Examples of the hard coat precursor for forming the silicone cross-linked structure available include condensed hydrolyses products such as tetraethoxy silane, tetramethoxy silane, C₁ to C₁₂ alkyltrimethoxy silane, C₁ to C₁₂ alkyltriethoxy silane, di(C₁ to C₁₂ alkyl) trimethoxy silane, di (C₁ to C₁₂ alkyl)triethoxy silane, tri (C₁ to C₁₂ alkyl)methoxy silane, and tri(C₁ to C₁₂ alkyl)ethoxy silane. These silane compounds may be used alone, or two or more of them may be used together.

Examples of the curing catalyst capable of being added in the hard coat precursor include metal hydroxides such as potassium hydroxide, sodium hydroxide, barium hydroxide, strontium hydroxide, lithium hydroxide, magnesium hydroxide and calcium hydroxide; and amine compounds such as trimethylamine, triethylamine, tri(C₃-C₈ alkyl)amine, dimethylamine, diethylamine, di(C₃-C₈ alkyl)amine, methylamine, ethylamine, (C₃-C₈ alkyl) amine, cyclohexylamine, morpholine, trimethylammoniumu hydroxide, triethylammoniumu hydroxide,tetramethylammonium hydroxide, tetramethylammonium hydroxide, hydroxyethyldimethyl hydroxide and hydroxyethyldiethyl hydroxide. Potassium hydroxide, sodium hydroxide, tetramethylammonium hydroxide, tetraethylammonium hydroxide, hydroxyethyltrimethylammonium hydroxide and hydroxyethyltriethylammonium hydroxide are favorable among them. Potassium hydroxide, sodium hydroxide, tetramethylammonium hydroxide, tetraethylammonium hydroxide, hydroxyethyltrimethylammonium hydroxide and hydroxyethyltriethylammonium hydroxide are more favorable among them. However, these hydroxides are only examples, and are not restricted thereto. These hydroxides may be used alone, or as a combination of at two or more of them. While the amount of the curing catalyst added is not particularly restricted, the proportion may be appropriately selected in the range of 0.05 to 10% by weight relative to the amount of the solid fraction in the hard coat precursor.

While the curing temperature is not particularly restricted so long as the hard coat precursor is curable at the temperature, it is favorably 60°C to 180°C. The most preferable temperature is about 120°C to 160°C.

While a catalyst is used for producing the hard coat precursor, the catalyst is the same as the curing catalyst described above such as alkali hydroxides and ammine compounds, in addition to acids such as hydrochloric acid, sulfuric acid, nitric acid, paratoluene sulfonic acid, phosphoric acid, pohenolsulfonic acid and polyphosphoric acid. These may be used alone, or two or more of them may be used together. These compounds shown herein are only examples, and are not restricted thereto.

While the reaction temperature for producing the hard coat precursor is not particularly restricted, the favorable temperature is about 20°C to 100°C. Productivity decreases due to a reduced reaction rate when the temperature is lower than 20°C. On the other hand, a temperature of above 100°C is dangerous since alcohols or water produced by hydrolysis or condensation may boil. The reaction is favorably performed in a solution. Examples of the solvent available include alcohols such as methanol, ethanol, propanol, butanol, pentanol, hexanol, heptanol and octanol. However, these alcohols are only examples, and are not restricted thereto.

The acrylic cross-linked structure that serves as the hard coat layer of the invention can be formed by using a polymerizable material (hard coat material) containing polymerizable compaunds having an acryloyl or methacryloyl group.

Examples of the polymerizable compound used as the hard coat material include oligomers having at least two (meth)acryloyl groups such as urethane(meth)acrylate oligomer, epoxy(meth)acrylate oligomer, oligoester(meth)acrylate oligomer; alkyleneglycol di(meth)acrylate such as ethyleneglycol di(meth)acrylate, propyleneglycol di(meth)acrylate, 1,4-butanediol di(meth)acrylate, 1,6-hexanediol di(meth)acrylate and neopentylglycol di(meth)acrylate; (poly)oxyalkyleneglycol di(meth)acrylate such as diethyleneglycol di(meth)acrylate, triethyleneglycol di(meth)acrylate and dipropyleneglycol di(meth)acrylate; bifunctional (meth)acrylate such as glycerin di(meth)acrylate, di(meth)acrylates of an addition compound in which an alkyleneoxide (such as ethyleneoxide and propyleneoxide) are added to bisphenol A [such as, for example, 2,2-bis[4-(2-(meth)acryloyloxyethoxy)phenyl]propane and 2,2-bis[4-(2-(meth)acyloyloxypropoxy)phenyl]propane]; and polyfunctional (meth)acrylate such as trimethylolpropane tri(meth)acrylate, pentaerythritol tri(meth)acrylate, pentaerythritol tetra(meth)acrylate, dipentaerythritol hexa(meth)acrylate and (meth)acrylate having a phosphazo group (-P=N-) and (meth)acryloyl group.

Monofunctional (meth)acrylate including C1-20 alkyl (meth)acrylate such as methyl (meth)acrylate, ethyl (meth)acrylate, butyl (meth)acrylate, hexyl (meth)acrylate, 2-ethylhexyl (meth)acrylate, lauryl (meth)acrylate and stearyl (meth)acrylate; hydroxyl group-containing (meth)acrylate such as cyclohexyl (meth)acrylate, phenyl (meth)acrylate, benzyl (meth)acrylate, isobornyl (meth)acrylate, 2-hydroxyethyl (meth)acrylate and 2-hydroxypropyl (meth)acrylate; basic nitrogen atom-containing (meth)acrylate such as glycidyl (meth)acrylate and N,N-diethylaminoethyl (meth)acrylate; and halogen-containing (meth)acrylate such as trifluoroethyl (meth)acrylate and tetrafluoropropyl (meth)acrylate may be used together for adjusting the characteristics of the cured coating film.

While the polymerizable hard coat material may be a thermosetting material containing a heat polymerization initiator (an organic peroxide such as benzoyl peroxide, cumene hydroperoxide and dicumyl peroxide), the hard coat material is preferably a photocurable material, particularly a UV curable material, containing a photopolymerization initiator for improving productivity.

Conventional photopolymerization initiators and sensitizers such as benzoin or derivatives thereof (such as benzoin, benzoin isopropyl ether and benzoin isobutyl ether), ketones (1-hydroxycyclohexyl phenyl ketone, acetophenone or its derivatives (such as alkoxyacetophenone), propiophenone or its derivatives (such as 2-hydroxy-2-methyl propiophenone), benzophenone or its derivatives (such as 4,4'-dimethoxy benzophenone and 4,4'-bis(4-diethylaminophenyl)ketone), benzyl or its derivatives (such as benzyl and benzylmethyl ketal), and thioxantone or its derivatives (such as 2,4-diethylthioxantone, 2-ethylthioxantone, 2-isopropylthioxantone and 2-chlorothioxantone)) may be used as the compound used for initiating photopolymerization. These compounds may be sued alone, or as a combination of two or more of them.

The amount of use of the heat polymerization initiator and photopolymerization initiator is preferably 0.1 to 10 parts by weight relative to 100 parts by weight of the polymerizable compound.

The hard coat material may be an organic solvent containing coating agent containing an organic solvent such as hydrocarbons, alcohols, esters, ketones and ethers.

The hard coat layer according to the invention preferably contains 0.2 to 10.0% by weight of a silicone thermoplastic resin. Slippage of the surface of the hard coat layer may be improved to improve scratch resistance by permitting the silicone thermoplastic resin to contain.

A base layer that is removed by peeling in use may be provided on the film for optical parts of the invention for supporting the film. The film may comprise an adhesive layer thereon for eliminating a bonding step thereafter, or may comprise the adhesive layer and base layer together. The adhesive layer is provided on the opposite surface to the hard coat layer when the film comprises the hard coat layer. When the adhesive layer is laminated on the outermost layer, a protective layer that is removed by peeling may be formed for protecting the adhesive layer. The film for optical parts of the invention may be formed by laminating the base layer, adhesive layer, hard coat layer and protective layer as an arbitrary combination depending on the object of use in addition to the light transmission layer, and the film may comprise 2 to 5 layers.

When the film for optical parts of the invention comprises the base layer that is removed by peeling in use on the light transmission layer, surface smoothness of the base layer is preferably 20 nm or less, more preferably 18 nm or less, particularly 15 nm or less, and even more preferably 12 nm or less even after the surface has been subjected to a peeling treatment. The peeling treatment is preferably vapor deposition of an inorganic thin film layer or coating of a polymer compound on the base layer. It is needless to say that a base layer with a surface smoothness of less than 10 nm may be used for eliminating the need of peeling treatment. Surface smoothness is preferably 7 nm or less, more preferably 5 nm or less, in this case.

A silicone resin may be added to the thermoplastic resin or vinyl-base polymer that serves as the light transmission layer for improving the peeling characteristic between the base layer and light transmission layer. While the silicone resin to be added to the thermoplastic resin or vinyl-base polymer is not particularly restricted, examples of the resin include conventional silicones such as dimethyl silicone and methylphenyl silicone; and alkyl-modified silicone, fluorosilicone, polyether-modified silicone, fatty acid ester-modified silicone, amino-modified silicone, carboxylic acid-modified silicone, carbinol-modified silicone, epoxy-modified silicone and mercapto-modified silicone as modified products of conventional silicone. Alkyl-modified silicone and polyether-modified silicone are preferable among them in view of the peeling characteristic and transparency.

Alkyl-modified silicone and polyether-modified silicone available has the following structure: 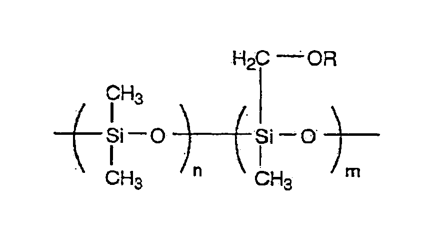 (where R represents a group having an alkyl group or an polyoxyalkylene structure, and "n" and "m" represent integers indicating the degree of polymerization).

The ethoxy-modified dimethyl silicone resin, methoxy-modified dimethyl silicone resin, n-propoxy-modified dimethyl silicone resin, iso-propoxy-modified dimethyl silicone resin, n-butoxy-modified dimethyl silicone resin, iso-butoxy-modified dimethyl silicone resin, t-butoxy-modified dimethyl silicone resin, and modified dimethyl silicone resins, in which R has an alkyl group terminus such as a methyl group, an ethyl group, a propyl group or butyl group, and has a polyoxyalkylene structure such as a polyoxyethylene chain or polyoxypropylene chain may be used among the compounds having the structure described above.

The degree of polymerization is indicated by "n" and "m" in the formula above. The preferable degree of polymerization (n + m) of the silicone resin is 20 to 100,000, more preferably 40 to 50,000, and further preferably 100 to 10,000. Scratch resistance and surface smoothness of the film are decreased when the degree of polymerization is less than 20, while transparency of the film tends to be decreased when the degree of polymerization exceeds 100,000.

The degree of polymerization (m) of the segment having a partially modified structure R is preferably 5 to 100,000, more preferably 10 to 50,000, and further preferably 20 to 1,000, from the view point of surface smoothness of the surface of the film and transparency of the film.

The silicone resin is added to the thermoplastic resin or vinyl-base polymer preferably in a range of 0.01 to 0.5% by weight, more preferably in a range of 0.02 to 0.3% by weight. No effect for improving the peeling characteristic is exhibited when the amount of addition of the silicone resin is less than 0.01%, while transparency of the film is impaired and surface smoothness may be deteriorated due to bleeding of silicone out of the surface when the amount of addition exceeds 0.5%.

An effect for improving the peeling characteristic of the film from the base layer and an effect for improving scratch resistance of the film as the light transmission layer may be expected by adding the silicone resin to the thermoplastic resin or vinyl-base polymer for forming the light transmission layer. In particular, the static friction coefficient against PET is preferably 0.42 or less, more preferably 0.40 or less. The film is readily damaged by peeling due to poor peeling characteristic when the static friction coefficient exceeds 0.42.

The occupation ratio of the low molecular weight polymer, which has a molecular weight of 10,000 or less as converted into the molecular weight of standard polystyrene measured on a molecular weight analysis chart of gel permeation chromatography, is preferably 10% by weight or less, more preferably 5% or less, in the thermoplastic resin or vinyl-base polymer for forming the light transmittance layer of the invention. The strength of the thermoplastic resin or vinyl-base polymer can be improved by suppressing the occupation ratio of the polymer with a molecular weight of 10,000 or less to be 10% by weight or less, while effectively preventing adhesion and tear when the light transmission layer is peeled from the base layer.

The polymer having a glass transition temperature of 25°C or more, of vinyl-base polymer A containing at least one kind of proton donating atomic groups in the molecule and vinyl-base polymer B containing at least one kind of proton accepting atomic groups in the molecule, has a weight average molecular weight of preferably 70,000 or more, more preferably in the range of 75,000 to 1,000,000. The strength of the film obtained decreases to deteriorate peeling characteristic when the average molecular weight of the polymer with a glass transition temperature of 25°C or more is less than 70,000, while the viscosity of the resin solution becomes too high to make it difficult to handle when the average molecular weight exceeds 1,000,000. While the molecular weight of the polymer with a glass transition temperature of less than 25°C is not particularly restricted, the weight average molecular weight (converted into polystyrene) is preferably in the range of 10,000 to 1,000,000 from the view point of strength and moldability.

When the film for optical parts of the invention comprises the light transmission layer and base layer, the number of peeling residues by adhesion is 3 places or less per 1 m² at a peeling speed of 100 mm/second at 25°C as a standard for peeling the film as the light transmission layer from the base layer. The yield of the film obtained decreases when the number of peeling residues per 1 m² exceeds three places.

The adhesive layer that may be formed on the film for optical parts of the invention in advance for improving processability is formed, for example, by applying an adhesive or a tackiness agent on the light transmission layer with drying, or by laminating an adhesive film on the light transmission layer which is able to bond the film for optical parts to a bonded layer such as the recording layer and supporting base plate. The kind and method of adhesion is not particularly restricted. When the optical disk is produced using a film for optical parts having no adhesive layer on the light transmission layer in advance, the adhesive layer is independently formed on the supporting base plate, and the light transmission layer is bonded on the adhesive layer. Consequently, surface smoothness of the light transmission layer decreases while processability is deteriorated due to increased number of processing steps.

While the adhesive or tackiness agent used for forming the adhesive layer is not particularly restricted, acrylic adhesive, natural rubber, ethylene-vinyl acetate copolymer, silicone-base adhesive and ester-base adhesive may be selected. The acrylic adhesive is particularly preferable for use. The adhesive layer may be formed into a film or sheet by coating the adhesive or tackiness agent on the base layer material in advance. The base layer material may be selected, for example, from a polyethylene film, polypropylene-base elastomer film, polyolefin-base elastomer film, polyester film, polyvinyl chloride film, polycarbonate-cellophane film, acetate film, various fluorinated films and polyimide film. However, these materials are only examples, and are not restricted thereto.

While the timing for forming the adhesive layer on the light transmittance layer is not particularly restricted, it is particularly preferable to form the layer after drying the applied thermoplastic resin or vinyl-base polymer varnish as the light transmission layer on the base layer material.

The combined thickness of the light transmission layer and adhesive layer is preferably 30 µm to 300 µm, more preferably 40 to 250 µm, and particularly 50 to 200 µm. Surface smoothness and processability tend to be deteriorated when the thickness is less than 30 µm, while surface roughness and transmittance at a wavelength of 405 nm are liable to be poor when the thickness exceeds 300 µm. The accuracy of the thickness of two layers comprising the light transmission layer and adhesive layer is preferably within ±2 µm, while transmittance at 405 nm is 87% or more.

The film for the optical parts of the invention comprises a coiled film laminate formed into a roll by winding the film on an outer circumference of a cylindrical core material. Since the film as the light transmission layer is able to be wound without peeling from an original film as a base layer, surface smoothness is never impaired with good peeling characteristic during the use to enable handling to be easy. Consequently, the yield of the optical parts is prevented from being decreased.

The film for optical parts of the invention is favorably used for the light transmission layer of the optical disk.

The invention also provides optical parts using the film for optical parts as the light transmission layer. While the light transmission layer is bonded to the recording layer of the optical part with interposition of the adhesive layer, the difference of the refraction index between the light transmission layer and adhesive layer is preferably 0.1 or less. Signal accuracy may be decreased due to scattered reflection arising at the interface between the light transmission layer and adhesive layer when the difference of the refraction index between the light transmission layer and adhesive layer exceeds 0.1.

The optical disk of the invention comprises the recording layer, adhesive layer and light transmission layer sequentially laminated on at least one surface of the supporting base, and the light transmission layer mainly comprises the thermoplastic resin or vinyl-base polymer having the characteristics as described above.

The invention also provides an optical disk comprising the recording layer, adhesive layer and light transmission layer sequentially laminated on at least one surface of the supporting base plate, wherein a thermal expansion ratio as a ratio of the amount of unidirectional thermal expansion of the supporting base plate at 30°C to 80°C to the amount of unidirectional thermal expansion of the light transmission layer at 30°C to 80°C is in the range of 0.75 to 1.25, and the light transmission layer mainly comprises the thermoplastic resin.

While the ratio of thermal expansion of the supporting base plate to that of the light transmittance layer was defined to be within the range of 0.75 to 1.25 in the invention described above, the ratio is preferably within the range of 0.8 to 1.2, and more preferably, 0.9 to 1.1. The disk warps in the direction of the light transmission layer contracting during the environmental test or long term practical uses when the thermal expansion ratio is smaller than 0.75 to reduce the accuracy for reading from and writing on the recording layer. On the other hand, the disk warps in the direction of the light transmission layer expanding during the environmental test or long term practical uses when the thermal expansion ratio is larger than 1.25 to also reduce the accuracy for reading from and writing on the recording layer.

Any resins may be used as the thermoplastic resin for forming the light transmission layer of the invention, so long as a thermal expansion ratio as a ratio of the amount of unidirectional thermal expansion of the supporting base plate at 30°C to 80°C to the amount of unidirectional thermal expansion of the light transmission layer at 30°C to 80°C is in the range of 0.75 to 1.25. Such thermoplastic resin may be appropriately selected from vinyl-base resins, polycarbonate resin, polyolefin resin and cellulose resin. The resin is preferably the vinyl-base resin from the view point of the characteristics such as an ease of modification, transparency and birefringence, and the vinyl-base resin is particularly preferably the (meth)acrylic-base polymer produced by using esters of acrylic acid or methacrylic acid as a mainly monomers from the view point of the film characteristics such as transparency. When a resin mainly comprising the vinyl-base polymer as the thermoplastic resin, the resin is preferably a mixture of vinyl-base polymer A having at least one kind of proton donating atomic groups and vinyl-base polymer B having at least one kind of proton accepting atomic groups, more preferably one polymer of vinyl-base polymer A and vinyl-base polymer B has a glass transition temperature of lower than 25°C, while the other polymer has a glass transition temperature of 25°C or more. As a result, pseudo cross-links are formed by intermolecular hydrogen bond between both the atomic groups.

The hard coat layer as described above may be formed on the light transmission layer of the optical disk according to the invention.

The optical disk of the invention is favorably used for the high recording density DVD having a recording capacity of 20 GB or more.

While the light transmission layer and preferable characteristics and shape of the thermoplastic resin for forming the light transmission layer are the same as those described above in the optical disk of the invention in which the thermal expansion ratio is prescribed, these characteristics may be variously changed depending on the application fields.

The high recording density DVD having a recording capacity of as large as exceeding 20 GB will be described with reference to optical parts to which the film for optical parts of the invention is applied.

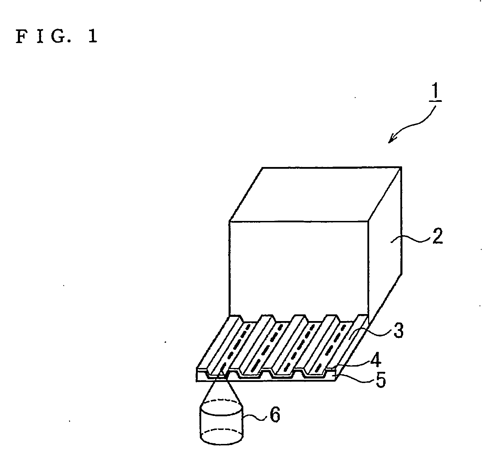

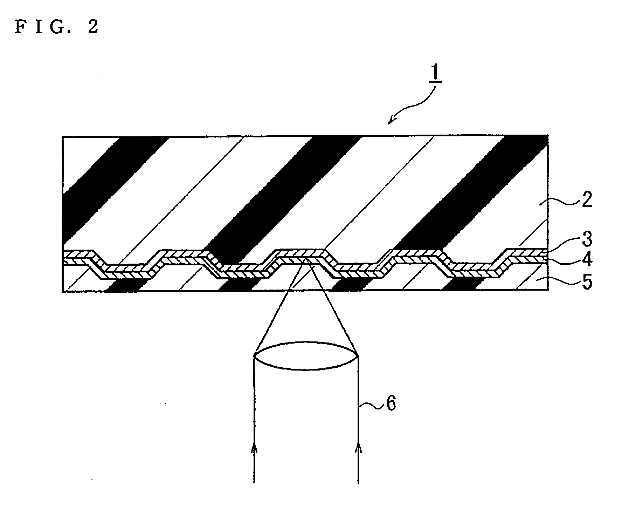

Fig. 1 is a perspective view showing a part of the structure of the high recording density DVD, and Fig. 2 shows a cross section thereof. As shown in Figs. 1 and 2, the high recording density DVD 1 comprises the recording layer 3 formed on the supporting base plate 2 and the light transmission layer 5 formed through the adhesive layer 4 on the recording layer 3.

While signal information is reproduced from and recorded on the recording layer 3 of DVD with interposition of the light transmission layer 5 by irradiating a short wavelength laser light 6 of 405 nm from the light transmission layer 5 side, the film for optical parts of the invention is applied to the high recording density DVD 1 by thinning the light transmission layer 5.

The material for constructing the DVD is not particularly restricted except that the film for optical parts is used for the light transmission layer 5, and the supporting base plate 2 and recording layer 3 may comprise conventional materials. For example, the supporting base plate 2 is composed of a plastic substrate such as polycarbonate. The material of the adhesive layer 4 is not particularly restricted so long as it does not impair transparency, and a UV curable resin and pressure sensitive adhesive film may be used.

While the thickness of the supporting base plate 2 may be in the range of 0.4 mm to 1.2 mm and the thickness of each of the recording layer 3 and adhesive layer 4 may be in the range of 30 µm to 250 µm, the preferable thickness of the recording layer 3 and adhesive layer 4 is 30 µm to 150 µm.

Any methods may be used for laminating the supporting base plate 2, recording layer 3, adhesive layer 4 and light transmittance layer 5.

The film for optical parts of the invention may be used for a base film of a liquid crystal touch panel, a base film for a flexible display and a phase difference film for a liquid crystal panel in addition to the film for DVD.

Characteristics of the film for optical parts of the invention, and characteristics of the film for optical parts of the invention when used for the light transmission layer of the optical disk have been studied in examples described hereinafter.

### [Examples]

Characteristics of the film for optical parts comprising various resin materials, and of the laminate film comprising a hard coat layer formed on the optical film were evaluated, and an optical disk using each film for optical parts and each laminate film as a light transmission layer was produced to evaluate the characteristics thereof. The materials used in examples and comparative examples are summarized in Table 1. Structural formula 36, 37 and 38 in Table 1 are as shown below.

**Table 1**

| **Name of Compounds and Structural Formula** | **Abbreviation** | **Manufacturer** |
|---|---|---|
| methyl methacrylate | MMA | Asahi Kasei Corp. |
| Butyl acrylate | BA | Wako Pure Chemical Industries, Ltd. |
| tricyclo[5.2.1.0^{2,6}]deca-8-yl methacrylate | TCDMA | Hitachi Chemical Co. Ltd. |
| acrylic acid | AA | Wako Pure Chemical Industries, Ltd. |
| cyclohexyl maleimide | CHMI | Nippon Shokubai Co. Ltd. |
| lauroyl peroxide | LPO | NOF Corp. |
| azobisisobutylonitrile | AIBN | Wako Pure Chemical Industries, Ltd |
| Structural Formula 36 | AO-50 | Asahi Denka Co., Ltd |
| Structural Formula 37 | HP-10 | Asahi Denka Co., Ltd |
| Structural Formula 38 | LA-57 | Asahi Denka Co., Ltd |
| 2,2,6,6-piperidyl methacrylate | LA-87 | Asahi Denka Co., Ltd |
| Diethylaminoethyl methacrylate | DE | Mitsubishi Rayon Mitsubishi Rayon Co.Ltd. |
| ethylenedimethacrylate | EDMA | Kyoeisha |

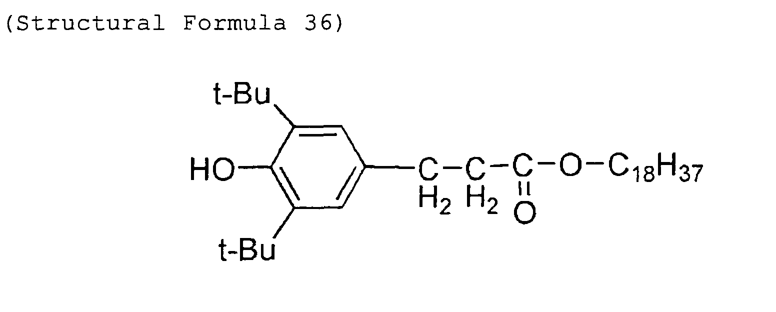

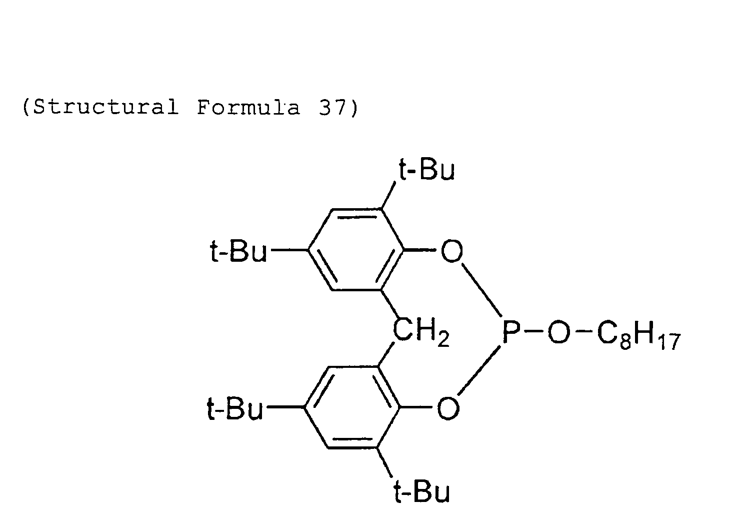

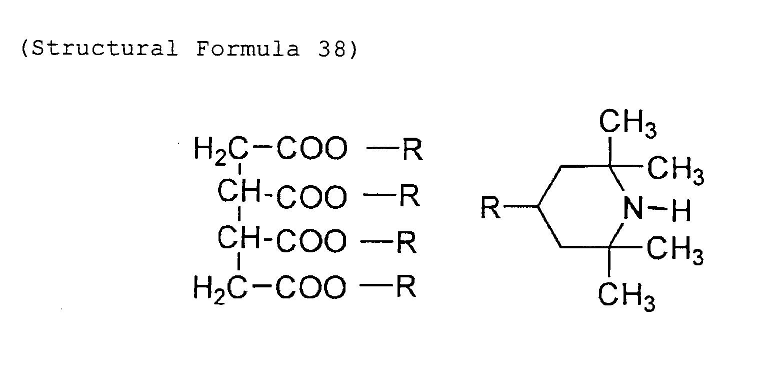

### (Example 1)

A vinyl-base polymer (an acrylic resin) was produced at first in this example, a film was formed from the vinyl-base polymer, and an optical disk was then produced using the film.

### <Production of vinyl-base polymer>

Charged in a 500 mL autoclave was 200 g of acetone as a polimerization solvent, and 66.5 g (58.4 mol%) of methyl methacrylate (MMA), 39.9 g (27.4 mol%) of butyl acrylate (BA), and 26.6 g (14.2 mol%) of cyclohexyl maleimide were weighed. After dissolving 0.4 g of lauroyl peroxide by adding to the monomer mixture as polimerization initiator, it was added to a flask. Dissolved oxygen was replaced by flowing nitrogen gas for 1 hour at room temperature (25°C), and the temperature of the solution was raised to 60°C in nitrogen stream. The temperature was kept for 18 hours to obtain an acetone solution of the vinyl-base polymer. The polymerization ratio was 99% or more.

### <Production of film>

Antioxidants known as abbreviated names AO-50 and HP-10 and a light stabilizer known as an abbreviated name LA-57 were added in the acetone solution of the vinyl-base polymer obtained in a proportion of 0.05% each relative to the vinyl-base polymer. After completely dissolving the mixture, the solution was applied on a glass plate. The solvent was removed by heating at 100°C for 10 minutes followed by heating at 150°C for 15 minutes to obtain a film with a thickness of 80 µm. An integrated value (Σtan δ) of the ratio of loss modulus to storage modulus, light transmittance, birefringence, flexibility, accuracy of thickness, surface smoothness and haze were evaluated using the film obtained as an evaluation sample by the following measuring methods. The results are summarized in Table 2 hereinafter.

### [Integrated value (Σtan δ) of ratio of loss modulus/storage modulus]

Σtan δ in the temperature range of 30°C to 80°C was measured with respect to an evaluation sample with a thickness of about 80 µm using a dynamic viscoelastometer. In the measuring conditions, the measuring mode was a tension mode with a heating speed of 3°C/minute, a measuring frequency of 10 Hz and a chuck-to-chuck distance of 10 mm. The dynamic viscoelastometer used was DVE-4V, manufactured by Rheometer Co.

### [Light ransmittance (o)]

Light transmittance at a wavelength of 405 nm was measured at room temperature (25°C) using a spectrophotometer. The measuring apparatus used was V-570, manufactured by JASCO.

### [Birefringence (nm)]

Birefringence was measured using Elipsometer AEP-100, manufactured by Shimadzu Corp.

### [Flexibility]

Flexibility was determined by visual observation of appearance of cracks and the degree of whitening by bending the film. The film was ranked as "good" when no breakage, cracks and whitening were observed, and the broken film was ranked as "poor".

### [Film thickness (µm) and accuracy of thickness (µm)]

The thickness and accuracy of the thickness of the film were measured with a laser focus displacement meter (LT-8100, manufactured by Keyence Corp.) using a square film of 12 cm x 12 cm.

Four sides of the square film were named as straight lines A, B, C and D, respectively, wherein the straight line facing straight line A was defined to be straight line C while the straight line facing straight line B was defined to be straight line D. Three parallel straight lines with a distance of 3 cm to one another from straight line A to straight line C were named as straight lines A1, A2 and A3, respectively, and the thickness of the film at each point on each straight line was measured by the following procedure with respect to a total of five lines (three parallel straight lines A1, A2 and A3, and straight line A and straight line C). A point 1 cm inside of the square from an end of straight line A was defined to be a reference point, and the thickness of the film was measured from the reference point to the other end of straight line A with respect to each point with a distance of 1 mm to one another. A total of 101 points in a length of 10 cm from the other end of the straight line to 1 cm inside of the square were measured. The thickness of the film was measured by the same method as in straight line A with respect to straight lines A1, A2, A3 and C, and a total 505 points were measured for five straight lines. The thickness of the film at each point of a total of 505 points of five straight lines from straight line B to straight line D (straight lines B, B1, B2, B3 and D) was measured by the same method as in each straight line from straight line A to straight line C. Finally, an average value of each thickness at a total of 1010 points in the square measured by the methods as described above was calculated to determine the thickness of the film.

A difference obtained by subtracting the average thickness from the maximum thickness, and a difference obtained by subtracting the minimum value of the thickness from the average thickness were calculated, and the larger values of the subtracted values was defined to be the accuracy of thickness.

### [Surface smoothness (nm)]

Surface roughness in a width of 15 µm was measured using an apparatus (AFM, manufactured by Seiko Instrument Co.) for determining the surface smoothness. The surface roughness was measured at a total of five points in the width of 15 µm including a central point of the square with an area of 12 cm × 12 cm, and each point 1 cm inside from the center of each of the four sides of the square. The magnitude of the roughness at the point having the largest roughness was defined to be surface smoothness.

### [Haze (%)]

Haze was measured using a haze meter (HGM-2, manufactured by Suga Test Instruments Co. Ltd.) at room temperature.

### <Manufacture of optical disk>

An adhesive film (5511, Sekisui Chemical Co., Ltd) was laminated at a thickness of 20 µm on a polycarbonate supporting base plate with a diameter of 12 cm and a thickness of 1.1 mm with interposition of a recording layer, and the film prepared above was further laminated on the adhesive film to manufacture an optical disk.

Warp of the optical disk manufactured was evaluated by the following measuring method. The results are shown in Table 2 hereinafter.

### [Warp of optical disk]

The amount of warp was measured after allowing the optical disc manufactured to leave in a constant temperature and humidity chamber at 80°C and 85% RH for 100 hours. Displacement of the edge of the disk with a diameter of 12 cm from a horizontal surface was measured with a real image microscope, an angle was calculated from the measured displacement using a trigonometric function, and the calculated angle was defined to be the amount of warp of the disk.

### (Example 2)

A film was prepared in this example by the same method as in Example 1, except that no antioxidant and light stabilizer was added, and an optical disk was manufactured using the film. Characteristics of the film and disk were evaluated by the same method as in Examples 1. The results are summarized in Table 2.

### (Example 3)

After independently producing two kinds of vinyl-base polymers as described below, a film was prepared using a resin mixture in which both vinyl-base polymers were mixed in a prescribed ratio. An optical disk was manufactured using the film. The disk was evaluated by the same method as in Example 1, except that the resin used for the film was changed. The results are summarized in Table 2.

### <Production of vinyl-base polymer>

Vinyl-base polymer A was produced by the following procedure. Charged in a 500 mL autoclave was 200 g of acetone as a polymerization solvent, and 38 g (33 mol%) of methyl methacrylate (MMA), 90 g (61 mol%) of butyl acrylate (BA), and 5 g (6 mol%) of acrylic acid (AA) were weighed. After dissolving 0.4 g of lauroyl peroxide as a polymerization initiator by adding to the monomer mixture, the mixture was added into a flask. After replacing dissolved oxygen by flowing nitrogen gas for 1 hour at room temperature, the temperature of the reaction mixture was raised to 60°C in a nitrogen stream. A polymer solution, or an acetone solution of vinyl-base polymer A was obtained by keeping the temperature for about 18 hours. The polymerization ratio was 98% or more, and the weight average molecular weight of the polymer was 255,000.

Vinyl-base polymer B was produced by the following procedure. Charged in a 500 mL autoclave was 200 g of acetone as a polymerization solvent, and 88.8 g (81.6 mol%) of methyl methacrylate (MMA), 37.1 g (15.5 mol%) of tricyclo[5.2.1.0 ^{2,6}]deca-8-yl methacrylate (TCDMA) and 7.1 g(2.9mol%)of 2,2,6,6-tetramethylpiperidyl methacrylate were weighed. After dissolving 0.4 g of azobisisobutylonitrile as a polymerization initiator by adding it to the monomer mixture, the mixture was added into a flask. After replacing dissolved oxygen by flowing nitrogen gas for 1 hour at room temperature, the temperature of the reaction mixture was raised to 60°C in a nitrogen stream. An acetone solution of vinyl-base polymer B was obtained by keeping the temperature for about 18 hours. The polymerization ratio was 98% or more, and the weight average molecular weight of the polymer was 75,000.

### <Preparation of film>

A mixture of the vinyl-base polymers was obtained by mixing the acetone solution of vinyl-base polymer A and the acetone solution of vinyl-base polymer B in a weight ratio of 5:5 (molar ratio of the carboxylic acid to the amino group of 2.2/1). Then, the antioxidant represented by structural formula (35) was completely dissolved by adding in a proportion of 0.1% relative to the amount of the vinyl-base polymer mixture. The solution obtained was applied on a glass plate, and the applied solution was dried by heating at 100°C for 10 minutes followed by heating at 150°C for 15 minutes to remove the solvent to obtain a film with a thickness of about 100 µm.

### (Example 4)

A film and an optical film were manufactured by the same method as in Example 3, except that the mixing ratio of vinyl-base polymer A and vinyl-base polymer B shown in Example 3 was changed. Practically, the resin used was prepared by mixing the acetone solution of vinyl-base polymer A and the acetone solution of vinyl-base polymer B were mixed in a weight ratio of 3:7. Various characteristics of the film and optical disk were evaluated by the same method as in Example 1. The results are summarized in Table 2.

### (Comparative Example 1)

A film and an optical disk were produced by the same method as in Example 3 in this example, except that the film was prepared using only the acetone solution of vinyl-base polymer B. The film and optical disk were evaluated as in Example 1. The results are summarized in Table 2.

### (Comparative Example 2)

A film and an optical disk were produced by the same method as in Example 1 in this example, except that the film was prepared using the vinyl-base polymer produced by the following method. The film and optical disk were evaluated as in Example 1. The results are summarized in Table 2.

### <Production of vinyl-base polymer>

Charged in a 500 mL autoclave was 200 g of acetone as a polymerization solvent, and 92.0 g (77.1 mol%) of methyl methacrylate (MMA), 14.4 g (9.4 mol%) of butyl acrylate (BA) and 26.6 g (13.5 mol%) of cyclohexyl maleimide were weighed. After dissolving 0.4 g of lauroyl peroxide as a polymerization initiator by adding to the monomer mixture, the mixture was added into a flask. After replacing dissolved oxygen by flowing nitrogen gas for 1 hour at room temperature, the temperature of the reaction mixture was raised to 60°C in a nitrogen stream. An acetone solution of vinyl-base polymer was obtained by keeping the temperature for about 18 hours. The polymerization ratio was 99% or more.

**Table 2**

| Evaluation of Characteristics | | Example | | | | Comparative Example | |
|---|---|---|---|---|---|---|---|
| | | 1 | 2 | 3 | 4 | 1 | 2 |
| Film | Σtan δ | 2.5 | 2.5 | 8.5 | 5.6 | 1.3 | 1.8 |
| | Light Transmittance (%) | 89.5 | 88.5 | 91.2 | 91.5 | 89.7 | 90.1 |
| | Birefringence(nm) | 1.2 | 1.3 | 0.1 | 0.15 | 1.5 | 1.3 |
| | Flexibility | Good | Good | Good | Good | Poor | Poor |
| | Thickness (µm) | 80 | 80 | 80 | 80 | 80 | 80 |
| | Error of Thickness (µm) | 1 | 0.9 | 0.9 | 1.2 | 1.2 | 1.5 |
| | Surface Smoothness (nm) | 5 | 4 | 5 | 5 | 5 | 5 |
| | Haze (%) | 0.4 | 0.5 | 0.4 | 0.5 | 0.3 | 0.4 |
| Optical disk | Amount of Warp | 0.15 | 0.15 | 0.1 | 0.2 | 0.8 | 1.2 |

As shown in Table 2, although Σtan δ was less than 2, light transmittance was high and birefringence was low in Comparative Examples 1 and 2, the disk was warped. On the other hand, Σtan δ was 2 or more, light transmittance was high and birefringence was low while warp of the disk was reduced in Examples 1 to 4.

### (Example 5)

In this example, a vinyl-base polymer (an acrylic resin) was produced at first, and a film was formed from the vinyl-base polymer. A precursor of a hard coat layer was laminated on the film by coating, and an optical disk was manufactured using the laminated film after curing by heating.

### <Production of vinyl-base polymer>

After charging 1279 g of acetone as a polymerization solvent in a 4 L stainless steel autoclave with a withstand pressure of 2.3 kg/cm²G, 532 g (58.4 mol%) of methyl methacrylate (MMA), 319 g (27.4 mol%) of butyl acrylate (BA), and 213 g (14.2 mol%) of cyclohexyl maleimide were weighed. After dissolving 3.2 g of lauroyl peroxide as a polymerization initiator by adding into the monomer mixture, the mixture was added to a flask. Dissolved oxygen was replaced by flowing nitrogen gas for about 1 hour at a room temperature (25°C), and the temperature of the reaction mixture was raised to 60°C. The temperature was kept for about 18 hours to obtain an acetone solution of the vinyl-base polymer. The polymerization ratio was 99% or more.

### <Preparation of film>

Antioxidants represented by abbreviation names of AO-50 and HP-10, and a light stabilizer represented by an abbreviation name of LA-57 were added to the acetone solution of the vinyl-base polymer in a proportion of 0.5% each relative to the vinyl-base polymer. This solution was applied at a speed of 3 m/minutes on a PET film (Cosmo Shine A-4100, Toyobo Co.) as a base layer film using a coating machine equipped with Comma coater head (Hirano Tecseed Co., Ltd.), and a film was formed by allowing the applied solution to continuously pass through a drying passageway at 50°C for 3 minutes and a drying passageway at 140°C for 3 minutes. The thickness of the film was 80 µm.

The film obtained was used as an evaluation sample, and the thickness of the film, accuracy of the thickness, surface smoothness, integrated value of the ratio of the loss modulus to the storage modulus (Σtan δ), light transmittance, birefringence, flexibility and haze were evaluated by the measuring methods described above. The results of evaluation are summarized in Table 3 hereinafter.

### <Preparation of hard coat (HC) layer>

A solution of a hard coat precursor was prepared by adding 3.3% by weight of a 15% aqueous solution of tetramethylammonium hydroxide (manufactured by Wako Pure Chemical Industries, Ltd.) to the solid fraction of the hard coat precursor (x-12-2006). This solution was applied on the film prepared above using a coating machine equipped with Comma coater head, Hirano Tecseed Co., Ltd., and a laminated film was formed by allowing the applied solution to continuously pass through a drying passageway at 50°C for 3 minutes and a drying passageway at 150°C for 3 minutes. The thickness of the laminated film was 85 µm. Since the thickness of the film is 80 µm, the thickness of the hard coat layer is 5 µm. A pencil hardness and adhesivity of the hard coat layer, and the thickness of the laminated film, accuracy of the thickness, surface smoothness, light transmittance, birefringence, flexibility, haze and scratch resistance were measured. The pencil hardness and adhesivity of the hard coat layer, and scratch resistance of the laminated film were measured by the following measuring methods, and other properties were measured as described previously. The results of evaluation are summarized in Table 3 hereinafter.

### [Pencil hardness of hard coat layer]

After applying a solution prepared by adding 3.3% by weight of a 15% aqueous solution of tetramethylammonium hydroxide (manufactured by Wako Pure Chemical Industries, Ltd.) relative to the solid fraction of the hard coat precursor on a glass plate, the applied solution was heated at 50°C for 3 minutes followed by immediate heating at 150°C for 3 minutes to prepare a hard coat layer. Pencil hardness of the hard coat layer was measured according to JIS K5400.

### [Adhesivity of hard coat layer]

Ten checkers with a dimension of 1 cm or more were cut with a distance of 1 mm to one another on the surface of the hard coat layer of the laminated film, and an adhesive tape was bonded thereon. The tape was instantaneously peeled, and the number of peeled checkers was divided by the total number of the checkers to obtain a measure of adhesivity.

### [Scratch resistance of laminated film]

Scratch resistance of the laminated film was measured under a load of 250 g with a rotation speed of a wear ring (CSF-1) of 100 rpm using a wear tester, and haze after the test was used as a measure of scratch resistance.

### <Manufacture of optical disk>

An adhesive film (5511, Sekisui Chemical Co., Ltd.) was laminated at a thickness of 20 µm on a supporting base plate made of polycarbonate with a diameter of 12 cm and thickness of 1.1 mm with interposition of a recording layer. The laminated film prepared as described above was laminated on the adhesive film so that the hard coat layer is outside to prepare the optical disk. Warp of the optical disk was measured by the same method as described above. The results are shown in Table 3 hereinafter.

### (Example 6)

A film was prepared by the same method as in Example 5, except that no antioxidant and light stabilizer were added, and a laminated film and an optical disk were manufactured using the film above by the same method as in Example 5. Various characteristics were evaluated by the same methods as in Example 5. The results are summarized in Table 3.

### (Example 7)

After independently producing two kinds of vinyl-base polymers as described below in this example, a film was formed using a mixture of both resins in a prescribed ratio, and a hard coat precursor was applied on the film. The hard coat layer was cured by heating to manufacture an optical disk using the laminated disk. The optical disk was evaluated by the same procedure as in Example 5, except that the resins used for the film were changed. The results are summarized in Table 3. The thickness of the hard coat layer was 2 µm.

### <Production of vinyl-base polymer>

Vinyl-base polymer A was produced by the following procedure. After charging 1279 g of acetone as a polymerization solvent in a 4 L stainless steel autoclave with a withstand pressure of 2.3 kg/cm²G, 304 g (33 mol%) of methyl methacrylate (MMA), 720 g (61 mol%) of butyl acrylate (BA), and 40 g (6 mol%) of acrylic acid (AA) were weighed. After dissolving 0.4 g of lauroyl peroxide as a polymerization initiator by adding into the monomer mixture, the mixture was added to a flask. Dissolved oxygen was replaced by flowing nitrogen gas for about 1 hour at a room temperature, and the temperature of the reaction mixture was raised to 60°C. The temperature was kept for about 18 hours to obtain an acetone solution of the polymer, or an acetone solution of vinyl-base polymer A. The polymerization ratio was 98% or more, and the weight average molecular weight was 255,000.

Vinyl-base polymer B was produced by the following procedure. After charging 1279 g of acetone as a polymerization solvent in a 4 L stainless steel autoclave with a withstand pressure of 2.3 kg/cm²G, 710 g (81.6 mol%) of methyl methacrylate (MMA), 297 g (15.5 mol%) of tricyclo [5. 2 . 1 .0^{2,6}] deca-8-yl methacrylate (TCDMA) and 57g (2.9 mol%) of 2,2,6,6,-tetramethylpiperidyl methacrylate were weighed. After dissolving 3.2 g of azobisisobutylonitrile as a polymerization initiator by adding into the monomer mixture, the mixture was added to a flask. Dissolved oxygen was replaced by flowing nitrogen gas for about 1 hour at a room temperature, and the temperature of the reaction mixture was raised to 60°C. The temperature was kept for about 18 hours to obtain an acetone solution of vinyl-base polymer B. The polymerization ratio was 98% or more, and the weight average molecular weight was 75,000.

### <Preparation of film>

After preparing a mixture of vinyl-base polymers by mixing the acetone solution of vinyl-base polymer A and the acetone solution of vinyl-base polymer B in a weight ratio of 5:5 (molar ratio of (the carboxylic acid)/(the amino group) is 2.2/1), the antioxidant shown by structural formula (35) was added and completely dissolved in a proportion of 0.1% relative to the mixture of the vinyl-base polymers. The solution obtained was applied on a PET film (Cosmoshine A-4100,Toyobo Co.) as a base film at a speed of 3 m/minute using a coating machine equipped with a Comma coater head, Hirano Tecseed Co., Ltd. The applied solution was allowed to pass through a drying passageway at 50°C for 3 minutes and through a drying passageway at 140°C for 3 minutes to form a film. The thickness of the film was 100 µm.

### (Example 8)

A film, a laminated film and an optical disk were manufactured in this example by the same method as in Example 7, except that the film was prepared by changing the mixing ratio of vinyl-base polymer A and vinyl-base polymer B each prepared in Example 7, and the thickness of the film that serves as a light transmission layer and the thickness of the hard coat layer were adjusted to 80 µm and 5 µm, respectively. Practically, the resin used was prepared by mixing the acetone solution of vinyl-base polymer A and the acetone solution of vinyl-base polymer B in a weight ratio of 3:7. Various characteristics of the film and optical disk were evaluated as in Example 5. The results are summarized in Table 3.

### (Comparative Example 3)

A film, a laminated film and an optical disk were manufactured by the same method as in Example 7, except that the film was prepared only from the acetone solution of vinyl-base polymer B, and the thickness of the film was 80 µm. Various characteristics of the film and optical disk were evaluated. The results are summarized in Table 3.

### (Comparative Example 4)

A film, a laminated film and an optical disk were manufactured by the same method as in Example 5, except that the vinyl-base polymer produced by the following method was used for the material of the film, and the hard coat layer was formed with a thickness of 0.5 µm. Various characteristics of the film and optical disk were evaluated as in Example 5. The results are summarized in Table 3.

### <Production of vinyl-base polymer>

After charging 1279 g of acetone as a polymerization solvent in a 4 L stainless steel autoclave with a withstand pressure of 2.3 kg/cm²G, 736 g (77.1 mol%) of methyl methacrylate (MMA), and 115 g (9.4 mol%) of butyl acrylate (BA), and 213 g (13.5 mol%) of cyclohexyl maleimide were weighed. After dissolving 3.2 g of lauroyl peroxide as a polymerization initiator by adding into the monomer mixture, the mixture was added to a flask. Dissolved oxygen was replaced by flowing nitrogen gas for about 1 hour at a room temperature, and the temperature of the reaction mixture was raised to 60°C. The temperature was kept for about 18 hours to obtain an acetone solution of a vinyl-base polymer. The polymerization ratio was 99% or more.

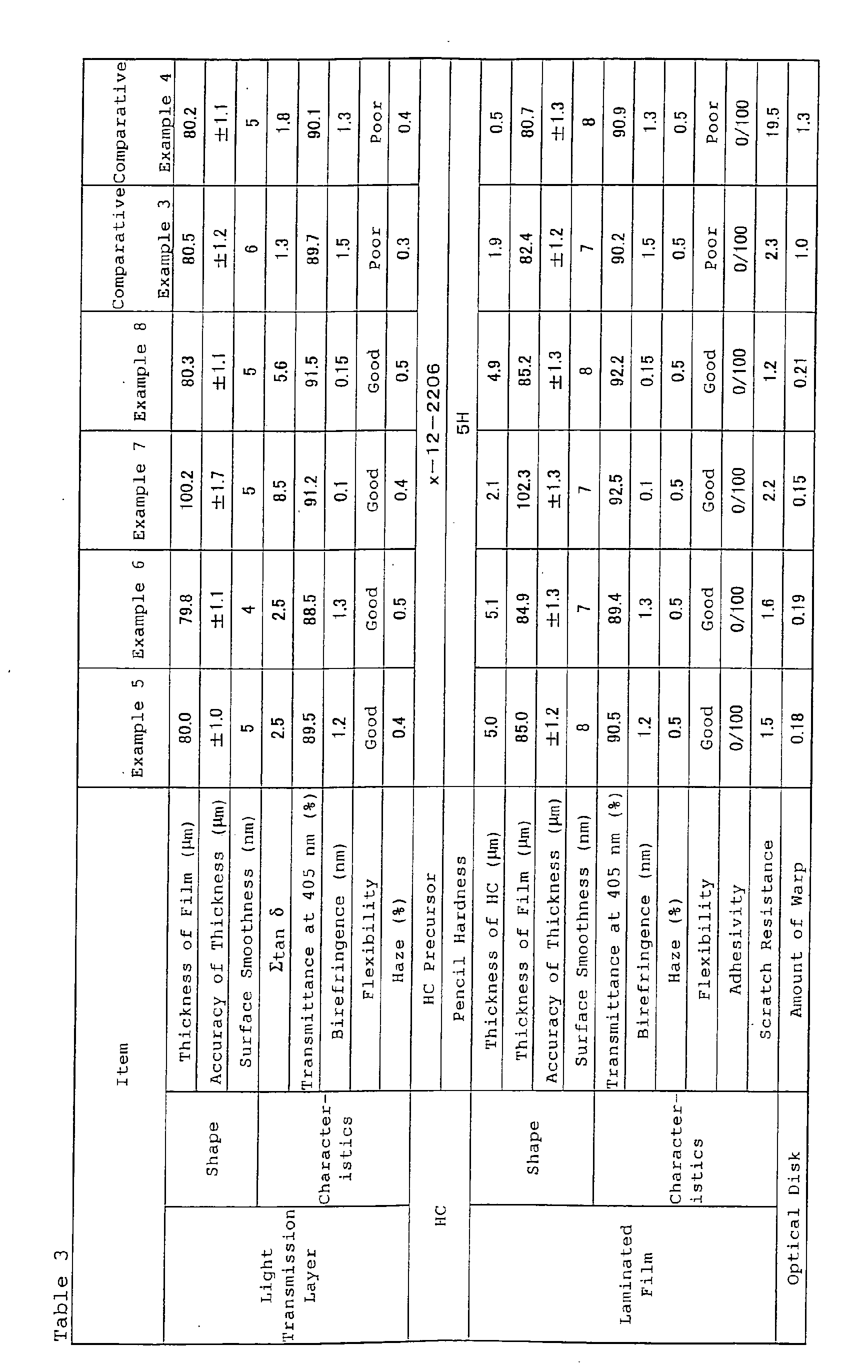

As shown in Table 3, the disk was warped in Comparative Example 3 and 4, although the value of Σtan δ is less than 2, light transmittance is high and birefringence is low, warp of the disk was arose. Scratch resistance was high in Comparative Example 4. On the other hand, the samples in Examples 5 to 8 have Σtan δ of 2 or more, light transmittance is high and birefringence are low while warp of the disk is reduced and scratch resistance is good.

### (Example 9)

Vinyl-base polymer A and vinyl-base polymer B were produced at first in this example, a film was prepared from the mixed vinyl-base polymer obtained from the vinyl-base polymers above, and an optical disk was manufactured using the film.

### <Production of vinyl-base polymer A>

After charging 200 g of acetone as a polymerization solvent in a 500 mL autoclave, 128 g (93.5 mol%) of butyl methacrylate (MA) and 5 g (6.5 mol%) of acrylic acid (AA) were weighed. After dissolving 0.4 g of lauroyl peroxide as a polymerization initiator by adding into the monomer mixture, the mixture was added to a flask. Dissolved oxygen was replaced by flowing nitrogen gas for about 1 hour at a room temperature, and the temperature of the reaction mixture was raised to 60°C. The temperature was kept for about 18 hours to obtain an acetone solution of a vinyl-base polymer A. The polymerization ratio was 99% or more, the weight average molecular weight was 250,000, and the glass transition temperature was -35°C.

The glass transition temperature (Tg) was measured by DVA. The measuring apparatus used was Rheospectoler DVE-V4 (manufactured by UBM Co.,Ltd.). As the measuring condition, a tensile elastic modulus was measured at a heating rate of 3.0°C/minutes and a frequency of 10.0 Hz. A peak top of tan δ was defined to be Tg among the obtained data. The conditions for measuring the glass transition temperature hereinafter were the same.

### [Production of vinyl-base polymer B]

After charging 200 g of acetone as a polymerization solvent in a 500 mL autoclave, 88.8 g (81.6 mol%) of methyl methacrylate (MMA), 37. g (15.5 mol%) of tricyclo [5.2.1.0^{2,6}]deca-8-yl methacrylate (TCDMA), 7.1 g (29 mol%) of 2,2,6,6-tetramethylpiperidyl methacrylate were weighed. After dissolving 0.4 g of azobisisobutylonitrile as a polymerization initiator by adding into the monomer mixture, the mixture was added to a flask. Dissolved oxygen was replaced by flowing nitrogen gas for about 1 hour at a room temperature, and the temperature of the reaction mixture was raised to 60°C. The temperature was kept for about 18 hours to obtain an acetone solution of a vinyl-base polymer B. The polymerization ratio was 99% or more, the weight average molecular weight was 75,000, and the glass transition temperature was 115°C.

### [Preparation of film]

After mixing the acetone solution of vinyl-base polymer A and the acetone solution of vinyl-base polymer B in a weight ratio of 4:6 and completely dissolving the polymers, the solution was applied on a glass plate. The applied solution was dried at 100°C for 10 minutes followed by drying at 150°C for 15 minutes by heating to remove the solvent, and a film with a thickness of 80 µm was prepared. The film obtained was evaluated with respect to an integrated value of ratio of the loss modulus to the storage modulus (Σtan δ), flexibility, film thickness, light transmittance and birefringence. The results of evaluation are summarized in Table 4 hereinafter.

### <Manufacture of optical disk>

An adhesive layer (5511, Sekisui Chemical Co., Ltd) was laminated on a supporting base plate made of polycarbonate having a diameter of 12 cm and a thickness of 1.1 mm at a thickness of 20 µm with interposition of a recording layer. An optical disk was manufactured by laminating the prepared film on the adhesive film. The optical disk manufactured was evaluated with respect to the amount of warp by the measuring method as described above. The results are shown in Table 4 hereinafter.

### (Example 10)

A film was prepared by the same procedure as in Example 9, except that, and the mixing ratio of vinyl-base polymer A and vinyl-base polymer B produced by the same method as in Example 9 was changed. An optical disk was manufactured thereafter by the same procedure as in Example 9 using the film prepared, and the amount of warp of the manufactured optical disk was evaluated. Evaluations of various characteristics were the same as in Example 9.

Practically, the acetone solution of vinyl-base polymer A and the acetone solution of vinyl-base polymer B were mixed in a weight ratio of 3:7, and the polymers were completely dissolved. The solution was applied on a glass plate, and the applied solution was dried at 100°C for 10 minutes followed by drying at 150°C for 15 minutes to remove the solvent. A film with a thickness of 80 µm was prepared as an evaluation sample.

### (Example 11)

A film was prepared by using vinyl-base polymer A produced by the same method as in Example 9 and vinyl-base polymer B produced by the method shown below in this example. Both vinyl-base polymers were mixed in a weight ratio of 3:7 to produce the film from the mixed polymer, and an optical was manufactured using the film. Characteristics of the film and disk were evaluated as in Example 9.

### [Production of vinyl-base polymer B]

After charging 200 g of acetone as a polymerization solvent in a 500 mL autoclave, 86.6 g (79.8 mol%) of methyl methacrylate (MMA), 37.0 g (15.5 mol%) of tricyclo[5.2.1.0^{2,6}]deca-8-yl methacrylate (TCDMA), and 9.4 g (4.7 mol%) of diethylaminoethyl methacrylate were weighed. After dissolving 0.4 g of azobisisobutylonitrile as a polymerization initiator by adding into the monomer mixture, the mixture was added to a flask. Dissolved oxygen was replaced by flowing nitrogen gas for about 1 hour at a room temperature, and the temperature of the reaction mixture was raised to 60°C. The temperature was kept for about 18 hours to obtain an acetone solution of a vinyl-base polymer B. The polymerization ratio was 99% or more, the weight average molecular weight was 72,000, and the glass transition temperature was 115°C.

### (Example 12)

In this example, the film prepared in Example 9 was used for the light transmission layer, and a hard coat precursor was laminated by coating on the film. The hard coat layer was cured by heating, and an optical disk was manufactured using the laminated film. Pencil hardness of the hard coat layer and scratch resistance of the laminated film were measured by the same method as in Example 5, and The other characteristics of the film and optical disk were evaluated as in Example 9.

### (Hard coat precursor)

In a 4 L stainless steel autoclave with a withstand pressure of 2.3 kg/cm²G, 1200 g of butanol (manufactured by Wako Pure Chemical Industries, Ltd.) was charged, 32 g of tetraethoxy silane (Manufactured by Shin-Etsu Chemical Co. Ltd.), 187.6 g of methyltriethoxy silane (Manufactured by Shin-Etsu Chemical Co. Ltd.) and 180.4 g of dimethyldiethoxy silane (Manufactured by Shin-Etsu Chemical Co. Ltd.) were weighed, and 80 g of distilled water was added with stirring. Thereafter, 0.04 g of an aqueous 10% potassium hydroxide solution was added, and the temperature was raised to 60°C with stirring. A hard coat precursor was obtained by keeping the temperature for 2 hours. The solid fraction of the precursor was 20%.

### (Preparation of hard coat layer)

A solution of the hard coat precursor was prepared by adding 3.3% by weight of a 15% aqueous solution of tetramethylammonium hydroxide (manufactured by Wako Pure Chemical Industry Industries, Ltd.) relative to the solid fraction of the hard coat precursor obtained. This solution was applied on the film prepared in Example 1 using a coating machine equipped with a Comma coater head, Hirano Tecseed Co., Ltd., and a laminated film was formed by allowing the coated film to pass through a drying passageway at 50°C for 3 minutes followed by to pass through a passageway at 150°C for 3 minutes. Since the thickness of the laminated film was 83 µm, the thickness of the hard coat layer is calculated to be 3 µm by subtracting the thickness of the light transmission layer from the total thickness.

### (Comparative Example 5)

The same method as in Example 11 was used in this example except that a film was formed from only the acetone solution of vinyl-base polymer B. Evaluations of the characteristics of the film and optical disk were the same as in Example 9.

### (Example 6)

A film and an optical disk were manufactured in this example by using vinyl-base polymer A produced by the method shown below and vinyl-base polymer B produced by the same method as in Example 9.

### [Production of vinyl-base polymer A]

After charging 200 g of acetone as a polymerization solvent in a 500 mL autoclave, 133 g (100 mol%) of butyl acrylate (BA) was weighed. After dissolving 0.4 g of lauroyl peroxide as a polymerization initiator by adding into the monomer mixture, the mixture was added to a flask. Dissolved oxygen was replaced by flowing nitrogen gas for about 1 hour at room temperature, and the temperature of the reaction mixture was raised to 60°C. The temperature was kept for about 18 hours to obtain an acetone solution of a vinyl-base polymer A. The polymerization ratio was 99% or more, the weight average molecular weight was 260,000, and the glass transition temperature was -40°C.

The acetone solution of vinyl-base polymer A and the acetone solution of vinyl-base polymer B were mixed in a weight ratio of 4:6, the polymers were completely dissolved, and the solution was applied on a glass plate. Although the applied solution was dried by heating at 100°C for 10 minutes, further at 150°C for 15 minutes to remove the solvent, it was impossible to form the solution into a film. Accordingly, only light transmittance of the polymer was measured.

Characteristics of the films and optical disks manufactured by the methods in Examples 9 to 12 and Comparative Examples 5 and 6 were evaluated. The results are shown in Table 4. The molar ratio of the carboxylic group to the amino group is also shown in Table 4. The molar ratio of the carboxylic group to the amino group calculated the carboxylic groups which exists in a prescribed amount of vinyl-base polymer A and the amino groups which exists in a prescribed amount of vinyl-base polymer B before mixing vinyl-base polymer A and vinyl-base polymer B in a prescribed ratio, and determined from the calculated ratio.

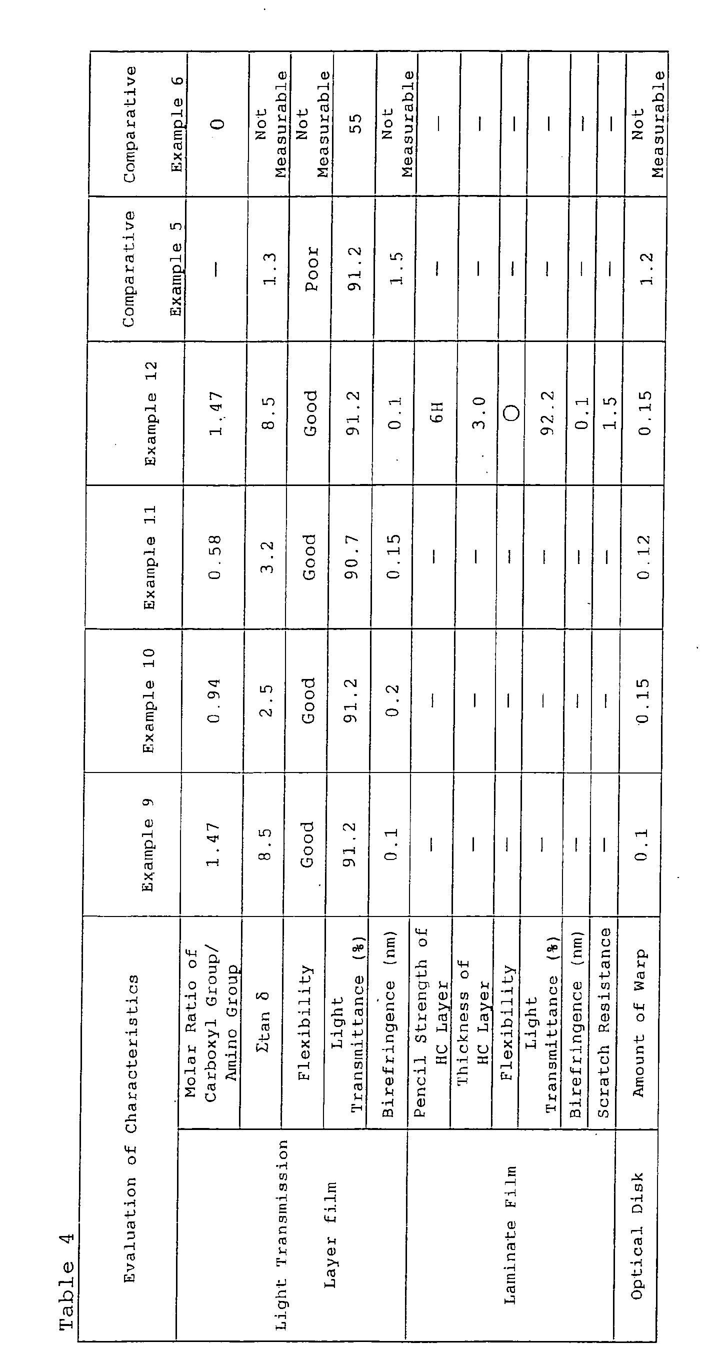

Since the molar ratio of the carboxylic acid to the amino acid is zero in Comparative Example 6 as shown in Table 4, no film-forming ability was observed and light transmittance was as low as 5.5%. Although Σtan δ was as low as 1.3 and light transmittance was high in Comparative Example 5, flexibility and birefringence of the film were high, the disk is warped,. On the contrary, since Σtan δ was 2 or more in Examples 9 to 11, the flexibility of the film was adequate while light transmittance was high and birefringence was low in addition to reduced degree of warp of the disk. The film in Example 12 was excellent in scratch resistance since the hard coat layer was formed on the film.

### (Example 13)

Vinyl-base polymer (acrylic resin) comprising vinyl-base polymer A having proton-donating atomic groups as described below and vinyl-base polymer B having proton-accepting atomic groups was produced in this example. A film was formed from the vinyl-base polymer, and an optical disk was manufactured using the film.

### <Production of vinyl-base polymer>

### [Production of vinyl-base polymer A having proton-donating atomic groups]

After charging 200 g of acetone as a polymerization solvent in a 500 mL autoclave, 56.1 g (29 mol%) of tricyclo[5.2.1.0^{2,6}]deca-8-yl methacrylate (TCDMA), 73.1 g (65 mol%) of butyl acrylate (BA) and 3.8 g (6 mol%) of acrylic acid (AA) were weighed. After dissolving 0.4 g of lauroyl peroxide as a polymerization initiator by adding into the monomer mixture, the mixture was added to a flask. Dissolved oxygen was replaced by flowing nitrogen gas for about 1 hour at a room temperature (25°C), and the temperature of the reaction mixture was raised to 60°C. The temperature was kept for about 18 hours to obtain an acetone solution of a vinyl-base polymer A having proton-donating atomic groups. The polymerization ratio was 98% or more.

### [Production of vinyl-base polymer B having proton-accepting atomic groups]

After charging 200 g of acetone as a polymerization solvent in a 500 mL autoclave, 88.8 g (81.6 mol%) of methyl methacrylate (MMA), 37.1 g (15.5 mol%) of tricyclo[5.2.1.0^{2,6}]deca-8-yl methacrylate (TCDMA) and 7.1 g (2.9 mol%) of 2,2,6,6-tetramethylpiperidyl methacrylate were weighed. After dissolving 0.4 g of azobisbutylonitrile as a polymerization initiator by adding into the monomer mixture, the mixture was added to a flask. Dissolved oxygen was replaced by flowing nitrogen gas for about 1 hour at a room temperature (25°C), and the temperature of the reaction mixture was raised to 60°C. The temperature was kept for about 18 hours to obtain an acetone solution of a vinyl-base polymer B. The polymerization ratio was 98% or more.

### <Production of film for light transmission layer >

A mixture of vinyl-base polymers was obtained by mixing vinyl-base polymer A having proton-donating atomic groups and vinyl-base polymer B having proton-accepting atomic groups, obtained above, in 4:6 weight ratio. Antioxidants represented by abbreviation names of AO-50 and HP-10 were added in a proportion of 0.1% each relative to the mixture of the vinyl-base polymers. The solution was applied on a glass plate after completely dissolving the polymer. A film for the light transmission layer with a thickness of about 100 µm was formed by drying the applied solution at 100°C for 10 minutes and at 150°C for 15 minutes. The film prepared was used as an evaluation sample, and the amount of thermal expansion and thermal expansion ratio were determined by the following measuring method. Light transmittance, birefringence, thickness of the film and accuracy of the thickness were evaluated by the measuring methods as in Example 1. The results are summarized in Table 5 hereinafter.

### [Amount of thermal expansion and thermal expansion ratio]

Films with a size of 4 mm × 20 mm were prepared as evaluation test pieces from each material for forming the light transmission layer, and the amount of unidirectional thermal expansion by increasing the temperature from 30°C to 80°C was measured. A measuring apparatus SSC/5200 (manufactured by Seiko Instruments) was used at a heating rate of 2°C/minute in a tension mode. Evaluation test pieces with a size of 4 mm × 20 mm were also prepared from supporting base plates made of polycarbonate, and the amount of thermal expansion was also measured. For measuring the amount of thermal expansion, iron jigs were attached at 30°C with a gap of 10 mm at the center in the longitudinal direction of the test piece having the size above, and the length (in µm unit) of thermal expansion at 80°C was measured. The thermal expansion ratio of the film of the supporting base plate to the light transmission layer was calculated based on the measured amounts of the film for the light transmission layer and supporting base plate.

### <Manufacture of optical disk>

An adhesive film (5511, Sekisui Chemical Co., Ltd) was laminated on the supporting base plate made of polycarbonate with a diameter of 12 cm, and the film for the light transmission layer prepared above was laminated on the adhesive film to manufacture an optical disk. A difference of refraction index between the adhesive layer and light transmission layer was determined by the following method, and warp of the optical disk manufactured was evaluated by the same measuring method as in Example 1. The results are shown in Table 5 hereinafter.

### [Difference of refractive index]

Refractive index of the light transmission layer and adhesive layer were measured respectively using an Abbe's refractometer, and the difference of both measured values was calculated.

### (Example 14)

A film for the light transmission layer was prepared in this example by the same procedure as in Example 13, except that the mixing ratio between vinyl-base polymer A and vinyl-base polymer B produced by the same method as in Example 13 was changed. An optical disk was manufactured by the same procedure as in Example 13 using the film prepared. Characteristics of the film for the light transmission layer and the optical disk were evaluated by the same methods as in Example 13. The results are shown in Table 5.

Practically, acetone solutions of vinyl-base polymer A and vinyl-base polymer B were mixed in a weight ratio of 3:7. After completely dissolving the polymers, the solution was applied on a glass plate, and the applied solution was dried by heating at 100°C for 10 minutes followed by drying at 150°C for 15 minutes to remove the solvent to prepare a film with a thickness of about 100 µm to be used for an evaluation sample.

### (Example 15)

An optical disk was manufactured in this example by the same method as in Example 13, except that a film for the light transmission layer formed from one kind only of the vinyl-base polymer prepared by the method shown below was used without mixing two kinds of vinyl-base polymers. Characteristics of the film and optical disk were evaluated, and the results are shown in Fig. 5.

### <Production of vinyl-base polymer>

98 g (99 mol%) of methyl methacrylate (MMA) and 2 g (1 mol%) of ethylene dimethacrylate (EDMA) were weighed, and 0.3 g of lauroyl peroxide as a polymerization initiator was dissolved by adding it to the monomer mixture. Dissolved oxygen was removed by allowing nitrogen gas to flow at room temperature (25°C) for 1 hour, and the mixed solution was sealed in a gap between stainless steel plates having a gap of 100 µm. The plates were allowed to leave in a constant temperature bath for 18 hours for allowing the monomers to polymerize. The polymerization ratio was 99% or more. A film with a thickness of 100 µm was obtained by removing the stainless steel plates.

### (Example 16)

A film was prepared by the same procedure as in Example 13 in this example, except that the mixing ratio between vinyl-base polymer A and vinyl-base polymer B produced by the same method in Example 13 was changed. An optical disk was manufactured by the same method as in Example 13 using the film prepared. Characteristics of the film and optical disk were evaluated by the same methods as in Example 13. The results are shown in Table 5.

Practically, acetone solutions of vinyl-base polymer A and vinyl-base polymer B were mixed in a weight ratio of 5:5. After completely dissolving the polymers, the solution was applied on a glass plate. The applied solution was dried at 100°C for 10 minutes followed by drying at 150°C for 15 minutes to obtain a film for the light transmission layer with a thickness of about 100 µm. The film was used for the evaluation sample.

### (Example 17)

A film was prepared by the same procedure as in Example 13 in this example, except that the mixing ratio between vinyl-base polymer A and vinyl-base polymer B produced by the same method as in Example 13 was changed. An optical disk was manufactured by the same procedure as in Example 13 using the films prepared. Characteristics of the film and optical disk were evaluated as in Example 13. The results are shown in Table 5.

Practically, acetone solutions of vinyl-base polymer A and vinyl-base polymer B were mixed in a weight ratio of 2:8. After completely dissolving the polymers, the solution was applied on a glass plate. The applied solution was dried by heating at 100°C for 10 minutes followed by drying at 150°C for 15 minutes to prepare a film for the light transmission layer with a thickness of about 100 µm. The film was used as an evaluation sample.

### (Comparative Example 7)

A film for the light transmission layer and an optical disk were manufactured in this example by the same methods as in Example 13, except that vinyl-base polymer A having proton donating groups was produced by the following method. Characteristics of the film for the light transmission layer and the optical disk were evaluated as in Example 13. The results are shown in Table 5.

### [Vinyl-base polymer A having proton donating groups]

After charging 200 g of acetone as a polymerization solvent in a 500 mL autoclave, 58.0 g (31 mol%) of tricyclo[5.2.1.0^{2,6}]deca-8-yl methacrylate (TCDMA) and 75.0 g (69 mol%) of butyl acrylate (BA) were weighed. After dissolving 0.4 g of lauroyl peroxide as a polymerization initiator by adding into the monomer mixture, the mixture was added to a flask. Dissolved oxygen was replaced by flowing nitrogen gas for about 1 hour at room temperature (25°C), and the temperature of the reaction mixture was raised to 60°C. The temperature was kept for about 18 hours to obtain an acetone solution of a vinyl-base polymer A having proton donating groups. The polymerization ratio was 99% or more.

### (Comparative Example 8)

An optical disk were manufactured in this example by the same methods as in Example 13, except that a film for the light transmission layer prepared from only one kind of the vinyl-base polymer produced by the following method was used without mixing two kinds of vinyl-base polymers. Characteristics of the film for the light transmission layer and the optical disk were evaluated as in Example 13. The results are shown in Table 5.

### [Production of vinyl-base polymer]

After charging 200 g of acetone as a polymerization solvent in a 500 mL autoclave, 76.2 g (65 mol%) of methyl methacrylate, 37.5 g (25 mol%) of butyl acrylate (BA) and 19.2 g (10 mol%) of cyclohexyl maleimide were weighed. After dissolving 0.4 g of lauroyl peroxide as a polymerization initiator by adding into the monomer mixture, the mixture was added to a flask. Dissolved oxygen was replaced by flowing nitrogen gas for about 1 hour at a room temperature, and the temperature of the reaction mixture was raised to 60°C. The temperature was kept for about 18 hours to obtain an acetone solution of a vinyl-base polymer. The polymerization ratio was 99% or more.

### <Preparation of film>

After applying the solution obtained above on a glass plate, the applied solution was dried by heating at 100°C for 10 minutes followed by drying at 150°C for 15 minutes to prepare a film with a thickness of about 100 µm by removing the solvent. The film was used as an evaluation sample.

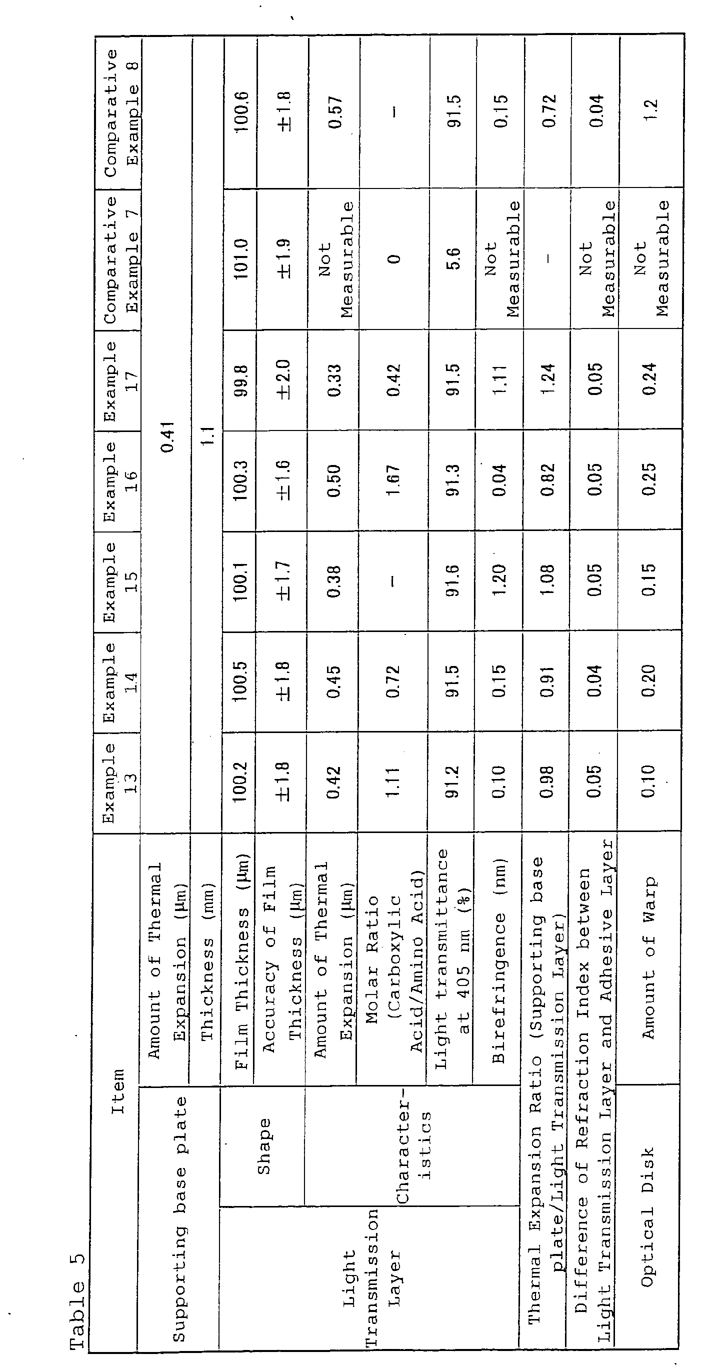

As shown in Table 5, the amount of thermal expansion of the acrylic polymer forming the light transmission layer in Comparative Example 7 could not be measured due to lack of film forming ability. The amount of warp was high in Comparative Example 8 since the thermal expansion ratio of the supporting base plate to the light transmission layer was as small as 0.72. However, the amount of warp could be reduced in Examples 13 to 17 since the thermal expansion ratio was within the range of 0.75 to 1.25.

### (Example 18)

A vinyl-base polymer (an acrylic resin) comprising vinyl-base polymer A having the following proton donating groups and vinyl-base polymer B having proton accepting groups was produced in this example. A film was formed from the vinyl-base polymer, a hard coat precursor was laminated on the film, and an optical disk was manufactured using the laminated film after curing the hard coat precursor by heating.

### <Production of vinyl-base polymer>

### [Production of vinyl-base polymer A having proton donating atomic groups]

In a 4 L stainless steel autoclave with a withstand pressure of 2.3 kg/cm²G, 1297 g of acetone was charged as a polymerization solvent, and 49 g (29 mol%) of tricyclo[5.2.1.0^{2,6}]deca-8-yl methacrylate (TCDMA), 585 g (65 mol%) of butyl acrylate (BA) and 30 g (6 mol%) of acrylic acid (AA) were weighed. Thereafter, 3.2 g of lauroyl peroxide as a polymerization initiator was added to the monomer mixture, and the mixture was added into a flask. After replacing dissolved oxygen by flowing nitrogen gas for 1 hour at room temperature (25°C), the temperature of the reaction mixture was raised to 60°C. The temperature was kept for about 18 hours to obtain a solution of vinyl-base polymer A having proton donating atomic groups. The polymerization ratio was 98% or more.

### [Production of vinyl-base polymer B having proton accepting groups]

In a 4 L stainless steel autoclave with a withstand pressure of 2.3 kg/cm²G, 1297 g of acetone was charged as a polymerization solvent, and 710 g (81.6 mol%) of methyl methacrylate (MMA), 297 g (15.5 mol%) of tricyclo [5.2.1.0^{2,6}] deca-8-yl methacrylate (TCDMA) and 57 g (2.9 mol%) of 2,2,6,6-tetramethylpiperidyl methacrylate were weighed. After dissolving 3.2 g of azobisisobutylonitrile as a polymerization initiator by adding it to the monomer mixture, the mixture was added into a flask. Dissolved oxygen was replaced by flowing nitrogen gas for 1 hour at room temperature (25°C), the temperature of the reaction mixture was raised to 60°C. The temperature was kept for 18 hours to obtain an acetone solution of vinyl-base polymer B. The polymerization ratio was 98% or more.

### <Manufacture of film for light transmission layer>

A mixture of vinyl-base polymers was obtained by mixing vinyl-base polymer A having proton donating groups and vinyl-base polymer B having proton accepting groups, obtained above, in a weight ratio of 4:6. Thereafter, antioxidants represented by abbreviated names of AO-50 and HP-10, respectively, were added in 0.1% each to the mixture of the vinyl-base polymers. After completely dissolving the antioxidants, the solution was applied on a PET film (Cosmo Shine A-4100, Toyobo Co.) as a base layer film at a coating speed of 3 m/minute using a coating machine equipped with a Comma coater head, Hirano Tecseed Co., Ltd. The coated film was allowed to continuously pass through a drying passageway at 50°C for 3 minutes and a drying passageway at 140°C for 3 minutes to form a film for the light transmission layer. The thickness of the film was 100 µm. The film prepared was used as an evaluation film, and the amount of thermal expansion and thermal expansion ratio of the film for the light transmission layer were determined by the same method as described above. Characteristics such as light transmittance, birefringence, thickness of the film and accuracy of the thickness were evaluated by the same methods as in Example 1. The results of evaluation are summarized in Table 6 hereinafter.

### <Preparation of laminated film>

A solution of a hard coat precursor was prepared by adding 3.3% by weight of a 15% aqueous solution of tetramethylammonium hydroxide (manufactured by Wako Pure Chemical Industries, Ltd.) relative to the solid fraction of the hard coat precursor. The solution was applied on the film for the light transmittance layer using a coating machine equipped with a Comma coater head, Hirano Tecseed Co., Ltd., and the coated film was allowed to continuously pass through a drying passageway at 50°C for 3 minutes and a drying passageway at 150°C for 3 minutes to form a laminated film. Since the thickness of the laminated film is 105 µm and the thickness of the film for the light transmission layer is 100 µm, the thickness of the hard coat layer is calculated to be 5 µm. The thickness of the laminated film, accuracy of the thickness, light transmittance and birefringence of the laminated film of this example were measured by the same method as in Example 1, while pencil hardness and adhesivity of the hard coat layer were measured by the same method as in Example 5. The results of evaluation are summarized in Table 6 hereinafter.

### <Manufacture of optical disk>

An adhesive film (5511, Sekisui Chemical Co., Ltd) on a supporting base plate made of polycarbonate with a diameter of 12 cm, and the laminated film prepared was further laminated on the adhesive film to manufacture an optical disk. A difference of the refraction index between the adhesive layer and light transmission layer, and the amount of warp of the optical disk were measured by the same methods as in Example 13, while scratch resistance of the optical disk was measured by the following method. The results are shown in Table 6 below.

### [Scratch resistance of optical disk]

Scratch resistance of the optical disk was measured under a load of 250 g at a rotation speed of 100 rpm with abrasion disk CSF-1, using a wear tester, and haze after the test was used as a measure of scratch resistance. Haze (%) was measured at room temperature using a haze meter (HGM-2, Suga Test Instruments Co. Ltd.)

### (Example 19)

A film for the light transmission layer was prepared in this example by the same procedure as in Example 13, except that the mixing ratio between vinyl-base polymer A and vinyl-base polymer B produced by the same methods as in Example 18 was changed. A laminated film was prepared by forming a hard coat layer on the film for the light transmission layer by the same procedure as in Example 18, and an optical disk was manufactured using the laminated film.

Practically, acetone solutions of vinyl-base polymer A and vinyl-base polymer B were mixed in a weight ratio of 3:7, and after completely dissolving the polymers, the solution was applied at a speed of 3m/minute on a PET film (Cosmo Shine A-4100, Toyobo Co.) as a base layer film using a coating machine equipped with a Comma coater head, Hirano Tecseed Co., Ltd. The coated film was dried by allowing it to pass through a drying passageway at 50°C for 3 minutes and a drying passageway at 140°C for 3 minutes to form a film for the light transmission layer. The thickness of the film for the light transmission layer was 100 µm.

Characteristics of the film for the light transmission layer, laminated film and optical disk were evaluated as in Example 18. The results are shown in Table 6.

### (Example 20)

An optical disk was manufactured in this example by the same method as in Example 18, except that a film for the light transmission layer prepared from one kind of the vinyl-base polymer only produced by the method as described below was used without mixing two kinds of the vinyl-base polymers, and the laminated film prepared by the method as described below was used. Characteristics of the film for the light transmission layer, laminated film and optical disk of this example were evaluated as in Example 18. The results are shown in Table 6.

### <Production of vinyl-base polymer>

98 g (99 mol%) of methyl methacrylate (MMA) and 2 g (1 mol%) of ethylene dimethacrylate (EDMA) were weighed, and 0.3 g of lauroyl peroxide as a polymerization initiator was dissolved by adding it to the monomer mixture. Dissolved oxygen was replaced by flowing nitrogen gas at room temperature (25°C), and the mixture was sealed between stainless plates having a gap of 100 µm. The plates was allowed to leave in a constant temperature bath at 60°C for 18 hours to permit the monomers to polymerize. The polymerization ratio was 99% or more. A film for the light transmission layer with a thickness of 100 µm was obtained by removing the stainless plates.

### <Preparation of laminated film>

A solution of a hard coat precursor was prepared by adding 3.3% by weight of a 15% aqueous solution of tetramethylammonium hydroxide relative to the solid fraction of the hard coat precursor (x-12-2206). This solution was applied on the light transmission layer using a hand coater, and a laminated film was obtained by heating at 150°C for 5 minutes after drying at 50°C for 10 minutes. The thickness of the hard coat layer was about 2 µm.

### (Example 21)

A film for the light transmission layer was prepared in this example by the same procedure as in Example 13, except that the mixing ratio between vinyl-base polymer A and vinyl-base polymer B produced by the same methods as in Example 18 was changed. A laminated film was obtained thereafter by forming a hard coat layer on the film for the light transmission layer by the same procedure as in Example 18. The thickness of the hard coat layer was about 2 µm. An optical disk was manufactured thereafter by the same procedure as in Example 18.

Practically, acetone solutions of vinyl-base polymer A and vinyl-base polymer B were mixed in a weight ratio of 5:5. The polymers were completely dissolved, and the solution was applied on a PET film (Cosmo Shine A-4100, Toyobo Co.) as a base layer film at a speed of 3 m/minute using a coating machine equipped with a Comma coater head, Hirano Tecseed Co., Ltd. A film for the light transmittance layer was formed by allowing the coated film to continuously pass through a drying passageway at 50°C for 3 minutes and a drying passageway at 140°C for 3 minutes. The thickness of the film for the light transmittance film was 100 µm.

Characteristics of the film for the light transmission layer, laminated film and optical disk were evaluated as in Example 18. The results are shown in Table 6.

### (Example 22)

A film for the light transmission layer was prepared by the same procedure as in Example 13, except that the mixing ratio between vinyl-base polymer A and vinyl-base polymer B produced by the same methods as in Example 18 was changed. A laminated film was obtained thereafter by forming a hard coat layer on the film for the light transmission layer by the same procedure as in Example 18. The thickness of the hard coat layer was about 2 µm. An optical disk was manufactured thereafter by the same procedure as in Example 18.

Practically, acetone solutions of vinyl-base polymer A and vinyl-base polymer B were mixed in a weight ratio of 2:8. The polymers were completely dissolved, and the solution was applied on a PET film (Cosmo Shine A-4100, Toyobo Co.) as a base layer film at a speed of 3 m/minute using a coating machine equipped with a Comma coater head, Hirano Tecseed Co., Ltd. A film for the light transmittance layer was formed by allowing the coated film to continuously pass through a drying passageway at 50°C for 3 minutes and a drying passageway at 140°C for 3 minutes. The thickness of the film for the light transmittance film was 100 µm. Characteristics of the film for the light transmission layer, laminated film and optical disk were evaluated as in Example 18. The results are shown in Table 6.

### (Comparative Example 9)

A film for the light transmittance layer and an optical disk were manufactured in this example by the same methods as in Example 18, except that vinyl-base polymer having proton donating groups was produced by the following method, and a hard coat layer was not formed. Characteristics of the film for the light transmission layer and optical disk were evaluated as in Example 18.
The results are shown in Table 6.

### [Vinyl-base polymer A having proton donating groups]

In a 4 L stainless steel autoclave with a withstand pressure of 2.3 kg/cm²G, 1297 g of acetone as a polymerization solvent was charged, and 464 g (31 mol%) of tricyclo[5.2 .1.0^{2,6}]deca-8-yl methacrylate (TCDMA) and 600 g (69 mol%) of butyl acrylate (BA) were weighed. After dissolving 3.2 g of lauroyl peroxide as a polymerization initiator by adding it to the monomer mixture, the mixture was added into a flask. Dissolved oxygen was replaced by flowing nitrogen gas for 1 hour at room temperature (25°C), the temperature of the reaction mixture was raised to 60°C. The temperature was kept for 18 hours to obtain an acetone solution of vinyl-base polymer A having proton donating groups. The polymerization ratio was 99% or more.

### (Comparative Example 10)

An optical disk was manufactured in this example by the same method as in Example 18, except that a film for the light transmission layer prepared from one kind of vinyl-base polymer produced by the flowing method was used without mixing two kinds of vinyl-base polymers, and the thickness of the hard coat layer of the laminated film was about 0.5 µm. Characteristics of the film for the light transmission layer, laminated film and optical disk were evaluated as in Example 18. The results are shown in Table 6.

### <Production of vinyl-base polymer>

In a 4 L stainless steel autoclave with a withstand pressure of 2.3 kg/cm²G, 1297 g of acetone as a polymerization solvent was charged, and 610 g (65 mol%) of methyl methacrylate, 300 g (25 mol%) of butyl acrylate (BA) and 154 g (10 mol%) of cyclohexyl maleimide were weighed. After dissolving 3.2 g of lauroyl peroxide as a polymerization initiator by adding it to the monomer mixture, the mixture was added into a flask. Dissolved oxygen was replaced by flowing nitrogen gas for 1 hour at room temperature (25°C), and the temperature of the reaction mixture was raised to 60°C. The temperature was kept for 18 hours to obtain an acetone solution of the vinyl-base polymer. The polymerization ratio was 99% or more.

### <Preparation of film>

After applying the above solution on a glass plate, the applied solution was dried at 100°C for 10 minutes by heating followed by drying at 150°C for 15 minutes to obtain a film with a thickness of about 100 µm by removing the solvent. The film was used as an evaluation sample.

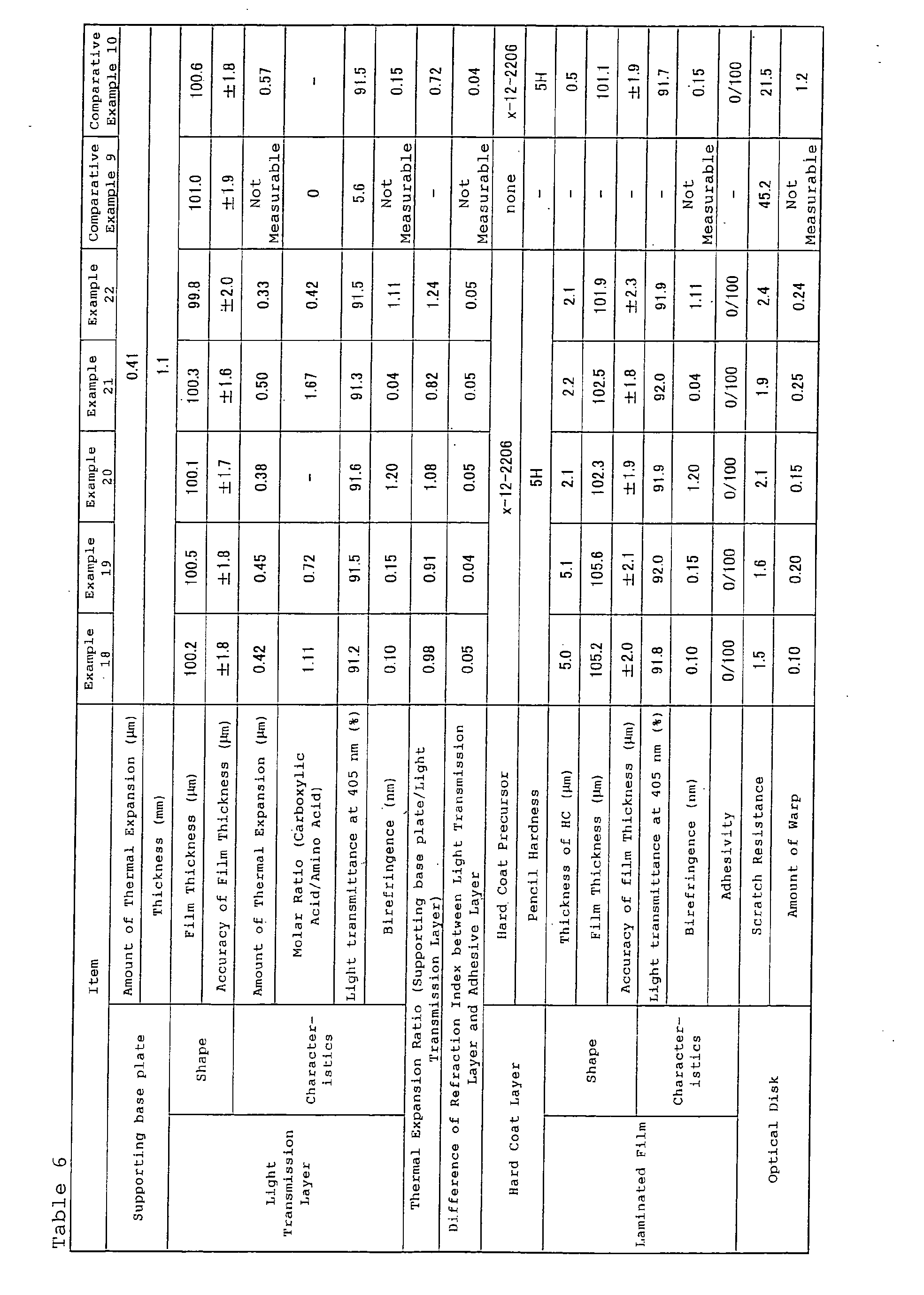

As shown in Table 6, the amount of thermal expansion of the acrylic polymer forming the light transmission layer of Comparative Example 9 could not be measured due to lack of film forming ability, while the amount of warp of the optical disk in Comparative Example 10 was high since the thermal expansion ratio of the supporting base plate to the light transmission layer was as low as 0.72. On the contrary, the amount of warp of the optical disk could be reduced in Examples 18 to 22 since the thermal expansion ratio was within the range of 0.75 to 1.25.

Although scratch resistance was low when no hard coat layer was laminated as in Comparative Example 9 or when the thickness of the hard coat layer was too thin as in Comparative Example 10, the scratch resistance was improved in Examples 18 to 22.

### (Example 23)

An evaluation film was prepared in this example by applying a mixed polymer, which was obtained by mixing following polymer A and polymer B and by adding a silicone resin to the mixture, on a base layer film followed by drying.

### <Production of polymer A>

In a 4 L stainless steel autoclave with a withstand pressure of 2.3 kg/cm²G, 1252 g of acetone as a polymerization solvent was charged, and 1035 g of butyl acrylate (BA, Wako Pure Chemical Industries, Ltd.) and 46 g of acrylic acid (AA, Wako Pure Chemical Industries, Ltd.) were weighed. Dissolved oxygen was replaced by flowing nitrogen gas for 1 hour at room temperature, and the temperature of the inside of the autoclave was raised to 60°C while pressurizing by hermetically sealing. 3.1 g of lauroyl peroxide (LPO, NOF Corp.) and 1.1 g of t-butyl peroxy-2-ethylhexanate (PBO, NOF Corp.) and 0.03 g of "- styrene dimer (AMSD, Goi Kasei) as polymerization initiators were dissolved in 40 g of acetone. Dissolved oxygen in the initiator solution was replaced by flowing nitrogen gas for 10 minutes, and the acetone solution of the initiators was added to the reaction mixture. After keeping the temperature of the reaction solution for about 14 hours, the temperature was raised to 90°C and was kept for about 6 hours to obtain a polymer solution. The polymerization ratio was 98% or more, and the weight average molecular weight was 250,000.

### <Production of polymer B>

In a 4 L stainless steel autoclave with a withstand pressure of 2.3 kg/cm²G, 1500 g of acetone as a polymerization solvent was charged, and 749 g of methyl methacrylate (MMA, Wako Pure Chemical Industries, Ltd.), 103 g of tricyclo[5.2.1.0^{2,6}]deca-8-yl methacrylate (TCDMA, Hitachi Chemical Co. Ltd.), 69 g of butyl acrylate (BA) and 79 g of 2,2,6,6-pentamethyl-4-piperidyl methacrylate (LA-87, Hitachi Chemical Co. Ltd.) were weighed. After flowing nitrogen gas for 1 hour at room temperature to replace dissolved oxygen, the temperature was raised to 65°C by hermetically sealing and pressurizing the inside of the autoclave. 3.0 g of azobisisobutylonitrile (AIBN, Wako Pure Chemical Industries, Ltd.) and 1.0 g of azobiscyclohexanone-1-carbonitrile (ACHN, Wako Pure Chemical Industries, Ltd.) as polymerization initiators were dissolved in 40 g of acetone. Dissolved oxygen was replaced from the initiator solution by flowing nitrogen gas for 10 minutes at room temperature, and the solution was added to the reaction solution. The temperature of the reaction solution was kept for about 18 hours, and the temperature was raised to 90°C and kept for about 6 hours to obtain a polymer solution. The polymerization ratio of the polymer was 98% or more, and the weight average molecular weight was 65,000.

### (Preparation of film)

Polymer A varnish and polymer B varnish obtained above were mixed in a solid fraction ratio of 4:6, and 0.05% of SH28PA (a dimethylpolysiloxane copolymer modified with side chains having a polyoxyethylene structure) (Toray Dow Coating) represented by the following formula was added as a peeling agent relative to the mixed resin: 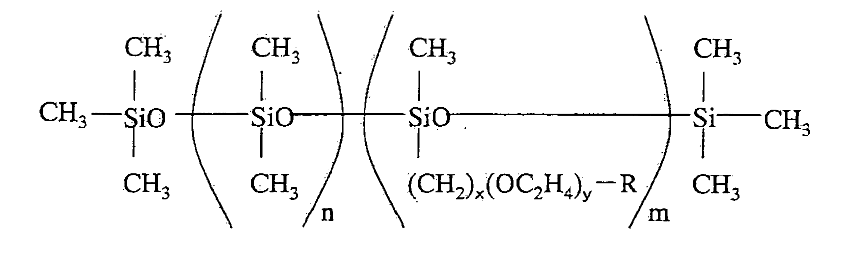 (in the formula, "n" is about 1,000, "m" is about 400, and R represents an alkyl group or hydrogen). The solution was applied on a PET original film (Cosmo Shine A-4150, Toyobo Co.) at a speed of 3 m/minute using a coating machine equipped with a Comma coater head, Hirano Tecseed Co., Ltd. The coating film was allowed to continuously pass through a drying passageway at 50°C for 3 minutes and a drying passageway at 140°C for 3 minutes to obtain an evaluation film. The thickness of the PET original film used was 125 µm, accuracy of the thickness was 1.5 µm, and surface smoothness of the coated surface was 5 nm.

### (Example 24)

A film was prepared by the same procedure as in Example 23 in this example, except that the amount of addition of SH28PA (manufactured by Torey-Dow Corning Co.) as a peeling agent was 0.20% relative to the resin.

### (Example 25)

In this example, the following hard coat precursor was laminated by coating on the light transmittance layer of the film prepared in Example 23, and a hard coat layer was formed by curing by heating to prepare an evaluation film.

### <Hard coat precursor>

1200g of butanol (manufactured by Wako Pure Chemical Industries, Ltd.) as a solvent was charged in a 4 L stainless steel autoclave with a withstand pressure of 2.3 kg/cm²G, and 32 g of tetraethoxy silane (Shin-Etsu Chemical Co. Ltd.), 187.6 g of methyltriethoxy silane (Shin-Etsu Chemical Co. Ltd.) and 180.4 g of dimethyldiethoxy silane (Shin-Etsu Chemical Co. Ltd.) were weighed. Distilled water (80 g) was added with stirring. Thereafter, 0.04 g of 10% aqueous potassium hydroxide solution was added, and the temperature of the solution was raised to 60°C with stirring. The temperature was kept for 2 hours to obtain a solution of hard coat precursor whose the solid fraction was 20%.

### <Preparation of hard coat layer>

The solution of the hard coat precursor was prepared by adding 3.3% by weight of 15% aqueous solution of tetramethylammonium hydroxide (manufactured by Wako Pure Chemical Industries, Ltd.) relative to the solid fraction of the had coat precursor. This solution was applied on the film prepared in Example 1 using a coating machine equipped with a Comma coater head, Hirano Tecseed Co., Ltd. A laminated film was formed by allowing the coated film to continuously pass through a drying passageway at 50°C for 3 minutes and a drying passageway at 150°C for 3 minutes. Since the thickness of the laminated film was 82.9 µm, the thickness of the hard coat layer is calculated as 3.0 µm by subtracting the thickness of the light transmission layer from the thickness of the laminated film.

Haze, light transmittance, birefringence, thickness of the film (µm), accuracy of the thickness, surface smoothness, pencil hardness of the hard coat layer and scratch resistance of the film were evaluated by the measuring methods described above, and glass transition temperature, hue, static frictional coefficient, bend processability and adhesivity were evaluated by the following measuring methods with respect to each evaluation film (films for the light transmission layer, base layer films and laminated films on which these films are laminated) prepared in Examples 23 to 25.

### [Glass transition temperature (Tg)]

The glass transition temperature was measured by DVA. The apparatus used was Rheospectoler DVE-V4, manufactured by UBM. A tensile elastic modulus was measured at a heating speed of 3.0°C/minutes and a frequency of 10.0 Hz, and the peak of tan δ of the data obtained was defined to be Tg.

### [Hue (yellowness index)(%)]

The hue (yellowness) of the film was defined by an yellowness index measured with a color-difference meter (COH-300A,manufactured by Nippon Denshoku).

### [Static frictional coefficient]

A film was laminated on a glass plate with a dimension of 20 cm × 20 cm. A PET film (Cosmo Shine A4150) was bonded on the bottom face of a column with a bottom face diameter of 3 cm, a height of 2 cm and a weight of 75 g. The bottom of the column on which the PET film was bonded was placed on the film laminated on the glass plate. An angle θ when the column starts to move by tilting the glass plate on which the film is laminated is measured, and the static frictional coefficient µ is calculated by µ = tan θ (θ: the angle when the column starts to move).

### [Bend processability]

Appearance of cracks and the extent of whitening generated by bending the film were visually observed. The film was evaluated as "good" when no cracks and whitening were observed, and as "poor" when observed.

### [Adhesivity]

A film coated on an original was cut into a size of 15 cm × 1 m. The cut film was placed so that the light transmission layer side of the film comes downward and was to be flat. The PET film was peeled at a peeling speed of 100 mm/second at room temperature (25°C). The shorter side of a rectangular film was defined to be an upper bottom, and the upper bottom was completely peeled from the left side to the right side of the upper bottom so that the amount of the peeled PET film is always larger at the shorter side than the longer side of the film. Then, the PET film was peeled so that the length of the peeled PET film was approximately the same at the right and left side of the longer side of the film. The PET film was peeled from the upper to the lower bottom side. The PET film was peeled so that the height of the peeled PET film was 30 cm or less. Adhesivity was evaluated by the number of the peeling residue on the PET film after peeling. Five films were used in each measurement, and the total number of the peeled films was converted into the number per 1 m².

The results of measurements by the measuring methods above are shown in Table 7.

**Table 7**

| Evaluation of Characteristics | | | Example 23 | Example 24 | Example 25 |
|---|---|---|---|---|---|
| Light Transmission Layer | Component | Tg of Polymer A (°C) | -12 | | |
| | | Tg of Polymer B (°C) | 116 | | |
| | | Blend Ratio | 4/6 | | |
| | | Amount of Peeling agent | 0.05 | 0.20 | 0.05 |
| | Characteristics | Σtan δ | 8.4 | 8.6 | 8.4 |
| | | Light transmittance at 405 nm (%) | 92 | 91 | 92 |
| | | Birefringence (nm) | -0.6 | -0.6 | -0.6 |
| | | Haze (%) | 0.4 | 0.5 | 0.4 |
| | | Hue (%) | 0.5 | 0.5 | 0.5 |
| | | Bend Processability | Good | Good | Good |
| | | Static Frictional Coefficient | 0.393 | 0.374 | 0.393 |
| | Shape | Thickness (µm) | 79.9 | 80.2 | 79.9 |
| | | Accuracy of Thickness (µm) | ±1.1 | ±1.0 | ±1.1 |
| Base Layer | Shape | Thickness (µm) | 125 | 125 | 125 |
| | | Accuracy of Thickness (µm) | ±1.5 | ±1.5 | ±1.5 |
| | | Surface Smoothness (nm) | 5 | 5 | 5 |
| Laminated Film | Peeling Characteristics | Adhesivity (No. /5 films) | 2 | 0 | 2 |
| | | Adhesivity (No./m²) | 2.70 | 0.00 | 2.70 |
| | Pencil Hardness of Hard Coat Layer | | - | - | 6H |
| | Thickness of Hard Coat Layer ("m) | | - | - | 3.0 |
| | Light transmittance at 405 nm (%) | | - | - | 92.9 |
| | Birefringence (nm) | | -0.6 | -0.6 | -0.7 |
| | Scratch Resistance | | - | - | 1.5 |

As shown in Table 7, each films in Examples 23 to 25 in which a given amount of a silicone resin was added was excellent in optical characteristics such as high light transmittance, low haze and low Birefringence, in addition to good peeling characteristic with a number of peeling residues of 3 or less per 1 m². Scratch resistance of the film can be improved by forming the hard coat layer on the light transmission layer as in Example 25.

### (Example 26)

A mixture of polymer A and polymer B in which the proportion of a polymer with a molecular weight of 10,000 or less to the total polymer is 4.2% by weight was used in this example.

### <Production of polymer A>

In a 4 L stainless steel autoclave with a withstand pressure of 2.3 kg/cm²G,1252g of acetone as a polymerization solvent was charged and 1035 g of butyl acrylate (BA, Wako Pure Chemical Industries, Ltd.) and 46 g of acrylic acid (AA, Wako Pure Chemical Industries, Ltd.) were weighed. Dissolved oxygen was replaced by flowing nitrogen gas for 1 hour at room temperature, and the temperature of the inside of the autoclave was raised to 60°C while pressurizing by hermetically sealing. 3.1 g of lauroyl peroxide (LPO, NOF Corp.) and 1.1 g of t-butylperoxy-2-ethylhexanate (PBO, NOF Corp.) and 0.03 g of "-methylstyrene dimer (AMSD, Goi Chemical Co.) as polymerization initiators were dissolved in 40 g of acetone. Dissolved oxygen in the initiator solution was replaced by flowing nitrogen gas for 10 minutes, and the acetone solution of the initiators was added to the reaction mixture. The temperature of the reaction mixture was kept for about 14 hours, followed by increasing the temperature at 90°C and keeping the temperature for about 6 hours to obtain a polymer solution. The polymerization ratio was 98% or more, and the weight average molecular weight was 250,000.

### <Production of polymer B>

In a 4 L stainless steel autoclave with a withstand pressure of 2.3 kg/cm²G, 1500 g of acetone as a polymerization solvent was charged, 749 g of methyl methacrylate (MMA, Wako Pure Chemical Industries, Ltd.), 103 g of tricyclo[5.2.1.0^{2,6}]deca-8-yl methacrylate (TCDMA, Hitachi Chemical Co. Ltd.), 69 g of butyl acrylate (BA) and 79 g of 2,2,6,6-pentamethyl-4-piperidyl methacrylate (LA-87, Hitachi Chemical Co., Ltd.) were weighed. After flowing nitrogen gas into the autoclave for about 1 hour to replace dissolved oxygen, the temperature of the solution was raised to 60°C by pressurizing the inside of the autoclave with hermetic sealing. 3.0 g of azobisisobutylonitrile (AIBN, Wako Pure Chemical Industries, Ltd.) and 1.0 g of azobiscyclohexanone-1-carbonitrile (ACHN, Wako Pure Chemical Industries, Ltd.) as polymerization initiators were dissolved in 40 g of acetone, and the solution was added to the reaction mixture above after replacing dissolved oxygen by flowing nitrogen gas into the initiator solution for about 10 minutes at room temperature. The temperature of the reaction mixture was kept for about 18 hours, followed by increasing the temperature at 90°C and keeping the temperature for about 6 hours to obtain a polymer solution. The polymerization ratio was 98% or more, and the weight average molecular weight was 75,000.

### <Preparation of film>

Polymer A varnish and polymer B varnish obtained were mixed in a solid fraction ratio of 4:6, and the solution was applied on a original PET film (Cosmo Shine A-4100, Toyobo Co.) at a coating speed of 3 m/minutes using a coating machine equipped with a Comma coater head, Hirano Tecseed Co., Ltd. The coated film was allowed to continuously pass through a drying passageway at 50°C for 3 minutes and a drying passage way at 140°C for 3 minutes to prepare an evaluation film.

### (Example 27)

An evaluation film was prepared in this example by the same procedure as in Example 26, except that the reaction temperature for synthesizing polymer B was changed from 60°C to 62°C. The polymerization ratio of polymer B was 98% or more, and the weight average molecular weight of the polymer B was 71,000.

### (Example 28)

The film was prepared by the same procedure as in Example 26 in this example, except that the reaction temperature of polymer A was changed from 60°C to 65°C. The polymerization ratio of polymer A was 98% or more, and the weight average molecular weight of the polymer A was 135,000.

The glass transition temperature, light transmittance, hue, bend processability, adhesivity, birefringence, thickness of the film, accuracy of thickness and surface smoothness were measured by the methods above, and a polystyrene-converted molecular weight was measured by the following method with respect to the evaluation films prepared in Example 26 to 28 (films for the light transmission layer, base layer films and laminated films on which these films are laminated).

### [Polystyrene-converted molecular weight]

The polystyrene-converted molecular weight was determined by gel permeation chromatography (GPC). The measuring conditions were as follows.

**Table 8**

| Column | Shodex OHpack SB-G + SB-806M, HQ × 2 |
|---|---|
| Elution Solvent | DMF + 0.06M LiBr + 0.04M H₃PO₄ |
| Temperature | Column Chamber 40°C |
| Flow Speed | 1.0 ml/minute |
| Flow Pressure | 46 kgf/cm² |
| Concentration | About 2 mg/ml (sample was dried at room temperature) |
| Pre-Treatment | Filtered with 0.2 µm filter |
| Detector | RI-8011 |

The amount of the polymer with a molecular weight of 10,000 or less was calculated from the area ratio in the molecular weight analysis chart. The instrument used was HLC-802A, manufactured by Tohso Corp.

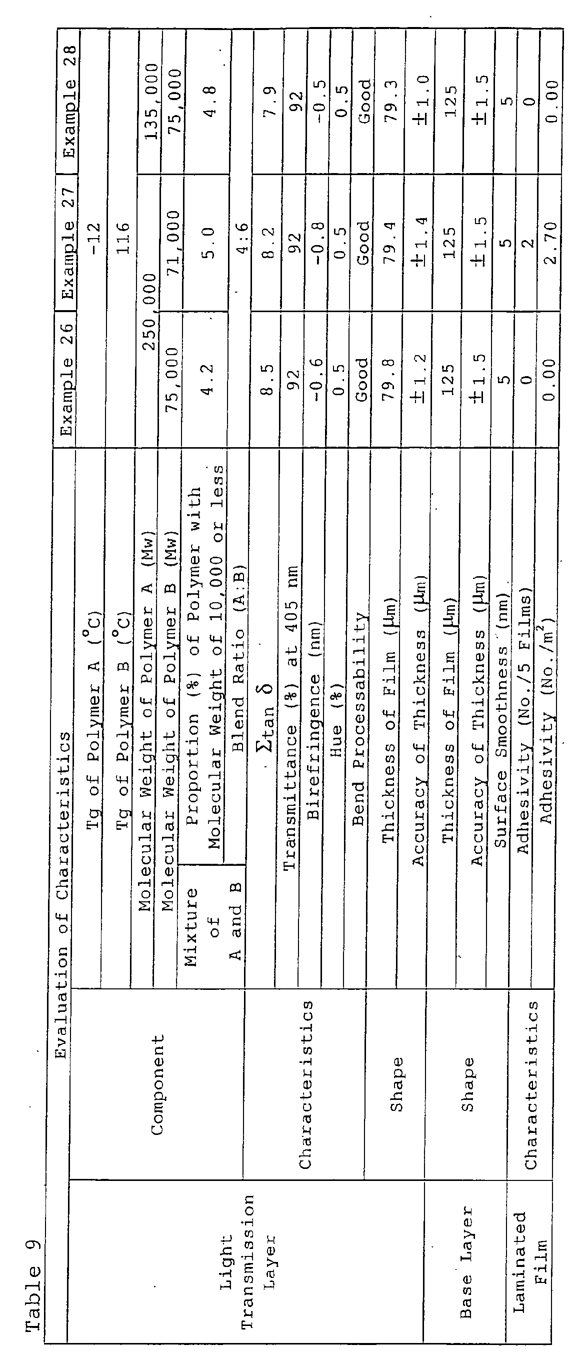

As shown in Fig. 9, the molecular weight of polymer B having a glass transition temperature of 25°C or more is 70,000 or more, and the proportion of the polymer with a molecular weight of 10,000 or less in a mixture of polymer A and polymer B accounts for 10% by weight or less in the films in Examples 26 to 28. Consequently, peeling characteristic was good with the number of peeling residues per 1 m² of 3 or less.

Laminated films further comprising hard coat layers with a surface hardness represented by a pencil hardness of 3H or more on the light transmittance layers were prepared in Examples 29 to 33, and the films were evaluated.

### (Example 29)

Following hard coat precursor A was applied on the film obtained by the same method as in Example 26 in this example, and a laminated film was prepared by curing the precursor by heating.

### <Hard coat precursor A>

In a stainless steel autoclave with a withstand pressure of 2.3 kg/cm²G, 1,200 g of butanol (manufactured by Wako Pure Chemical Industries, Inc.) was charged, and 32 g of tetraethoxy silane (manufactured by Shin-Etsu Chemical Co. Ltd.), 187.6 g of methyltriethoxy silane (manufactured by Shin-Etsu Chemical Co. Ltd.) and 180.4 g of dimethyldiethoxy silane (manufactured by Shin-Etsu Chemical Co. Ltd.) were weighed. Distilled water (80 g) was added to the mixture with stirring. Thereafter, 0.04 g of 10% aqueous potassium hydroxide solution was added to the mixture, followed by heating at 60°C with stirring. The temperature was kept for 2 hors to obtain hard coat precursor A. The content of the solid fraction was 20%.

### <Preparation of hard coat layer>

A solution of the hard coat precursor was prepared by adding 3.3% by weight of a 15% aqueous solution of tetramethylammonium hydroxide (manufactured.by Wako Pure Chemical Industries, Ltd.) relative to the solid fraction of hard coat precursor A obtained. This solution was applied on the film for the light transmission layer using a coating machine equipped with a Comma coater head, Hirano Tecseed Co., Ltd., and the coated film was allowed to continuously pass through a drying passageway at 50°C for 3 minutes and a drying passageway at 150°C for 3 minutes to form a laminated film. The thickness of the hard coat layer was calculated by subtracting the thickness of the light transmission layer from the thickness of the laminated film.

### (Example 30)

A laminated film was prepared by the same method as in Example 29, except that a commercially available hard coat precursor (X-12-2206, Shin-Etsu Chemical Co. Ltd.) was used in place of hard coat precursor A.

### (Example 31)

A laminated film was prepared by the same method as in Example 30, except that the film prepared in Example 2 was used as the light transmission layer, and the thickness of the hard coat layer was adjusted to 2 µm.

### (Example 32)

A laminated film was prepared by the same method as in Example 30, except that the film prepared in Example 3 was used as the light transmission layer.

Characteristics of the films (light transmission layer films, base layer films and laminated films) prepared in Examples 29 to 32 were evaluated as in Example 26, and characteristics of the hard coat layers were also evaluated as in Example 5. The evaluation method of the appearance is as follows. The results are shown in Table 10.

### [Appearance]

Appearance of the surface of the hard coat layer was evaluated by visual observation and under a microscope (magnification 200). The layer was evaluated as "good" when no cracks were observed by the naked eye and under the microscope, as "a little poor" when observed under the microscope but not by the naked eye, and as "poor" when cracks were evident by visual observation.

**Table 10**

| Item | | | | Example 29 | Example 30 | Example 31 | Example 32 |
|---|---|---|---|---|---|---|---|
| Hard Coat Layer | | Hard Coat Precursor | | Precursor A | X-12-2206 | | |
| | | Pencil Hardness | | 6H | 5H | | |
| Light Transmission Layer | Component | Tg of Polymer A (°C) | | -12 | | | |
| | | Tg of Polymer B (°C) | | 116 | | | |
| | | Molecular Weight (Mw) of Polymer A | | 250000 | | 250000 | 135000 |
| | | Molecular Weight (Mw) of Polymer B | | 75000 | | 71000 | 75000 |
| | | Mixture (A:B) | Proportion of Polymer (MW 10,000 or less) | 4.2 | | 5.0 | 4.8 |
| | | | Blend Ratio (A:B) | 4:6 | | 4:6 | 4:6 |
| | Characteristics | Σtan δ | | 8.5 | | 8.2 | 7.9 |
| | | Transmittance (%) at 405 nm | | 92 | | 92 | 92 |
| | | Hue (%) | | 0.5 | | 0.5 | 0.5 |
| | | Birefringence (nm) | | -0.6 | | -0.8 | -0.5 |
| | | Haze (%) | | 0.5 | | 0.5 | 0.5 |
| | | Bend Processability | | Good | | Good | Good |
| | Shape Shape | Thickness (µm) | | 79.8 | | 79.4 | 79.3 |
| | | Accuracy (µm) | | ± 1.2 | | ±1.4 | ±1.0 |
| Base Layer | Shape | Thickness (µm) | | 125 | | | |
| | | Accuracy (µm) | | ± 1.5 | | | |
| | | Surface Smooth. (nm) | | 5 | | | |
| Laminated Film | Shape | Thickness of HC (µm) | | 5.2 | 5.1 | 2.1 | 9 4.9 |
| | | Thickness (µm) | | 85.0 | 84.9 | 81.5 | 84.2 |
| | | Accuracy (µm) | | ±1.2 | ± 1.3 | ± 1.3 | ±1.2 |
| | | Surface Smooth. (nm) | | 8.0 | 9.0 | 7.9 | 8.1 |
| | | Appearance | | Good | Good | Good | Good |
| | Characteristics | Transparency (%) at 405 nm | | 92.5 | 92.6 | 92.5 | 92.2 |
| | | Hue (%) | | 0.5 | 0.5 | 0.5 | 0.5 |
| | | Birefringence (nm) | | -0.6 | | -0.8 | -0.5 |
| | | Bend Processability | | Good | Good | Good | Good |
| | | Adhesivity | | 0/100 | 0/100 | 0/100 | 0/100 |
| | | Releasability (5 films/No.) | | 0 | 0 | 2 | 0 |
| | | Releasability (m² /No.) | | 0.00 | 0.00 | 2.70 | 0.00 |
| | | Scratch Resistance | | 1.3 | 1.1 | 1.9 | 1.2 |

As shown in Table 10, the molecular weight of polymer B having a glass transition temperature of 25°C or more is 70,000 or more, and the proportion of the polymer having a molecular weight of 10,000 or less in a mixture of polymer A and polymer B is 10% by weight or less in the films in Examples 29 to 32. Consequently, peeling characteristic is excellent with a number of peeling residues of 3 or less per 1 m². Scratch resistance was also good with a pencil hardness of 3H or more.

The film for optical parts excellent in light transmittance and film strength as well as surface smoothness and peeling characteristic can be obtained by using a thermoplastic resin or vinyl-base polymer in which the proportion of the low molecular weight polymer with a molecular weight of 10,000 or less accounts for 10% by weight of the total amount of polymer, particularly by using a polymer comprising at least two kinds of vinyl-base polymers.

PET base films, which is not subjected to peeling processing, and which has a thickness of 125 µm, an accuracy of thickness of ±0.8 µm, and surface smoothness of 5 nm, 10 nm and 5 nm, respectively, were used as base films for the laminated films of the light transmission layer in Examples 33, 34 and 36. In Example 35, a PET film, which is subjected to peeling processing, and which has a thickness of 50 µm, an accuracy of thickness of ±0.7 µm, and surface smoothness of 18 nm was used as a base film for the laminated film of the light transmission layer.

### (Example 33)

A mixed polymer of following polymer A and polymer B was used as the light transmission layer in this example.

### <Production of polymer A>

In a stainless steel autoclave with a withstand pressure of 2.3 kg/cm²G, 1,279 g of acetone was charged, and 994 g of butyl acrylate (BA, Wako Pure Chemical Industries, Ltd.), 86 g of acrylic acid (AA, Wako Pure Chemical Industries, Ltd.) and 160 g of isopropyl alcohol (IPA, Tokuyama Co.) were weighed. After replacing dissolved oxygen by flowing nitrogen gas for 1 hour at room temperature, 0.72.g of lauroyl peroxide (LPO, NOF Corp.) and 0.24 g of t-butylperoxy-2-ethylhexanate (PBO, NOF Corp.) as polymerization initiators, and 0.054 g of "- methylstyrene dimer as a molecular weight control agent were dissolved in 40 g of acetate. The mixed solution was added to the reaction mixture after replacing dissolved oxygen by flowing nitrogen gas for about 10 minutes at room temperature. The temperature was raised to 6.0°C by hermetically sealing the autoclave to pressurize the inside of the autoclave, and the temperature was kept for about 20 hours. The temperature was raised to 90°C, and the temperature was kept for about 10 hours to obtain a polymer solution. The polymerization ratio in the polymer solution obtained was 97% or more.

### <Production of polymer B>

In a stainless steel autoclave with a withstand pressure of 2.3 kg/cm²G, 1,279 g of acetone was charged, and 810 g of methyl methacrylate (MMA, Asahi Kasei Corp.), 205 g of tricyclo[5.2.1.0^{2,6}]deca-8-yl methacrylate (TCDMA, Hitachi Chemical Co. Ltd.), 32 g of butyl acrylate (BA) and 32 g of 2,2,6,6-tetramethyl-4-piperidyl methacrylate (FA712HM, Hitachi Chemical Co. Ltd.) were weighed. After replacing dissolved oxygen by flowing nitrogen gas for 1 hour at room temperature, 2.88 g of azobisisobutylonitrile (AIBN, Wako Pure Chemical Industries, Ltd.) and 0.96 g of azobiscyclohexanone-1-carbonitrile (ACHN, Wako Pure Chemical Industries, Ltd.) were dissolved in 40 g of acetone. The mixed solution was added to the reaction mixture after replacing dissolved oxygen by flowing nitrogen gas for about 10 minutes at room temperature. The temperature was raised to 60°C by hermetically sealing the autoclave to pressurize the inside of the autoclave, and the temperature was kept for about 20 hours. The temperature was raised to 90°C, and the temperature was kept for about 10 hours to obtain a polymer solution. The polymerization ratio in the polymer solution obtained was 97% or more.

### (Preparation of film)

Polymer A varnish and polymer B varnish were mixed in a solid fraction ratio of 3:7, and the mixed solution was applied on a base film (PET, Cosmo Shine A-4150, Toyobo Co.) at a coating speed of 3 m/minute using a coating machine equipped with a Comma coater head, Hirano Techseed Co. The coating film was allowed to continuously pass through a drying passageway at 50°C for 3 minutes and a drying at 140°C for 3 minutes to form a light transmission layer as an evaluation film.

### (Example 34)

A laminated film was prepared by the same procedure as in Example 33 in this example, except that Cosmo Shine A-4100 (manufactured by Toyobo Co.) as a PET film was used for the base film.

### (Example 35)

A laminated film was prepared by the same procedure as in Example 33 in this example, except that a surface processed Viewlex A71 (manufactured by Teijin Dupont Films) as a PET film was used for the base film.

### (Example 36)

In this example, a hard coat layer was formed by laminating the following hard coat precursor on the light transmission layer of the laminated film prepared in Example 33, and by curing the precursor by heating. The film obtained was used as a laminated evaluation film.

### (Hard coat precursor)

In a stainless steel autoclave with a withstand pressure of 2.3 kg/cm²G, 1,200 g of butanol (manufactured by Wako Pure Chemical Industries, Inc.) was charged, and 32 g of tetraethoxy silane (manufactured by Shin-Etsu Chemical Co. Ltd.), 187.6 g of methyltriethoxy silane (manufactured by Shin-Etsu Chemical Co. Ltd.) and 180.4 g of dimethyldiethoxy silane (manufactured by Shin-Etsu Chemical Co. Ltd.) were weighed. Distilled water (80 g) was added to the mixture with stirring. Thereafter, 0.04 g of 10% aqueous potassium hydroxide solution was added to the mixture, followed by heating at 60°C with stirring. The temperature was kept for 2 hors to obtain a hard coat precursor. The content of the solid fraction was 20%.

### (Preparation of hard coat layer)

A solution of the hard coat precursor was prepared by adding 3.3% by weight of a 15% aqueous solution of tetramethylammonium hydroxide (manufactured by Wako Pure Chemical Industries, Ltd.) relative to the solid fraction of the hard coat precursor obtained. This solution was applied on the film for the light transmission layer using a coating machine equipped with a Comma coater head, Hirano Tecseed Co., Ltd., and the coated film was allowed to continuously pass through a drying passageway at 50°C for 3 minutes and a drying passageway at 150°C for 3 minutes to form a laminated film. The thickness of the laminated film was 82 µm. Since the thickness of the laminated film was 82 µm, the hard coat layer is calculated as 2.4 µm by subtracting the thickness of the light transmission layer.

The glass transition temperature (Tg), light transmittance at 405 nm, hue (yellowness index), thickness of the film (µm), accuracy of the film thickness (µm), surface smoothness (nm), bend processablity, peeling characteristic (adhesivity), pencil hardness of the hard coat layer and scratch resistance of the laminated film were evaluated with respect to the light transmission layers and laminated films prepared in Examples 33 to 36 by the same measuring methods as described previously, Phase separation and warp were also evaluated by the following method. The results are shown in Table 11.

### [Observation of phase separation]

Phase separation caused by mixing polymer A and polymer B was evaluated by visual observation of transparency. When the mixed polymer was transparent, it was evaluated as "good" with no observed phase separation. When slight turbidity was observed, it was evaluated as "a little poor" with observation of slight turbidity, while the mixed polymer was evaluated as "poor" when apparent turbidity was observed.

### [Observation of warp]

Warp of the film was observed when the film was allowed to leave at a temperature of 80°C and a humidity of 85% RH in a constant temperature-humidity chamber for 100 hours. The film with no observed warp was evaluated as "good", while the film with observed warp was evaluated as "poor".

**Table 11**

| Evaluation of Characteristics | | | Example 33 | Example 34 | Example 35 | Example 36 |
|---|---|---|---|---|---|---|
| Light Transmission Layer | Component | Tg of Polymer A | -12 | | | |
| | | Tg of Polymer B | 115 | | | |
| | | Blend Ratio | 3:7 | | | |
| | Characteristics | Σtan δ | 2.5 | 2.5 | 2.5 | 2.5 |
| | | Light transmittance at 405 nm (%) | 92 | 92 | 92 | 92 |
| | | Hue (%) | 0.5 | 0.5 | 0.6 | 0.5 |
| | | Bend Processability | Good | Good | Good | Good |
| | | Warp | Good | Good | Good | Good |
| | Shape | Film Thickness (µm) | 79.6 | 79.8 | 79.7 | 79.6 |
| | | Accuracy of Thickness (µm) | ±1.5 | ±1.5 | ±1.8 | ±1.5 |
| | | Surface Smoothness (nm) | 13 | 18 | 30 | 13 |
| Base Layer | Shape | Film Thickness (µm) | 125 | 125 | 50 | 125 |
| | | Accuracy of Thickness (nm) | ±0.8 | ±0.8 | ±0.7 | ±0.8 |
| | | Surface Smoothness (nm) | 5 | 10 | 18 | 5 |
| | Peeling processing | | No | No | Yes | No |
| Laminated Film | Peeling Characteristics | Adhesivity (No./5 Films) | 2 | 2 | 0 | 2 |
| | | Adhesivity (No. /m²) | 2.66 | 2.66 | 0.00 | 2.66 |
| | Pencil Hardness of Hard Coat Layer | | - | - | - | 6H |
| | Thickness of Hard Coat Layer (µm) | | - | - | - | 2.4 |
| | Light transmittance at 405 nm (%) | | - | - | - | 92.8 |
| | Birefringence (nm) | | - | - | - | 0.12 |
| | Scratch Resistance | | - | - | - | 1.5 |

Peeling residues due to adhesion were seldom observed in Example 33, 34 and 35 as shown in Table 11 with good peeling characteristic, since surface roughness was reduced 10 nm or less without applying peeling processing on the base layer in Examples 33 and 34, and surface roughness was reduced to 20 nm or less by applying release treatment on the base layer in Examples 35. Scratch resistance of the laminated film was improved by forming the hard coat layer on the light transmission layer as in Example 36.

Accordingly, adhesion between the base layer and light transmission layer could be prevented by controlling surface smoothness of the base layer. The film for optical parts could be endowed with high light transmittance and film strength as well as good surface smoothness and peeling characteristic.

Examples 37 to 40 below relate to films for optical parts having a dual layer laminated layer structure comprising a light transmission layer and adhesive layer. Example 41 relates to a triple laminated layer structure further comprising a hard coat layer on the light transmission layer of the laminated film in Example 37.

### (Example 37)

A film for the light transmission layer was prepared as described below by using a mixed solution of polymer A and polymer B in Example 33 in a ratio of 1:9. A dual layer laminated film was prepared by laminating the film for the light transmission layer above and the film for the adhesive layer. This dual layer film was laminated on the support base after that, and it considered as the sample.

### <Preparation of dual layer laminated film>

A mixed solution of polymer A and polymer B was applied on a base film using a coating machine equipped with a Comma coater head, Hirano Tecseed Co., Ltd., and a film for the light transmission layer was prepared after drying. The adhesive layer of a double-tack tape #5511 (manufactured by Sekisui Chemical Co., Ltd) was laminated on the film for the light transmission layer while the base film is peeled, and a laminated film was prepared. The laminated film formed has a three-layer structure of the light transmission layer/adhesive layer/the base layer at the adhesive layer, and the base layer at the adhesive layer is peeled upon use.

The thickness of the dual layer laminated film comprising the light transmission layer and adhesive layer of the laminated film prepared above was 110 µm, and transmittance of the light transmission layer at 405 nm was 88.4%. Transmittance of the light transmission layer alone at 405 nm was 92.3%.

### <Preparation of polycarbonate supporting base>

A supporting base comprising a disk-shape polycarbonate plate with an outer diameter of 86 mm, an inner diameter of 15 mm and a thickness of 1.2 mm was formed under a molding condition of a cylinder temperature of 300°C and mold temperature of 100°C using an injection molding machine IS-55EPN (manufactured by Toshiba Machine Co.). Then, a dual layer laminated film comprising the light transmission layer and adhesive layer was bonded on the disk-shape polycarbonate base plate while the base film layer of the laminated film having a triple layer structure prepared as described above was being peeled.

### (Example 38)

The laminated film of this example was prepared by changing the thickness of the dual layer laminated film, and a sample was basically prepared by the same procedure as in Example 37. The thickness of the dual layer laminated film was 50 µm, and transmittance of the film at 405 nm was 89.1%. Transmittance of the film for the light transmission layer alone was 93.2% at 405 nm.

### (Example 39)

The laminated film of this example was prepared by changing the thickness of the dual layer laminated film, and a sample was basically prepared by the same procedure as in Example 37. The thickness of the dual layer laminated film was 150 µm, and transmittance of the film at 405 nm was 88.1%. Transmittance of the film for the light transmission layer alone was 91.3% at 405 nm.

### (Example 40)

The laminated film of this example was prepared by changing the thickness of the dual layer laminated film, and was basically prepared by the same procedure as in Example 37. The thickness of the dual layer laminated film was 200 µm, and transmittance of the film at 405 nm was 87.9%. Transmittance of the film for the light transmission layer alone was 90.8% alone at 405 nm.

### (Example 41)

A laminated film with a four layer structure comprising a hard coat layer/light transmission layer/adhesive layer/base film layer at the adhesive layer side was prepared by laminating a hard coat layer precursor below on the light transmittance layer of the laminated film prepared in Example 37, and by forming a hard coat layer by curing by heating. The triple layer laminated film comprising the hard coat layer, light transmission layer and adhesive layer was bonded on the supporting base plate thereafter while the base film layer of the four layer laminated film was being peeled.

### (Hard coat precursor)

In a stainless steel autoclave with a withstand pressure of 2.3 kg/cm²G, 1,200 g of butanol (manufactured by Wako Pure Chemical Industries, Inc.) was charged, and 32 g of tetraethoxy silane (manufactured by Shin-Etsu Chemical Co. Ltd.), 187.6 g of methyltriethoxy silane (manufactured by Shin-Etsu Chemical Co. Ltd.) and 180.4 g of dimethyldiethoxy silane (manufactured by Shin-Etsu Chemical Co. Ltd.) were weighed. Distilled water (80 g) was added to the mixture with stirring. Thereafter, 0.04 g of 10% aqueous potassium hydroxide solution was added to the mixture, followed by heating at 60°C with stirring. The temperature was kept for 2 hors to obtain a hard coat precursor. The content of the solid fraction was 20%.

### (Preparation of hard coat layer)

A solution of the hard coat precursor was prepared by adding 3.3% by weight of a 15% aqueous solution of tetramethylammoonium hydroxide relative to the solid fraction of the hard coat precursor obtained. This solution was applied on the light transmission layer at the opposite side of the adhesive layer of the laminated film prepared in Example 1 using a coating machine equipped with a Comma coater head, Hirano Tecseed Co., Ltd. The coated film was allowed to continuously pass through a drying passageway at 50°C for 3 minutes and at 150°C for 3 minutes to form a laminated film. Since the thickness of the laminated film was 98 µm, the thickness of the hard coat layer was calculated as 3.0 µm by subtracting the thickness of the light transmission layer.

A glass transition temperature (Tg), light transmittance at 405 nm, thickness of the film (µm), accuracy of the thickness (µm), surface smoothness (nm), pencil hardness of the hard coat layer and scratch resistance of the laminated film were evaluated by the same method as described above with respect to the film for the light transmission layer, dual layer laminated film and triple layer laminated film. A difference of refractive index between the light transmission layer and adhesive layer, and work efficiency for preparing a sample were evaluated using the measuring methods described below. The results are shown in Table 12.

### [Difference of refractive index between light transmission layer and adhesive layer]

Refractive indices of the light transmission layer and adhesive layer were independently measured using an Abbe's refractometer, manufactured by Atago Co.

### [Work efficiency for preparing sample]

A sample of a supporting base plate was manufactured by bonding the film for the light transmission layer and adhesive layer on a disk-shape polycarbonate base plate. Work efficiency for manufacturing the sample base plate was evaluated to be good, when the process comprises only a step for bonding a dual layer laminated film comprising the light transmission layer and adhesive layer on the polycarbonate base plate. Work efficiency was evaluated to be poor, when a step for bonding the film for the light transmission layer was required after the step for forming the adhesive layer on the disk-shape polycarbonate supporting base plate.

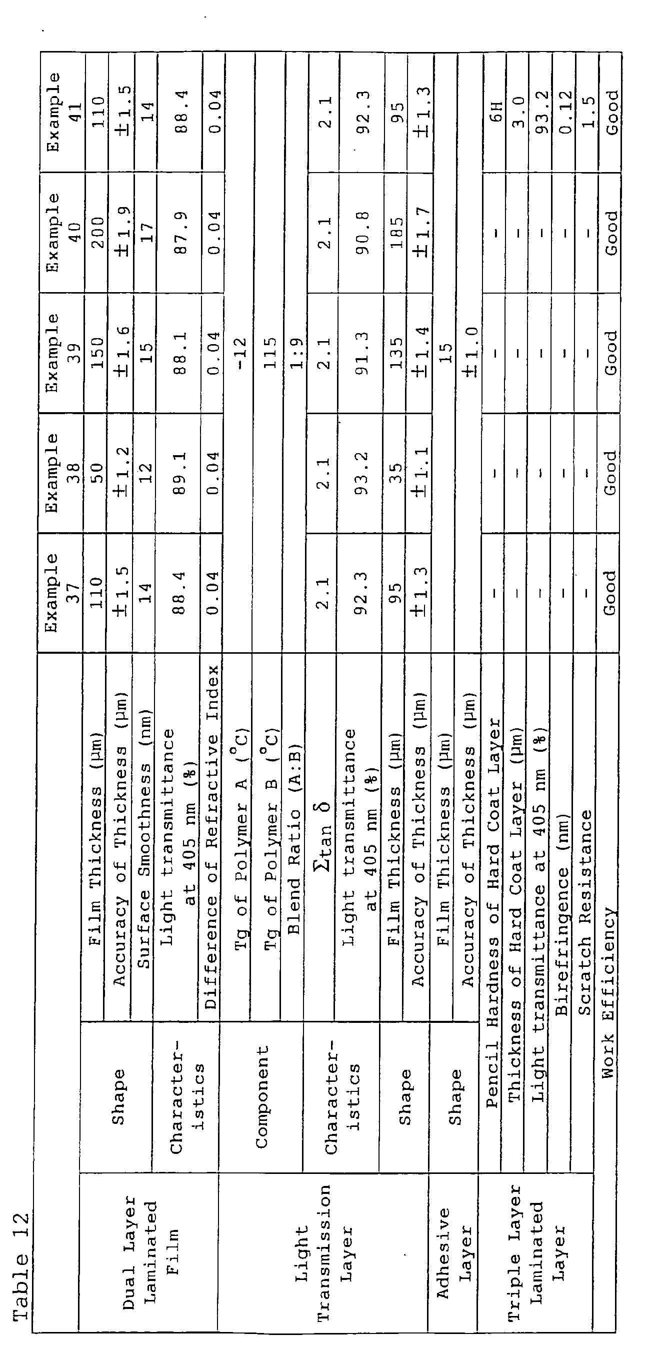

As shown in Table 12, the thickness of each of the dual layer laminated film in Examples 37 to 40 is in the range of 30 to 300 µm, and accuracy of the thickness and light transmittance of the film were within the range of the present invention while work efficiency for preparing the laminated film was good. Scratch resistance of the triple layer laminated film of Example 40 having the hard coat layer was also excellent.

The optical disks of the examples as hitherto described are able to record and reproduce signal information with high accuracy by manufacturing a high recording density DVD using the film for optical parts of the present invention, since transmittance of the film is high even by irradiating a short wavelength laser light and birefringence of the film is low. Handling and processing of the film for optical parts are easy since the film is highly flexible and trough, and allowable margin of the production process and design are expandable. In addition, errors of recording and reproducion of signal information may be reduced since incidence of warp may be reduced during a long term use of the high recording density DVD. Consequently, The present invention can realize the largely increase in recording capacity required of the optical disk in accordance with developments of static image information and dynamic image information.

Decrease of recording density due to deterioration of signal accuracy can be suppressed, since the disk is excellent in scratch resistance of the surface that renders the disk to be hardly damaged when the high recording density DVD is manufactured using a film on the surface of which a hard coat layer having an appropriate hardness and thickness is formed.

The film for optical parts of the present invention is able to form into a coiled film laminate as a roll of the film while maintaining surface smoothness, since the film is excellent in bend processability. In addition, the efficiency of workability may be improved since the peeling characteristic of the base layer film at the time of use is excellent.

While a large recording capacity DVD has been exemplified as a specific use of the film for optical parts of the present invention in the embodiments hitherto described, the application is not restricted to the optical parts. The film may be also applied for a base film for a liquid crystal touch panel, a base film for a flexible display, a phase difference film for a liquid crystal panel, and an electronic paper sheet.

Those skilled in the art would recognize that the foregoing descriptions involve the preferable embodiment of the invention, and various changes and modifications are possible without departing from the scope and spirit of this invention.

## Claims

1. A film for optical parts comprising a light transmission layer mainly composed of a thermoplastic resin, wherein an integrated value of the ratio of loss modulus to storage modulus in a temperature range of 30°C to 80°C as determined by a dynamic viscoelasticity measurement under a tensile stress mode at a frequency of 10 Hz with a heating rate of 3°C/min is 2 or more.

2. A film for optical parts comprising a light transmission layer mainly composed of a vinyl-base polymer, wherein an integrated value of the ratio of loss modulus to storage modulus in a temperature range of 30°C to 80°C as determined by a dynamic viscoelasticity measurement under a tensile stress mode at a frequency of 10 Hz with a heating rate of 3°C/min is 2 or more.

3. The film for optical parts according to Claim 2,
wherein the vinyl-base polymer comprises vinyl-base polymer A containing at least one kind of proton donating atomic groups in the molecule and vinyl-base polymer B containing at least one kind of proton accepting atomic groups in the molecule, and
wherein pseudo cross-links are formed between the proton donating atomic groups and proton accepting groups by intermolecular hydrogen bonds.

4. The film for optical parts according to Claim 3, wherein vinyl-base polymer A is a polymer obtained by polymerizing a mixture of monomers containing a vinyl monomer having at least one functional group selected from a carboxyl group, hydroxyl group and phenolic hydroxyl group in the molecule, and vinyl-base polymer B is a polymer obtained by polymerizing a mixture of monomers containing a vinyl monomer having nitrogen atoms in the molecule, and
wherein either vinyl-base polymer A or vinyl-base polymer B has a glass transition temperature of 25°C or more, and the other has a glass transition temperature of less than 25°C.

5. The film for optical parts according to Claim 1 or 2, wherein the thermoplastic resin or vinyl-base polymer is an acrylic resin.

6. The film for optical parts according to Claim 1 or 2, wherein the thermoplastic resin or vinyl-base polymer contains at least one compound selected from phenolic antioxidants, phosphite antioxidants, thioether antioxidants and light stabilizers.

7. The film for optical parts according to Claim 1 or 2, wherein a light transmittances at a wavelength of 405 nm is 87% or more.

8. The film for optical parts according to Claim 1 or 2, wherein a thickness of the light transmission layer is in the range of 15 to 250 µm and an accuracy of the thickness is within ± 2.0 µm.

9. The film for optical parts according to Claim 1 or 2, wherein a birefringence of the light transmission layer is 20 nm or less.

10. The film for optical parts according to Claim 1 or 2, wherein a hard coat layer with a pencil hardness of 3H or more is formed on the light transmission layer.

11. The film for optical parts according to Claim 10, wherein the thickness of the hard coat layer is in the range of 0.5 to 8 µm and an accuracy of the thickness is within ± 1.0µm.

12. The film for optical parts according to Claim 10, wherein the hard coat layer is a cross-linked structure.

13. The film for optical parts according to Claim 12, wherein the cross-linked structure is a silicon-base cross-linked structure or an acrylic cross-linked structure.

14. The film for optical parts according to Claim 10, wherein the hard coat layer contains 0.2 to 10.0% by weight of a silicone thermoplastic resin.

15. The film for optical parts according to Claim 1 or 2, further comprising a base layer laminated on the light transmission layer and removed by peeling at the time of use.

16. The film for optical parts according to Claim 15, wherein a peeling processing is carried out on a surface of the base layer which contacts the light transmission layer, and smoothness of the surface is 20 nm or less.

17. The film for optical parts according to Claim 15, wherein the light transmission layer contains the silicone resin.

18. The film for optical parts according to Claim 15, wherein the thermoplastic resin or vinyl resin of the light transmission layer contains 10% by weight or less of low molecular weight polymers with a molecular weight of 10,000 or less as converted into the molecular weight of standard polystyrene measured by gel permeation chromatography relative to the total amount of the polymer.

19. The optical film according to Claim 15, wherein the thermoplastic resin or vinyl resin of the light transmission layer is a vinyl-base polymer comprising at least a mixture of vinyl-base polymer A and vinyl-base polymer B having contradictory characteristics as well as different glass transition temperatures to one another, and wherein either vinyl-base polymer A or vinyl-base polymer B having a glass transition temperature of 25°C or more has an average molecular weight of 70,000 or more as converted into the molecular weight of standard polyethylene.

20. The film for optical parts according to Claim 15, wherein the base layer essentially consists of a polyester resin.

21. The film for optical parts according to Claim 15, wherein the number of peeling residues after peeling the light transmission layer from the base layer under the conditions of a peeling speed of 100 mm/second at 25°C is 3 places or less per 1 m².

22. The film for optical parts according to Claim 15, wherein the static frictional coefficient of the light transmission layer against PET at 25°C is 0.42 or less.

23. The film for optical parts according to Claim 1 or 2, wherein an adhesive layer is formed on the light transmission layer.

24. The film for optical parts according to Claim 23, wherein a thickness of two layers of the light transmission layer and the adhesive layer is in the range of 30 to 300 µm and a accuracy of the thickness is within ±2.0 µm.

25. The film for optical parts according to Claim 1 or 2, wherein the light transmission layer is used for the light transmission layer of an optical disk.

26. A coiled film laminate, formed by winding the film for optical parts according to any one of Claims 1 to 25 into a roll shape.

27. An optical part, prepared by applying the film for optical parts according to any one of Claims 1 to 25 as the light transmission layer.

28. The optical part according to Claim 27, wherein the light transmission layer is bonded with interposition of the adhesive layer, and
wherein the difference of refractive index between the light transmission layer and adhesive layer is 0.1 or less.

29. The optical part according to Claim 27, wherein the optical part is an optical disk.

30. The optical part according to Claim 29, wherein the optical disk is a high density DVD and a recording capacity of the DVD is 20 GB or more.

31. An optical disk formed by sequentially laminating a recording layer, an adhesive layer and a light transmission layer on at least one surface of a supporting base plate, wherein a thermal expansion ratio as a ratio of the amount of unidirectional thermal expansion of the supporting base plate at 30°C to 80°C to the amount of unidirectional thermal expansion of the light transmission layer at 30°C to 80°C is in the range of 0.75 to 1.25, and
wherein the light transmission layer mainly comprises a thermoplastic resin.

32. The optical disk according to Claim 31, wherein a birefringence of the light transmission layer is 20 nm or less and a thickness of the light transmission is in the range of 15 µm to 250 µm.

33. The optical disk according to Claim 31, wherein a light transmittances of the light transmission layer at a wavelength of 405 nm is 87% or more.

34. The optical disk according to Claim 31, wherein the thermoplastic resin is a vinyl-base polymer.

35. The optical disk according to Claim 34,
wherein the vinyl-base polymer comprises vinyl-base polymer A containing at least one kind of proton donating atomic groups in the molecule and vinyl-base polymer B containing at least one kind of proton accepting atomic groups in the molecule, and
wherein pseudo cross-links are formed between the proton donating atomic groups and proton accepting atomic groups by intermolecular hydrogen bonds.

36. The optical disk according to Claim 35,
wherein vinyl-base polymer A is a polymer obtained by polymerization of a mixture of monomers containing a vinyl monomer having at least one functional group selected from carboxyl groups, hydroxyl groups and phenolic hydroxyl groups in the molecule, and vinyl-base polymer B is a polymer obtained by polymerization of a mixture of monomers containing a vinyl monomer having nitrogen atoms in the molecule, and
wherein either vinyl-base polymer A or vinyl-base polymer B has a glass transition temperature of 25°C or more, and the other has a glass transition temperature of less than 25°C.

37. The optical disk according to Claim 34, wherein the vinyl-base polymer is an acrylic resin.

38. The optical disk according to Claim 31, wherein the thermoplastic resin contains at least one compound selected from phenolic antioxidants, phosphite antioxidants, thioether antioxidants and light stabilizers.

39. The optical disk according to Claim 31, wherein the difference of refractive index between the light transmission layer and the adhesive layer is 0.1 or less.

40. The optical disk according to Claim 31, wherein the supporting base plate mainly comprises polycarbonate.

41. The optical disk according to Claim 31, wherein a thickness of the supporting base plate is in the range of 0.4 mm to 1.2 mm.

42. The optical disk according to Claim 31, wherein a hard coat layer with a pencil hardness of 3H or more is further formed on the light transmission layer.

43. The optical disk according to Claim 31, wherein the optical disk is a high density DVD with a recording capacity of 20 GB or more.
